(19) Europäisches Patentamt
European Patent Office
Office européen des brevets

(11) EP 4 733 046 A2

(12) **EUROPÄISCHE PATENTANMELDUNG**

(43) Veröffentlichungstag:
**29.04.2026 Patentblatt 2026/18**

(21) Anmeldenummer: **26151543.1**

(22) Anmeldetag: **27.02.2024**

(51) Internationale Patentklassifikation (IPC):
***B29D 11/00*** *(2006.01)*

(52) Gemeinsame Patentklassifikation (CPC):
**B29C 64/106; B29C 64/135; B29C 64/268; B29C 64/282; B29D 11/00009; B29D 11/00432; B33Y 10/00; B33Y 30/00; B33Y 80/00**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **28.02.2023 DE 102023104907**

(62) Dokumentnummer(n) der früheren Anmeldung(en) nach Art. 76 EPÜ:
**24708183.9 / 4 476 052**

(71) Anmelder: **xolo GmbH**
**12489 Berlin (DE)**

(72) Erfinder:
- **RADZINSKI, Dirk**
**12489 Berlin (DE)**
- **GARMSHAUSEN, Yves**
**12489 Berlin (DE)**
- **HERDER, Martin**
**12489 Berlin (DE)**
- **KÖNIG, Niklas**
**12489 Berlin (DE)**
- **REUTER, Marcus**
**12489 Berlin (DE)**

(74) Vertreter: **Hafner & Kohl PartmbB**
**Schleiermacherstraße 25**
**90491 Nürnberg (DE)**

Bemerkungen:
Diese Anmeldung ist am 13-01-2026 als Teilanmeldung zu der unter INID-Code 62 erwähnten Anmeldung eingereicht worden.

(54) **VERFAHREN ZUM HERSTELLEN EINES OPTISCHEN ELEMENTS MITTELS BEARBEITENS EINES OPTISCH REAKTIVEN MATERIALS UND OPTISCHES ELEMENT**

(57) Verfahren zum Herstellen eines optischen Elements mittels Bearbeitens eines optisch reaktiven Materials

EP 4 733 046 A2

## Beschreibung

Die Erfindung betrifft ein Verfahren zum Herstellen eines optischen Elements mittels Bearbeitens eines optisch reaktiven Materials sowie ein mittels des Verfahrens hergestelltes optisches Element, eine entsprechende Vorrichtung und ein verfahrensgemäß hergestelltes optisches Element.

## Hintergrund

Subtraktive Verfahren zur Herstellung optischer Elemente, beispielsweise das Fräsen, Schleifen, und Polieren von Werkstoffen, sind zeit- und kostenaufwendig. Andere formgebende Verfahren, wie das Präzisionsblankpressen von Glas oder Spritzguss von Polymermaterialien gehen mit erhöhten Fertigungstoleranzen sowie hohen initialen Kosten für die Formherstellung einher. Additive Fertigungsverfahren bieten dagegen den Vorteil der material-, zeit- und kostensparenden Herstellung beliebiger dreidimensionaler Körper.

Optische Elemente können mittels verschiedener Verfahren additiv gefertigt werden, beispielsweise Stereolithographie oder Digital Light Processing. Bei beiden Verfahren kann prozessbedingt allerdings immer nur schichtweise aufgebaut werden. Weiterhin lassen sich nur niedrigviskose Materialen verwenden, da diese gut fließen müssen. Bei Schichtdicken zwischen 10 $\mu$m und 100 $\mu$m geht dies für gekrümmte Oberflächen immer mit einem Verlust der Geometriegenauigkeit einher. Zudem kommt es durch den schichtweisen Aufbau zu Dichteinhomogenitäten und somit zur Inhomogenität der optischen und mechanischen Eigenschaften innerhalb des Bauteils. Der schichtweise Aufbau dieser Verfahren geht zudem immer mit langen Wartezeiten in den einzelnen Prozessschritten einher und führt damit zu langen Prozesszeiten. Als letztes müssen bei den genannten Verfahren überhängende Strukturelemente mit Stützstrukturen versehen werden. Der Aufbau dieser Stützstrukturen ist nicht nur zeit-, material- und somit auch kostenintensiv. Die Kontaktstellen dieser Stützstrukturen zum Bauteil vermindern zudem noch weiter die Oberflächenqualität der so hergestellten Bauteile. Zwar lässt sich die Oberflächengüte durch Nachbearbeitungsschritte, wie Polieren oder Beschichtungen, weiter verbessern, jedoch geht dies auch mit einem Verlust der Geometriegenauigkeit einher und ist als weiterer Prozessschritt sowohl zeit- als auch kostenintensiv.

Bei Continuous Liquid Interphase Production (CLIP, Nature Materials, 5, 365-369 (2006)) wird der Bauraum von unten durch eine sauerstoffdurchlässige Membran bestrahlt, wodurch sich eine chemische Inhibierungszone bildet, was einen kontinuierlichen Aufbau isotroper Objekte ermöglicht. Dieses Verfahren ist zwar wesentlich schneller als die herkömmliche Stereolithographie aber immer noch vom Fließverhalten der Photoharze abhängig, wodurch keine hochviskosen Materialien verwendet werden können, die sich gut zur Herstellung von Polymeren mit hoher mechanischer Festigkeit eignen. Außerdem kann bei diesem Verfahren nicht auf Stützstrukturen verzichtet werden, die die oben genannten Nachteile mit sich bringen. Weiterhin gibt es chemische Beschränkungen hinsichtlich des Harzes, da die Sauerstoffinhibierung nicht bei kationischer Polymerisation oder Thiol-En-Harzen funktioniert. Schließlich können einige Additive wie Basen nicht verwendet werden, da diese der Sauerstoffinhibierung entgegenwirken.

Dokument WO2014 / 108 364 A1 offenbart ein Multijettingverfahren, bei dem eine Schicht kleiner flüssiger Photoharztropfen ortsgenau auf einer Oberfläche abgelegt wird und anschließend durch UV-Bestrahlung ausgehärtet werden. Durch geschickte Kontrolle der Benetzungseigenschaften kann die natürliche Krümmung der einzelnen Tropfenoberflächen genutzt werden, um sehr hohe Oberflächengüten zu realisieren, obwohl auch hier schichtweise aufgebaut wird. Prozessbedingt werden hierbei jedoch auch niedrig-viskose Materialien eingesetzt und bei diesen Verfahren kann immer nur eine optische Oberfläche frei geformt werden, die zudem Restriktionen bzgl. der druckbaren Winkel und anderer Geometrieeinschränkungen unterworfen ist.

Im Dokument DE 10 2020 108 375 B3 ist ein Verfahren zum Herstellen einer Intraokularlinse mit folgenden Schritten offenbart: Bereitstellen eines für elektromagnetische Strahlung transparenten Behälters, in dem eine Flüssigkeit angeordnet ist, die mit der elektromagnetischen Strahlung aushärtbar ist; Bestrahlen der Flüssigkeit mit einem Satz an Bildern, die von der elektromagnetischen Strahlung gebildet werden und die jeweils eine Intraokularlinse zeigen, wobei jedes der Bilder des Satzes unter einem anderen Einstrahlwinkel bezüglich einer durch die Flüssigkeit verlaufenden Bezugsebene in die Flüssigkeit eingestrahlt wird, wodurch die Flüssigkeit ausgehärtet wird und die ausgehärtete Flüssigkeit die Intraokularlinse bildet. Das Verfahren ist insofern limitiert, als dass sich keine stark anisotropen Strukturen oder scharfen Kanten ausbilden lassen, wodurch die Strukturfreiheit eingeschränkt ist.

Für die Herstellung von optischen Elementen können Ausgangsmaterialien mittels Einstrahlens von Licht einer oder mehrerer Wellenlängen auf das Ausgangsmaterial optisch bearbeitet werden, um wenigstens eine Materialeigenschaft des Ausgangsmaterials hierdurch zu verändern. So ist es beispielsweise als solches bekannt, mit Hilfe einer solchen optischen Bearbeitung ein Ausgangsmaterial auszuhärten.

In dem Dokument US 4,041,476 sind ein Verfahren und eine Vorrichtung beschrieben, mit denen ein dreidimensionaler Körper aus einem Ausgangsmaterial hergestellt werden kann, indem Lichtstrahlen unterschiedlicher Wellenlänge auf das Ausgangsmaterial eingestrahlt werden und sich hierbei punktförmig überlappen.

Die Polymerisation ist eine Reaktion, die zum Herstellen von Kunststoffen genutzt wird. Bei der Photopolymerisation, die eine Form der optischen Bearbeitung

eines Ausgangsmaterials **ist, wird** die Reaktion mittels Einstrahlen von Licht auf das polymerisierbare Ausgangsmaterial ausgelöst. Solche polymerisierbaren Ausgangsstoffe oder -materialien werden auch als Fotopolymer bezeichnet. Hierbei handelt es sich um ein Polymer, das seine Materialeigenschaften ändert, wenn es mit Licht bestrahlt wird. Die Lichteinstrahlung bewirkt strukturelle Änderungen, beispielsweise die fotochemische Härtung des Materials durch Vernetzung. Die Fotopolymerisation wird beispielsweise beim 3D-Drucken genutzt, um mittels Lichteinstrahlung in dem polymerisierbaren Ausgangsmaterial dreidimensionale Formkörper aus dem ausgehärteten Material herzustellen.

Das Ausgangsmaterial selbst kann für das eingestrahlte Licht transparent und somit unempfindlich sein. Es werden Fotoinitiator-Moleküle beigemischt, welche das Licht absorbieren und die Aushärtung des Ausgangsmaterials initiieren. Für die Prozessierung des Ausgangsmaterials im unveränderten (freien) Volumen ist die Adressierung eines freigewählten Punktes im 3-dimensionalen Raum notwendig. Eine Möglichkeit ist die Verwendung von speziellen Fotoinitiatoren, die auch als Dual-Color-Fotoinitiatoren bezeichnet werden (WO 2020 / 245 456 A1 und WO 2021/ 089 090 A1). Diese werden bevorzugt oder ausschließlich durch Absorption von Photonen zweier unterschiedlicher Wellenlängen oder zweier unterschiedlicher, nicht-überlappender Wellenlängenbereiche angeregt. Dual-Color-Fotoinitiatoren können auf unterschiedlichen Wegen erzeugt werden. In einer Variante weisen Moleküle ohne Lichteinstrahlung einen Grund- / Normalzustand (A) auf. In diesem Zustand besitzt das Molekül eine Absorptionsbande für eine Wellenlänge $\lambda_1$ und eine möglichst geringe Absorption bei einer anderen Wellenlänge $\lambda_2$.

Die Moleküle können sodann einen voraktivierten oder angeregten Zwischenzustand (B) einnehmen. Der voraktivierte oder angeregte Zwischenzustand wird erzeugt durch Absorption von Licht der Wellenlänge $\lambda_1$ aus dem Grundzustand A. Die Fotoinitiator-Moleküle weisen im Zwischenzustand B eine Absorptionsbande für die Wellenlänge $\lambda_2$ auf. Die Absorptionsbande für die Wellenlänge $\lambda_1$ verschwindet. Alternativ bleibt die Absorptionsbande für die Wellen-länge $\lambda_1$ erhalten. Hierdurch entsteht ein unerwünschter, konkurrierender Übergangskanal zum Zustand C. Das Fotoinitiator-Molekül kehrt in Abwesenheit von Licht in den Zustand A zurück. Alternativ kehrt das Fotoinitiator-Molekül nach Anregung mit Licht einer dritten Wellenlänge $\lambda_3$ in den Zustand A zurück. Dies erlaubt eine gezielte Inhibierung des Initiators im Zustand B.

Der aktive Zustand C der Moleküle wird durch Absorption der Wellenlänge $\lambda_2$ aus B erzeugt. Der Zustand C setzt eine chemische und / oder eine physikalische Modifikation der unmittelbaren Umgebung des Moleküls in Gang. Eine Rückreaktion zu B ist nicht vorgesehen, aber möglich.

Zusammenfassung

Aufgabe der Erfindung ist es, ein Verfahren zum Herstellen eines optischen Elements mittels Bearbeitens eines optisch reaktiven Materials anzugeben, mit welchem auf effiziente Art und Weise ein Ausgangsmaterial mehrdimensional optisch bearbeitet werden kann.

Zur Lösung ist ein Verfahren zum Herstellen eines optischen Elements mittels Bearbeitens eines optisch reaktiven Materials sowie ein optisches Element nach den unabhängigen Ansprüchen geschaffen. Ausgestaltungen sind Gegenstand von abhängigen Unteransprüchen.

Nach einem Aspekt ist ein Verfahren zum Herstellen eines optischen Elements mittels Bearbeitens eines optisch reaktiven Materials geschaffen, welches Folgendes aufweist: Bereitstellen eines Ausgangsmaterial, welches optisch reaktiv ist und ein Arbeitsvolumen ausfüllt; optisches Bearbeiten des Ausgangsmaterials in dem Arbeitsvolumen mittels Einstrahlen von Licht einer ersten Wellenlänge und Licht einer zweiten Wellenlänge, die von der ersten Wellenlänge verschieden ist, wobei mittels des optischen Bearbeitens wenigstens eine Materialeigenschaft des Ausgangsmaterials verändert wird. Das optische Bearbeiten umfasst Folgendes: Bestrahlen eines ersten Schichtteilvolumens des mit dem Ausgangsmaterial ausgefüllten Arbeitsvolumens mit dem Licht erster Wellenlänge; Bestrahlen des ersten Schichtteilvolumens des Arbeitsvolumens mit dem Licht zweiter Wellenlänge, wobei das Licht zweiter Wellenlänge hierbei in das Arbeitsvolumen projiziert wird; Bestrahlen eines zweiten Schichtteilvolumens des mit dem Ausgangsmaterial ausgefüllten Arbeitsvolumens, welches von dem ersten Schichtteilvolumen verschieden ist, mit dem Licht erster Wellenlänge; Bestrahlen des zweiten Schichtteilvolumens des Arbeitsvolumens mit dem Licht zweiter Wellenlänge, wobei das Licht zweiter Wellenlänge hierbei in das Arbeitsvolumen projiziert wird; und Wiederholen der vorangehenden Schritte zur schichtweisen optischen Bearbeitung des Ausgangsmaterials in dem Arbeitsvolumen bis ein zu bearbeitendes Volumen des Ausgangsmaterials, welches das Arbeitsvolumen ganz oder teilweise erfasst, optisch bearbeitet ist, und hierbei aus dem Ausgangsmaterial ein Grünling gebildet ist; und Weiterverarbeiten des Grünlings, sodass aus dem Grünling ein optisches Element zumindest teilweise, insbesondere vollständig, gebildet ist.

Insbesondere weist das Verfahren Folgendes auf: Bereitstellen eines Ausgangsmaterials, welches optisch reaktiv ist und ein Arbeitsvolumen ausfüllt; optisches Bearbeiten des Ausgangsmaterials in dem Arbeitsvolumen mittels Einstrahlen von Licht einer ersten Wellenlänge und Licht einer zweiten Wellenlänge, die von der ersten Wellenlänge verschieden ist, wobei das Licht erster Wellenlänge und das Licht zweiter Wellenlänge von einer Beleuchtungseinrichtung bereitgestellt wird und wobei mittels des optischen Bearbeitens wenigstens eine Materialeigenschaft des Ausgangsmaterials verändert wird. Das optische Bearbeiten umfasst Folgendes: Bestrahlen eines ersten Schichtteilvolumens des mit dem Ausgangsmaterial ausgefüllten Arbeitsvolumens mit dem Licht erster Wellenlänge; Bestrahlen des ersten Schichtteilvolumens des Arbeitsvolumens mit dem Licht zweiter Wellenlänge, wobei das Licht zweiter Wellenlänge hierbei mittels einer Projektionseinrichtung nur das erste Schichtteilvolumen ganz oder teilweise erfassend in das Arbeitsvolumen projiziert wird; Bestrahlen eines zweiten Schichtteilvolumens des mit dem Ausgangsmaterial ausgefüllten Arbeitsvolumens mit dem Ausgangsmaterial, welches von dem ersten Schichtteilvolumen verschieden ist, mit dem Licht erster Wellenlänge; Bestrahlen des zweiten Schichtteilvolumens des Arbeitsvolumens mit dem Licht zweiter Wellenlänge, wobei das Licht zweiter Wellenlänge hierbei mittels der Projektionseinrichtung nur das zweite Schichtteilvolumen ganz oder teilweise erfassend in das Arbeitsvolumen projiziert wird; und Wiederholen der vorangehenden Schritte zur schichtweisen optischen Bearbeitung des Ausgangsmaterials in dem Arbeitsvolumen bis ein zu bearbeitendes Volumen des Ausgangsmaterials, welches das Arbeitsvolumen ganz oder teilweise erfasst, optisch bearbeitet und hierbei aus dem Ausgangsmaterial ein Grünling (Rohling) gebildet ist; und Weiterverarbeiten des Grünlings, sodass aus dem Grünling ein optisches Element (zumindest teilweise, insbesondere vollständig) gebildet ist.

Nach einem weiteren Aspekt ist ein optisches Element geschaffen, welches mittels des Verfahrens hergestellt ist.

Mit Hilfe des Verfahrens ist es ermöglicht, ein optisches Element in effizienter Weise herzustellen. Hierbei kann das Ausgangsmaterial, welches bereits vor dem Einstrahlen des Lichts erster und zweiter Wellenlänge in dem Arbeitsvolumen und dieses ausfüllend eingebracht wird, im Arbeitsvolumen mehrdimensional oder räumlich optisch bearbeiten werden, derart, dass mittels des Einstrahlens des Lichts erster und zweiter Wellenlänge, wahlweise von Licht einer oder mehrerer weiterer Wellenlängen, wenigstens eine Materialeigenschaft des Ausgangsmaterials verändert wird und mittels Weiterverarbeitens (Nachbearbeitens) ein optisches Element erhalten wird. Mittels des Verfahrens kann ein volumetrisches 3D Druckverfahren bereitgestellt sein, welches insbesondere kontinuierlich ablaufen kann und somit die Herstellung isotroper Objekte ermöglichen kann.

Die Erfindung geht dabei von der überraschenden Erkenntnis aus, dass sich volumetrische 3D Druckverfahren, welche ein Bestrahlen entsprechender Schichtteilvolumina mit Licht einer ersten und einer zweiten Wellenlänge beinhalten, hervorragend für die Herstellung optischer Elemente eignen. Insbesondere lassen sich mit entsprechenden volumetrischen 3D Druckverfahren, welche ein Bestrahlen entsprechender Schichtteilvolumina mit Licht einer ersten und einer zweiten Wellenlänge beinhalten, optische Elemente mit hervorragenden Eigenschaften mit hoher Qualität in effizienter Weise herstellen. Die Erfindung bricht damit mit der bis dato gängigen Auffassung, dass sich mit volumetrischen 3D Druckverfahren keine optischen Elemente, insbesondere keine größeren optischen Elemente, mit gewünschten Eigenschaften herstellen lassen; insbesondere konnte anhand von Untersuchungen gezeigt werden, dass sich z. B. das CT-basierte axiale Lithografie (Computed axial lithography), kurz CAL-Verfahren, nicht eignet, insbesondere deshalb, weil dieses Verfahren nur bedingt zur Herstellung von Mikrooptiken geeignet ist oder zu mit Artefakten behafteten Bauteiloberflächen führt, die eine Verwendung des gedruckten Bauteils als optisches Element ausschließen. Mit anderen Worten konnten die Erfinder feststellen, dass es überraschender Weise doch möglich ist, bestimmte volumetrische 3D Druckverfahren, nämlich insbesondere volumetrische 3D Druckverfahren, welche ein Bestrahlen entsprechender Schichtteilvolumina mit zwei unterschiedlichen Wellenlängen beinhalten, für die Herstellung optischer Elemente einzusetzen, insbesondere optische Elemente aus Polymermaterialien oder Kunststoffen.

Es ist des Weiteren eine Vorrichtung zum Bearbeiten eines optisch reaktiven Materials offenbart, welche Folgendes aufweisen kann: ein Arbeitsvolumen, welches eingerichtet ist, ein Ausgangsmaterial aufzunehmen, welches optisch reaktiv ist und das Arbeitsvolumen teilweise oder ganz ausfüllt; eine Beleuchtungseinrichtung, die eingerichtet ist, Licht einer ersten Wellenlänge und Licht einer zweiten Wellenlänge zum Einstrahlen auf das Arbeitsvolumen mit dem Ausgangsmaterial bereitzustellen. Die Beleuchtungseinrichtung kann eingerichtet sein, das Ausgangsmaterial in dem Arbeitsvolumen wie folgt optisch zu bearbeiten: Bestrahlen eines ersten Schichtteilvolumens des mit dem Ausgangsmaterial teilweise oder ganz ausgefüllten Arbeitsvolumens mit dem Licht erster Wellenlänge; Bestrahlen des ersten Schichtteilvolumens des Arbeitsvolumens mit dem Licht zweiter Wellenlänge, Bestrahlen eines zweiten Schichtteilvolumens des Arbeitsvolumens, welches von dem ersten Schichtteilvolumen verschieden ist, mit dem Licht erster Wellenlänge; Bestrahlen des zweiten Schichtteilvolumens des Arbeitsvolumens mit dem Licht zweiter Wellenlänge; und Wiederholen der vorangehenden Schritte zur schichtweisen optischen Bearbeitung des Ausgangsmaterials in dem Arbeitsvolumen bis ein zu bearbeitendes Volumen des Ausgangsmaterials, welches das Arbeitsvolumen ganz oder teilweise erfasst, insbesondere unter Ausbildung eines entsprechenden Grünlings optisch bearbeitet ist.

Insbesondere kann die Vorrichtung Folgendes aufweisen: ein Arbeitsvolumen, welches eingerichtet ist, ein Ausgangsmaterial aufzunehmen, welches optisch reaktiv ist und das Arbeitsvolumen ausfüllt; eine Beleuchtungseinrichtung, die eingerichtet ist, Licht einer ersten Wellen-länge und Licht einer zweiten Wellenlänge zum Einstrahlen auf das Arbeitsvolumen mit dem Ausgangsmaterial bereitzustellen; und eine Projektionseinrichtung, die eingerichtet ist, das Licht zweiter Wellenlänge beim Einstrahlen auf das mit dem Ausgangsmaterial befüllten Arbeitsvolumen in ein Schichtteilvolumen des Arbeitsvolumens und nur das Schichtteilvolumen ganz oder teilweise erfassend zu projizieren. Die Beleuchtungseinrichtung und die Projektionseinrichtung können weiterhin eingerichtet sein, das Ausgangsmaterial in dem Arbeitsvolumen wie folgt optisch zu bearbeiten: Bestrahlen eines ersten Schichtteilvolumens des mit dem Ausgangsmaterial ausgefüllten Arbeitsvolumens mit dem Licht erster Wellenlänge; Bestrahlen des ersten Schichtteilvolumens des Arbeitsvolumens mit dem Licht zweiter Wellenlänge, wobei das Licht zweiter Wellenlänge hierbei mittels einer Projektionseinrichtung nur das erste Schichtteilvolumen ganz oder teilweise erfassend in das Arbeitsvolumen projiziert wird; Bestrahlen eines zweiten Schichtteilvolumens des mit dem Ausgangsmaterial ausgefüllten Arbeitsvolumens mit dem Ausgangsmaterial, welches von dem ersten Schichtteilvolumen verschieden ist, mit dem Licht erster Wellenlänge; Bestrahlen des zweiten Schichtteilvolumens des Arbeitsvolumens mit dem Licht zweiter Wellenlänge, wobei das Licht zweiter Wellenlänge hierbei mittels der Projektionseinrichtung nur das zweite Schichtteilvolumen ganz oder teilweise erfassend in das Arbeitsvolumen projiziert wird; und Wiederholen der vorangehenden Schritte zur schichtweisen optischen Bearbeitung des Ausgangsmaterials in dem Arbeitsvolumen bis ein zu bearbeitendes Volumen des Ausgangsmaterials, welches das Arbeitsvolumen ganz oder teilweise erfasst, optisch bearbeitet und hierbei aus dem Ausgangsmaterial ein Grünling gebildet ist. Aus dem Grünling kann durch Weiterverarbeiten ein optisches Element (zumindest teilweise, insbesondere vollständig) gebildet sein.

Die hierin auch als Bestrahlungseinrichtung bezeichnete Beleuchtungseinrichtung der Vorrichtung kann eingerichtet sein, einen Lichtschnitt in dem Arbeitsvolumen zu erzeugen bzw. eine Lichtschnitterzeugungseinrichtung zur Erzeugung eines Lichtschnitts in dem Arbeitsvolumen umfassen.

Die Beleuchtungseinrichtung kann z. B. wenigstens eines der folgenden Elemente umfassen: eine Powell-Linse, eine Zylinderlinse, insbesondere eine planokonvexe Zylinderlinse, oder einen Polygonspiegel oder einen Galvoscanner. Alternativ oder ergänzend kann die Beleuchtungseinrichtung z. B. umfassen: einen Laser oder eine LED oder eine thermische Lichtquelle. Alternativ oder ergänzend kann die Beleuchtungseinrichtung z. B. umfassen: einen Spiegel oder eine Lichtumlenkeinrichtung, welche eingerichtet sind, das Licht, welches aus dem Arbeitsvolumen austritt in entgegengesetzter Richtung durch Reflektion wieder in das Arbeitsvolumen einzustrahlen.

Die Beleuchtungseinrichtung kann eingerichtet sein, im zeitlichen Ablauf eine frühere Prozessierung von Schichten zu ermöglichen, die zu einer Quelle des Lichts der zweiten Wellenlänge weiter entfernt liegen.

Nacheinander werden die Schichtteilvolumen des Arbeitsvolumens mit der ersten und der zweiten Wellenlänge bestrahlt, um so eine optisch initiierte Reaktion in dem Ausgangsmaterial auszulösen. Die Schichtteilvolumen, welche nacheinander optisch bearbeitet werden, enthalten Teilvolumen des Ausgangsmaterials, dass vor dem Beginn des Fertigungsprozesses (optisches Bearbeiten) in dem Arbeitsvolumen eingebracht wird, und sind von diesen ausgefüllt. Im Unterschied zu bekannten Verfahren erfolgt beim optischen Bearbeiten kein schichtweiser Auftrag des Ausgangsmaterials und sich jeweils anschließendes schichtweises optisches Bearbeiten (der gerade aufgebrachten Schicht) nach dem Schichtauftrag.

In Abhängigkeit davon, welches Schichtteilvolumen innerhalb des vorher mit dem Ausgangsmaterial befüllten Arbeitsvolumens mit der ersten Wellenlänge bestrahlt wird, erfolgt die Projektion des Lichts der zweiten Wellenlänge bzw. die Bestrahlung mit Licht der zweiten Wellenlänge mit Hilfe der Projektionseinrichtung in genau dieses momentan und aktuell mit der ersten Wellenlänge bestrahlte Schichtteilvolumen. Die Projektionseinrichtung bewirkt eine Abbildung des Lichts zweiter Wellenlänge in das aktuell gewünschte Schichtteilvolumen. Hierbei kann die Projektionseinrichtung das Licht zweiter Wellenlänge einer wenigstens zweidimensional geformten Abbildung entsprechend in die Projektionsebene oder das Projektionsvolumen abbilden, welche(s) sich in dem mit dem Licht erster Wellenlänge bestrahlten Schichtteilvolumen befindet. Auf diese Weise kann zum Beispiel in dem Ausgangsmaterial Schicht für Schicht ein dreidimensionaler Körper hergestellt werden.

Das Weiterverarbeiten des Grünlings kann insbesondere mindestens einen der folgenden Schritte aufweisen: Entnehmen des Grünlings aus dem Ausgangsmaterial; Behandeln (insbesondere Waschen) des Grünlings mit einem Lösungsmittel und/oder einem (Behandlungs-)Monomer; und Trocknen des (gewaschenen) Grünlings. Der Grünling kann isotrop gebildet sein.

Alternativ können die Weiterverarbeitungsschritte im Ausgangsmaterial erfolgen (ohne Entnahme des Rohlings).

Das Lösungsmittel und/oder (Behandlungs-) Monomer kann einen Fotoinitiator und/oder einen thermischen Initiator aufweisen, der bevorzugt auf nur auf eine Wellenlänge (beziehungsweise einen Wellenlängenbereich) reagiert. Auf diese Weise kann das Nachhärten effizienter erfolgen. Der Fotoinitiator und/oder thermische Initiator kann hierbei ausgebildet sein, in die Oberfläche des Grünlings aufgenommen zu werden. Insbesondere kann in dem Lösungsmittel und/oder dem (Behandlungs-)Monomer ein Fotoinitiator und/oder thermischer Initiator gelöst sein. Das Trocknen kann beispielsweise mittels Zufuhr eines Gasstroms (vorzugsweise eines Luftstroms oder Stickstoffstroms) und/oder mittels Wärmezufuhr (vorzugsweise mit einer Temperatur von mindestens 20 °C) erfolgen. Fotoinitiatoren sind beispielsweise in Fouassier / Lalevée, Photoinitiators, Wiley-VCH (2021) beschrieben.

Insbesondere für hochviskose Ausgangsmaterialien kann das Waschen durch entsprechende Wahl von Lösungsmittel oder (Behandlungs-)Monomer, Zeit, Temperatur und Bewegung glattere Oberflächen des Grünlings ergeben.

Ergänzend oder alternativ kann das Weiterverarbeiten des Grünlings mindestens einen der folgenden Schritte aufweisen: photochemisches Nachhärten des Grünlings, Tempern des Grünlings (dies entspricht typischerweise einem thermischen Nachhärten des Grünlings), Schleifen des Grünlings, Polieren des Grünlings und Beschichten des Grünlings (beispielsweise mit einer Antireflexionsschicht).

Ein Beschichten des Grünlings kann mit einem oder mehreren chemischen und/oder physikalischen Beschichtungsverfahren erfolgen und insbesondere dazu dienen, die Oberflächeneigenschaften des Grünlings und damit des optischen Elements zu verbessern. Insbesondere kann die Rauigkeit, Kratzfestigkeit und/oder die Reflexionseigenschaften durch Aufbringen wenigstens einer Beschichtung verbessert werden. Für alle Ausführungsformen gilt sonach, dass eine aufgebrachte Beschichtung einen niedrigeren Brechungsindex als das (eigentliche) optische Element aufweisen kann (z. B. durch eine Anti-Reflexionsschicht) und/oder die Oberflächenhärte des optischen Elements erhöhen kann (z. B. durch eine Anti-Kratzschicht).

Entsprechende Beschichtungsverfahren können z. B. ein Sprayverfahren, ein Dipverfahren, ein Spincoatingverfahren, ein Sol-Gel-Verfahren oder ein Gasphasenabscheidungsverfahren beinhalten. Nach jedwedem Beschichten kann eine weitere Aushärtung, diese kann wiederum z. B. photochemisch oder thermisch erfolgen, durchgeführt werden.

Ein vermittels eines entsprechenden Beschichtungsverfahrens aufzubringendes Beschichtungsmaterial kann z. B. ein Feststoff, eine Paste, eine Flüssigkeit bzw. ein Lack oder ein Gas sein. Mithin kann ein Beschichtungsmaterial z. B. als Pulver, als Paste, als Flüssigkeit bzw. als Lack oder als Gas bzw. aus einer Gasphase auf den Grünling aufgebracht werden.

Eine Beschichtung kann auch mit dem unausgehärteten Ausgangsmaterial selbst oder einem anderen organischen Polymer oder einem anorganisch-organischem Hybridmaterial erfolgen, was typischerweise eine weitere Aushärtung, diese kann wiederum z. B. photochemisch oder thermisch erfolgen, erfordert.

Die Oberfläche des Grünlings bzw. des optischen Elements kann vor Aufbringen der Beschichtung chemisch und/oder physikalisch vorbereitet, d. h. insbesondere aktiviert, werden, um eine bessere Anbindung der Beschichtung zu ermöglichen. Eine entsprechende Vorbereitung bzw. Aktivierung kann mit einem Plasma, insbesondere einem Sauerstoffplasma, erfolgen. Alternativ oder ergänzend sind auch Haftvermittler denkbar, die eine bessere Anbindung der Beschichtung auf dem Grünling bzw. dem optischen Element ermöglichen.

Das photochemische Nachhärten kann mittels isotroper Bestrahlung des Grünlings (gleichmäßiger Bestrahlung von allen Seiten mit Licht) erfolgen. Das Tempern bzw. thermische Nachhärten kann mittels Wärmezufuhr mit Temperaturen von mindestens 50 °C, insbesondere über eine Dauer von mindestens 15 min, bzw. entsprechender Auslagerung des Grünlings in Temperaturen von mindestens 50°C, insbesondere über eine Dauer von mindestens 15 min, erfolgen.

Mit Hilfe einer Steuereinrichtung, die mit einer oder mehreren Lichtquellen bzw. Bestrahlungseinrichtungen zum Bereitstellen des Lichts erster und des Lichts zweiter Wellenlänge sowie gegebenenfalls der bzw. einer Projektionseinrichtung, welche im Allgemeinen einen Bestandteil einer Bestrahlungseinrichtung bilden kann, verbunden ist, kann bestimmt werden, ob das erste oder das zweite Schichtteilvolumen (des Ausgangsmaterials im Arbeitsvolumens) bestrahlt wird, und die Projektionseinrichtung kann in Abhängigkeit hiervon angesteuert werden, das Licht zweiter Wellenlänge in das erste und/oder das zweite Schichtteilvolumen zu projizieren. **In** der Steuereinrichtung werden hierbei Daten bereitgestellt, welche die aktuelle oder momentane Position des Schichtteilvolumens definieren, welcher mit Licht der ersten Wellenlänge bestrahlt wird. Hiervon ausgehend wird die Projektionseinrichtung gesteuert, derart, dass die mit Hilfe der Projektionseinrichtung erzeugte Projektion in einer Projektionsebene oder in einem Projektionsvolumen in dieses aktuell bestrahlte Schichtteilvolumen erfolgt. Auf diese Weise werden die Schichtteilvolumen des Ausgangsmaterials Schicht für Schicht nacheinander bearbeitet. Die äußere Form der Projektion der Projektionseinrichtung kann hierbei für unterschiedliche Schichtteilvolumen verschieden sein, insbesondere abhängig von einem dreidimensionalen Körper, der mit Hilfe der optischen Bearbeitung in dem Ausgangsmaterial hergestellt werden soll.

Es kann in einer Ausführungsform vorgesehen sein, eine aktuelle oder momentane Position des Schichtteilvolumens, das mit dem Licht erster Wellenlänge bestrahlt wird, in dem Arbeitsvolumen mit Hilfe einer Messeinrichtung zu detektieren, die dann die Position anzeigende Messsignale an die Steuereinrichtung gibt.

Das Licht erster Wellenlänge und das Licht zweiter Wellenlänge können zumindest für einen zeitlichen Überlappungszeitraum gleichzeitig gemeinsam in das erste oder das zweite Schichtteilvolumen eingestrahlt werden. Bei dieser Ausführungsform wird der von dem Schichtteilvolumen sowie der Projektion der Projektionseinrichtung erfasste Bereich zumindest für den zeitlichen Überlappungsbereich sowohl mit Licht der ersten Wellenlänge als auch mit Licht der zweiten Wellenlänge bestrahlt.

Das erste und das zweite Schichtteilvolumen können in dem Arbeitsvolumen benachbarte Schichtteilvolumen des Ausgangsmaterials bilden.

Es kann vorgesehen sein, dass das erste und das zweite Schichtteilvolumen einer der folgenden Konfigurationen von Teilvolumen entsprechend gebildet werden: randseitig überlappend, randseitig aneinanderstoßend und randseitig beabstandet zueinander.

Auf das Ausgangsmaterial im Arbeitsvolumen können das Licht erster Wellenlänge entlang einer ersten Einstrahlrichtung und das Licht zweiter Wellenlänge entlang einer zweiten Einstrahlrichtung eingestrahlt werden, die quer zur ersten Einstrahlrichtung verläuft. In einer Ausführungsform können die erste und die zweite Einstrahlrichtung zum Beispiel einen Winkel von etwa 90° einnehmen. Andere Winkel können im Bereich von etwa 30° bis 90° Grad zwischen den optischen Achsen der Einstrahlrichtungen können vorgesehen sein.

Das Licht erster Wellenlänge und / oder das Licht zweiter Wellenlänge können als gepulstes Licht eingestrahlt werden. Die Lichtimpulse des Lichts erster und zweiter Wellenlänge können zeitgleich oder im vorbestimmten zeitlichen Abstand nacheinander in das momentan bearbeitete Schichtteilvolumen eingestrahlt werden. Die Lichtimpulse für das Licht der beiden Wellenlängen können mit gleichen oder unterschiedlichen zeitlichen Impulsbreiten bereitgestellt werden. Alternativ kann das Licht erster Wellenlänge oder das Licht zweiter Wellenlänge als Dauerlicht eingestrahlt werden.

Das Ausgangsmaterial kann mittels des optischen Bearbeitens entsprechend wenigstens eines Bearbeitungsverfahrens aus der folgenden Gruppe bearbeitet werden: Aushärten, Härten, Gelieren und Verflüssigen. Bei dieser oder anderen Ausführungsformen kann das Ausgangsmaterial fest, flüssig oder pastös sein.

Es kann in einer Ausgestaltung vorgesehen sein, dass das Ausgangsmaterial aufgrund der optischen Bearbeitung mit dem Licht erster und zweiter Wellenlänge zum Leuchten gebracht wird, insbesondere aufgrund von Fluoreszenz oder Phosphoreszenz.

Zum Bestrahlen des ersten Schichtteilvolumens und zum Bestrahlen des zweiten Schichtvolumens mit dem Licht erster Wellenlänge kann ein schichtförmiger Einstrahlbereich einer ersten Lichtquelle, mit der das Licht erster Wellenlänge bereitgestellt wird, relativ zum Arbeitsvolumen verlagert werden. Bei dieser Ausführungsform wird der schichtförmige Einstrahlbereich für das Licht erster Wellenlänge während der optischen Bearbeitung des Ausgangsmaterials relativ hierzu verschoben, so dass der Einstrahlbereich quasi über das Arbeitsvolumen läuft oder streicht. Die Relativbewegung zwischen Arbeitsvolumen und dem Einstrahlbereich kann auf verschiedene Art und Weise realisiert werden. Eine Verlagerung des Arbeitsvolumens und / oder der ersten Lichtquelle kann vorgesehen sein. Alternativ oder ergänzend können Arbeitsvolumen und erste Lichtquelle während der vollständigen Bearbeitung des Ausgangsmaterials relativ zueinander fixiert sein. Mit Hilfe einer Lichtumlenkeinrichtung wird dann der Einstrahlbereich für das Licht erster Wellenlänge von der ersten Lichtquelle über das Arbeitsvolumen mit dem Ausgangsmaterial bewegt.

Es kann vorgesehen sein, dass das optische Bearbeiten des Ausgangsmaterials mit Hilfe eines oder mehrerer Lichtdetektoren beobachtet wird, zum Beispiel mittels einer Kamera und / oder eines Fotodetektor. Hierbei können die Vorgänge bei der Prozessierung (optische Bearbeitung) untersucht werden, indem zum Beispiel transmittiertes Licht gemessen wird, sei es Licht der Anregung des Lichtschnitts und / oder Licht vom Projektor. Der Lichtschnittgenerator und / oder der Projektor können weitere Lichtwellenlängen emittieren, die von den Anregungswellenlängen verschieden sind und nur der Beobachtung der Änderung der Materialeigenschaft des Ausgangsmaterials dienen, zum Beispiel der ablaufenden Polymerisation.

Mittels des optischen Bearbeitens kann in dem Ausgangsmaterial eine polychrome Mehrphotonen-Polymerisation ("xolography") ausgelöst werden, welche die Veränderung der wenigstens einen Materialeigenschaft des Ausgangsmaterials bewirkt. Bei einer beispielhaften Ausführung kann das Ausgangsmaterial ein transparentes organisches Polymer und/oder ein anorganisch/organisches Polymerkomposit aufweisen, welches bevorzugt mittels des optischen Bearbeitens aushärtet. Bei einer beispielhaften Ausgestaltung kann das Ausgangsmaterial eine oder mehrere der folgenden Komponenten umfassen: Oligomer (beispielsweise Acrylat, Methacrylat, Epoxy, Vinyl, Allyl, Organopolysiloxane, endständig funktionalisierte Polysiloxane), funktionalisierte und nicht-funktionalisierte Nanopartikel, Monomer (beispielsweise Acrylat, Methacrylat, Epoxy, Vinyl, Allyl), Vernetzer (beispielsweise multifunktionale Monomere, multifunktionale Thiole), Dual-Color-Fotoinitiator, Co-Initiator, Inhibitor, Sensitizer, Entschäumer (Defoamer), Additiv für die Nachbearbeitung (beispielsweise zusätzlicher Fotoinitiator und/oder thermischer Initiator), Lösungsmittel, Additiv, insbesondere Additiv für die Rheologiekontrolle (Rheologiemodifier), insbesondere des Ausgangsmaterials, Additiv zur Herabsetzung der Oberflächenspannung, insbesondere des Ausgangsmaterials, Additiv zur Beeinflussung der optischen Eigenschaften, beispielsweise zur Anpassung bzw. Erhöhung der Transparenz bzw. Anpassung des Brechungsindex, insbesondere des Ausgangsmaterials bzw. des optischen Elements.

Der Dual-Color-Fotoinitiator kann auf Licht von zwei unterschiedlichen Wellenlängen reagieren und insbesondere zu einer lokalen Polymerisation führen, wodurch es vorzugsweise zu einer selektiven Aushärtung kommt. **In** einer Ausführung kann ein transparentes Gefäß mit Monomer und Dual-Color-Fotoinitiator von einer Seite mit einer Laserlinie bestrahlt werden, sodass ein Lichtschnitt entsteht. Auf den Lichtschnitt kann ein Video projiziert werden. Durch die Bewegung des Gefäßes kann ein ausgehärtetes Objekt freischwebend entstehen.

Das Verfahren kann (vorzugsweise während der Projektion des Videos) die Durchführung eines Pixelshifts aufweisen, sodass bevorzugt eine automatische Glättung der Kanten erreicht wird. Weiterhin kann ein softwareseitiges Zerlegen des Objekts in Schichten

mit Schichtdicken <=1 μm bei gleichbleibender Druckgeschwindigkeit vorgesehen sein, wodurch vorzugsweise eine hohe Auflösung des optischen Elements erzielt wird.

Das Ausgangsmaterial kann eine Viskosität von $10^2$ mPa·s bis $10^7$ mPa·s, bevorzugt von $3 \cdot 10^3$ bis $10^6$ mPa·s, besonders bevorzugt von $10^3$ bis $10^5$ mPa·s, am meisten bevorzugt von $10^4$ bis $9 \cdot 10^4$ mPa·s aufweisen.

Das Ausgangsmaterial kann eine Monomermischung und/oder eine Oligomermischung bevorzugt mit einer entsprechenden Viskosität aufweisen. Die Monomermischung und/oder Oligomermischung kann bevorzugt transparent sein. Die Monomermischung und/oder Oligomermischung kann den Grünling und/oder ein ausgehärtetes Objekt stabilisieren, wodurch insbesondere die Notwendigkeit von Stützstrukturen entfällt und vollständige Strukturfreiheit gegeben ist. Das ausgehärtete Objekt kann freischwebend in der Monomermischung und/oder Oligomermischung entstehen.

Insbesondere kann das ausgehärtete Objekt, d. h. der Grünling, freischwebend in der Monomermischung und/oder Oligomermischung, d. h. im Allgemeinen in dem Ausgangsmaterial, entstehen, wenn die Monomermischung bzw. die Oligomermischung, im Allgemeinen das Ausgangsmaterial, eine ausreichend hohe Viskosität aufweist, welche das ausgehärtete Objekt stützt. Alternativ oder ergänzend kann das ausgehärtete Objekt freischwebend in der Monomermischung und/oder Oligomermischung, im Allgemeinen in dem Ausgangsmaterial, entstehen, wenn die Monomermischung bzw. die Oligomermischung, im Allgemeinen das Ausgangsmaterial, nicht-Newtonische Fließeigenschaften, mithin scherverdünnende bzw. scherverflüssigende Fließeigenschaften aufweist und/oder eine Fließgrenze aufweist, die größer ist, als die statische Scherbelastung durch das Objekt. Die Fließgrenze des Ausgangsmaterials kann z. B. durch Rotationsrheometrie (Platte-Platte-Rheometer) unter quasi-statischer Belastung via "Creep-Test" oder Fahren einer langsamen Schubspannungsrampe erfolgen.

Eine entsprechende Fließgrenze des Ausgangsmaterials, die größer ist, als die statische Scherbelastung durch das Objekt ist typischerweise größer oder gleich 0,1 Pa, insbesondere 0,2 Pa, weiter insbesondere 0,3 Pa, weiter insbesondere 0,4 Pa, weiter insbesondere 0,5 Pa, weiter insbesondere 0,6 Pa, weiter insbesondere 0,75 Pa, weiter insbesondere 1 Pa. Eine entsprechende Fließgrenze des Ausgangsmaterials kann sonach insbesondere wenigstens 0,1 Pa pro $cm^3$ des Arbeitsvolumens sein. Für ein Arbeitsvolumen von 1 $cm^3$ kann die Fließgrenze des Ausgangsmaterials sonach wenigstens 0,1 Pa betragen. Für ein Arbeitsvolumen von 2 $cm^3$ kann die Fließgrenze des Ausgangsmaterial sonach wenigstens 0,2 Pa betragen.

Die statische Scherbelastung durch das Objekt hängt insbesondere von der Geometrie und Größe des Objekts ab und kann entsprechend, je nach Geometrie und Größe des Objekts, kleiner oder größer 0,5 Pa sein. Um entsprechende rheologische Eigenschaften der Monomermischung bzw. der Oligomermischung, im Allgemeinen des Ausgangsmaterials, zu realisieren, kann es zweckmäßig sein, die Monomermischung bzw. die Oligomermischung, im Allgemeinen das Ausgangsmaterial, vor dem optischen Bearbeiten, d. h. vor dem Drucken, Ruhen zu lassen. Das Ausgangsmaterial kann sonach, insbesondere nach dem Einfüllen in einen das Arbeitsvolumen definierenden Behälter, für eine gewisse Zeit, insbesondere von wenigstens einer Stunde, insbesondere wenigstens sechs Stunden, weiter insbesondere wenigstens zwölf Stunden, weiter insbesondere wenigstens achtzehn Stunden, weiter insbesondere wenigstens zwanzig Stunden, Ruhen gelassen werden.

Alternativ oder ergänzend kann eine entsprechende Fließgrenze des Ausgangsmaterials durch Beimischung von Oligomeren und Polymeren mit nicht-Newtonischen Fließeigenschaften und/oder durch die Beimischung von Additiven (Rheologiemodifier) eingestellt werden. Beispiele für Oligomere mit nicht-Newtonschen Fließeigenschaften sind in nicht-abschließender Aufzählung: 1) lineare Polymere mit mittlerer und/oder hoher Molmasse, z.B. PMMA, PS, PC, PIM, 2) Cellulose und Celluloseester, 3) Polyacrylsäure und Polyacrylsäure-Polyacrylsäureester-Copolymere, 4) Polyacrylamide, 5) Polyethylenoxid und 6) Polyurethane. Beispiele für Rheologiemodifier sind in nicht-abschließender Aufzählung: 1) anorganische (Nano)partikel, z.B. Pyrogene Kieselsäure, natürliche und synthetische Tonmineralien, Schichtsilikate, Glas, 2) Organisch modifizierte anorganische (Nano)partikel, 3) organische Moleküle, Oligomere und Polymere (Harnstoff-Derivate, Polysaccharide, Polyacrylsäuren, Polyacrylate, Polyamide, Polyether, Polyurethane, Polyharnstoff-Derivate) und 4) Harnstoff modifizierte Polyacrylate, Polyether, Polyamide und Polyurethane. Beispiele für kommerzielle organische Rheologiemodifier, die verwendet werden können, sind in nicht-abschließender Aufzählung: RHEOBYK 410, RHEOBYK 420, RHEOBYK 430, RHEOBYK 440, BYK-LP R21675, RHEOBYK 7410CA, RHEOBYK 7420CA, RHEOBYK 7420ET (allesamt erhältlich über BYK-Chemie GmbH, 46486 Wesel (DE)), JL-106 (erhältlich über Bomar Chem, 51 Greenwoods Rd, Torrington, CT 06790).

Für jedweden Rheologiemodifier gilt vorzugsweise, dass dieser, z. B. im Hinblick auf seine chemischen und/oder physikalischen Eigenschaften, Konzentration, etc., so ausgewählt bzw. eingesetzt wird, dass dieser nicht oder kaum zu einer Trübung des Ausgangsmaterials und/oder des ausgehärteten Materials nach optischer Bearbeitung führt.

An dieser Stelle ist allgemein anzumerken, dass das Ausgangsmaterial, insbesondere in einem Wellenlängenbereich zwischen 370 und 800 nm, weiter insbesondere zwischen 400 und 800 nm, weiter insbesondere zwischen 450 und 800 nm, weiter insbesondere bei 600 nm, typischerweise eine Transmission von wenigstens 10 %, insbesondere wenigstens 20%, weiter insbesondere wenigstens 30 %, weiter insbesondere wenigstens 40 %, weiter insbesondere wenigstens 50 %, weiter insbesondere wenigstens 60 %, weiter insbesondere wenigstens 70 %, weiter insbesondere wenigstens 80%, weiter insbesondere wenigstens 90 %, weiter insbesondere wenigstens 95 %, weiter insbesondere wenigstens 99 %, im Bereich des eingestrahlten Lichts erster Wellenlänge und/oder im Bereich des eingestrahlten Lichts zweiter Wellenlänge aufweist. Die optische Transmission bezieht sich dabei auf eine optische Pfadlänge entsprechend dem Lambert-Beer'schen Gesetz von 10 mm.

An dieser Stelle ist weiterhin allgemein anzumerken, dass das optische Element, insbesondere in einem Wellenlängenbereich zwischen 370 und 800 nm, weiter insbesondere zwischen 400 und 800 nm, weiter insbesondere zwischen 450 und 800 nm, weiter insbesondere bei 600 nm, typischerweise eine Transmission von wenigstens 10 %, insbesondere wenigstens 20%, weiter insbesondere wenigstens 30 %, weiter insbesondere wenigstens 40 %, weiter insbesondere wenigstens 50 %, weiter insbesondere wenigstens 60 %, weiter insbesondere wenigstens 70 %, weiter insbesondere wenigstens 80%, weiter insbesondere wenigstens 90 %, weiter insbesondere wenigstens 95 %, weiter insbesondere wenigstens 99 %, im Bereich des eingestrahlten Lichts erster Wellenlänge und/oder im Bereich des eingestrahlten Lichts zweiter Wellenlänge aufweisen kann. Die optische Transmission bezieht sich dabei auf eine optische Pfadlänge entsprechend dem Lambert-Beer'schen Gesetz von 10 mm.

Die Begriffe "Transparenz" und "Transmission" können hierin äquivalent verstanden werden.

Allgemein gilt, dass das Ausgangsmaterial ein nicht-Newtonsches rheologisches Verhalten aufweisen kann. Ein solches rheologisches Verhalten kann die Herstellung eines Objekts bei Belichtung mit mindestens zwei verschiedenen Wellenlängen erleichtern, wobei das Objekt in einer festen Position innerhalb des Arbeitsvolumens verbleibt oder während der Ausbildung nicht oder nur minimal im Arbeitsvolumen bewegt wird. Eine solche minimale Bewegung kann sich auf die Verschiebung des Objekts während der Ausbildung in dem Arbeitsvolumen beziehen, die für eine präzise Herstellung des Objekts akzeptabel ist. Ein solches rheologisches Verhalten kann auch die Trennung des teilweise hergestellten Objekts von dem Arbeitsvolumen bei Anwendung von mechanischen Belastungen erleichtern. Die Viskosität bzw. die scheinbare Viskosität des nicht-Newtonschen Ausgangsmaterial kann bei Einwirkung von mechanischer Belastung bzw. Scherung auf einen niedrigeren Wert (z. B. die konstante Scherviskosität) als den statischen Wert (z. B. Null-Scher-Viskosität oder Fließspannung) sinken, so dass das Ausgangsmaterial leichter (ab)fließen und sich von dem Objekt trennen kann. Beispiele für ein solches nicht-Newtonisches rheologisches Verhalten sind unter anderem pseudoplastisches Verhalten, Bingham-Verhalten, dilatantes (scherverdickendes) Verhalten und strukturviskoses (scherverdünnendes) Verhalten.

Ein nicht-Newtonsches rheologisches Verhalten kann einem Ausgangsmaterial z. B. verliehen werden, indem zusätzlich eine oder mehrere reaktive Komponenten (z. B. Urethanacrylatoligomere, Urethanmethacrylatoligomere, acrylierte oder methacrylierte Polyurethane, acrylierte oder methacrylierte Polyurethanharnstoffe, acrylierte oder methacrylierte Polyester, acrylierte oder methacrylierte Polyamide, acrylat- oder methacrylatfunktionelle Blockcopolymere, alkenyl- oder alkynylfunktionelle Urethanoligomere, alkenyl- oder alkynylfunktionelle Polyurethane, alkenyl- oder alkynylfunktionelle Polyurethanharnstoffe, Alkenyl- oder Alkinyl-funktionelle Polyester, Alkenyl- oder Alkinyl-funktionelle Polyamide, Alkenyl- oder Alkinyl-funktionelle Blockcopolymere, Thiol-funktionelle Urethanoligomere, Thiol-funktionelle Polyurethane, Thiol-funktionelle Polyurethanharnstoffe, Thiol-funktionelle Polyester, Thiol-funktionelle Polyamide, Thiol-funktionelle Blockcopolymere) in der photohärtbaren Ausgangsmaterialkomponente und/oder durch weitere Zugabe eines oder mehrerer nicht-reaktiver Additive (z. B., aber nicht beschränkt auf, ein oder mehrere Thixotrope und/oder Rheologiemodifier) zu dem Ausgangsmaterial. Die Auswahl einer oder mehrerer reaktiver Komponenten und deren Mengen für die Zugabe zu einer photohärtbaren Ausgangsmaterialkomponente, um dem Ausgangsmaterial ein nicht-Newtonsches rheologisches Verhalten zu verleihen, können grundsätzlich frei gewählt werden, um bestimmte rheologische Eigenschaften des Ausgangsmaterials zu erhalten.

Das Ausgangsmaterial kann z. B. eine Viskosität bzw. eine konstante Scherviskosität aufweisen, die beispielsweise weniger als 30.000 mPas, weniger als 20.000 mPas, weniger als 10.000 mPas, weniger als 5.000 mPas oder weniger als 1.000 mPas beträgt. (Die konstante Scherviskosität bezieht sich auf den Plateauwert der Viskosität, der bei unidirektionaler konstanter Scherung erreicht wird, z. B. der Wert der Viskosität nach dem Aufbrechen des thixotropen Netzwerks. Bevorzugte konstante Scherviskositäten sind weniger als 30.000 mPas, bevorzugter weniger als 10.000 mPas und am meisten bevorzugt weniger als 1.000 mPas. Die Viskosität bei konstanter Scherung kann bei Umgebungstemperatur (z. B. Raumtemperatur), Drucktemperatur oder einer anderen Temperatur (z. B. erhöht oder reduziert) gemessen werden. Die Messung bei Drucktemperatur kann bei der Bestimmung der Eignung eines Ausgangsmaterials für das Drucken von Vorteil sein.

Die konstante Scherviskosität kann z. B. unter kontinuierlicher Scherung mit konstanter Geschwindigkeit gemessen werden, z. B. bei Schergeschwindigkeiten von etwa 0,00001 $s^{-1}$ bis etwa 1000 $s^{-1}$).

Wie erwähnt, kann das Ausgangsmaterial wenigstens ein Additiv enthalten. Beispiele für Additive sind, wie erwähnt, ein Füllstoff, ein Thixotrop bzw. ein Rheologiemodifier, ein Entschäumer, ein Stabilisator, ein Sauerstofffänger, ein nicht reaktives Lösungsmittel oder Verdünnungsmittel und ein Farbstoff. Bei jedem Additiv kann es sich um ein einzelnes Additiv oder um ein Gemisch von mehreren Additiven handeln. Ein Thixotrop kann sonach z. B. ein einzelnes Thixotrop oder ein Gemisch aus zwei oder mehr Thixotropen enthalten.

Die Additive können vorzugsweise so ausgewählt werden, dass diese nicht in unerwünschter Weise mit anderen Komponenten oder Zusatzstoffen, die in dem Ausgangsmaterial enthalten sind bzw. sein können, reagieren.

Wie erwähnt, kann ein Additiv ein Füllstoff sein oder wenigstens einen solchen umfassen. Ein Füllstoff kann in einer Menge von mehr als 0 bis etwa 90 Gew.-% enthalten sein, wobei die Menge typischerweise durch den Zweck des Füllstoffs und die gewünschten Endverwendungseigenschaften für das herzustellende Objekt bestimmt wird. Vorteilhafterweise können die Füllstoffe so ausgewählt werden, dass die optischen Eigenschaften, insbesondere die Transparenz bzw. Transmission, des Ausgangsmaterials erhalten bleibt, z. B. indem die Partikelgröße des Füllstoffs so gewählt wird, dass sie wesentlich kleiner als die Anregungswellenlängen ist, oder indem die Brechungsindizes des Füllstoffs und des als Matrix agierenden Ausgangsmaterials aufeinander abgestimmt werden, um unerwünschte Streuungseffekte zu verhindern bzw. zumindest zu reduzieren. Füllstoffe können insbesondere eingesetzt bzw. verwendet werden, um eine oder mehrere Eigenschaften des Ausgangsmaterials bzw. des Objekts zu modifizieren, z. B. hinsichtlich Steifigkeit, Festigkeit, Zähigkeit, Schlagfestigkeit, Kriechfestigkeit, Ermüdungsfestigkeit, mechanische Energierückgabe, mechanischer Verlusttangens, Glasübergangstemperatur, thermische Zersetzungstemperatur, Wärmeleitfähigkeit, thermische Beständigkeit, Feuchtigkeitsaufnahme, elektrische Leitfähigkeit, statische Dissipation, Dielektrizitätskonstante und Verlusttangens, Dichte, Brechungsindex, optische Dispersion, Opazität gegenüber ionisierender Strahlung und Beständigkeit gegenüber ionisierender Strahlung. Füllstoffe können, wie angedeutet, auch eingesetzt bzw. verwendet werden, um die Eigenschaften des Ausgangsmaterials bzw. Objekts zu verändern, z. B. rheologische Eigenschaften wie Viskosität und Thixotropie und optische Eigenschaften wie den Brechungsindex. Beispiele für Füllstoffe sind unter anderem Siliziumdioxid, Aluminiumoxid, Zirkoniumdioxid, Silikatgläser wie Kalknatronglas, Borsilikatglas, Natriumsilikatglas, Bleiglas, Aluminosilikatglas, Bariumglas, Thoriumglas, Glaskeramik, Chalkogenidgläser, Glasmikrokugeln und Mikrobläschen; Nanotone wie Laponit, Montmorillonit, Bentonit, Kaolinit, Hectorit und Halloysit; Calciumphosphatmineralien wie Hydroxylapatit, mineralische Füllstoffe wie Kreide, Gesteinsstaub, Schlackenstaub, Flugasche, hydraulischer Zement, Löss, Kalkstein, Kaolin, Talk und Wollastonit. Beispiele für Partikelgrößenbereiche sind weniger als 10 Mikrometer, weniger als 1 Mikrometer, 10 nm bis 500 nm, 10 nm bis 90 nm, 40 nm bis 70 nm. Kleinere Partikelgrößen, insbesondere Größen unter etwa 100 nm, können von Vorteil sein, um eine hohe optische Transparenz bzw. Transmission des Ausgangsmaterials zu erreichen und das Drucken zu erleichtern. Eine Steuerung der Partikelgrößenverteilung, z. B. monodisperse, bimodale oder trimodale Größenverteilungen, kann vorteilhaft sein, um die rheologischen Eigenschaften zu steuern, den Gewichtsanteil des Füllstoffs zu erhöhen oder die Eigenschaften des Ausgangsmaterials und/oder des Objekts in gewünschter Weise zu beeinflussen.

In einer Ausführungsform kann ein Additiv eine Substanz sein, welche den Brechungsindex der flüssigen oder pastösen Komponenten an den Füllstoff anpasst. Ein Beispiel für eine solche Substanz ist Polyethylengylkol (PEG) oder Derivate davon, insbesondere Polyethylenglykoldiacrylat (PEGDA) oder Derivate davon. Weitere Beispiele für Substanzen zur Anpassung des Brechungsindex umfassen halogenierte, insbesondere iodierte Substanzen. Bei Verwendung einer solchen Substanz lassen sich Füllstoffe mit nicht angepasstem Brechungsindex oder Füllstoffe mit Partikelgrößen über 50 nm verwenden, insbesondere über 100 nm, weiter insbesondere über 500 nm, weiter insbesondere über 1 $\mu$m, weiter insbesondere über 10 $\mu$m, verwenden.

Weitere Beispiele für Additive sind Thixotrope und Rheologiemodifiier. Geeignete Thixotrope bzw. Rheologiemodifiier sind beispielsweise Harnstoffderivate; modifizierte Harnstoffverbindungen wie Rheobyk 410 und Rheobyk-D 410 (erhältlich über BYK-Chemie GmbH), pyrogene Metalloxide (auch als pyrogene Metalloxide bezeichnet), einschließlich, aber nicht beschränkt auf pyrogene Kieselsäure, pyrogene Tonerde; Zirkoniumdioxid; gefällte Metalloxide, einschließlich, aber nicht beschränkt auf gefällte Kieselsäure, gefällte Tonerde; unmodifizierte und organisch modifizierte Schichtsilikat-Tone; Dimer- und Trimerfettsäuren; Polyetherphosphate; oxidierte Polyolefine; hybride oxidierte Polyolefine mit Polyamid; alkalilösliche/quellbare Emulsionen; Celluloseether; hydrophob modifizierte alkalilösliche Emulsionen; hydrophob modifiziertes Urethan auf Ethylenoxidbasis; Saccharosebenzoat; Ester-terminierte Polyamide; tertiäre Amid-terminierte Polyamide; Polyalkylenoxy-terminierte Polyamide; Polyetheramide; Acrylamidomethyl-substituierte Celluloseesterpolymere; Polyethylenimin; Polyharnstoff; Organotone; hydriertes Rizinusöl; organische Basissalze eines Tonminerals (z. g., Montmorillonit) und anderer silikatartiger Materialien; Aluminium-, Calcium- und Zinksalze von Fettsäuren, wie Laurin- oder Stearinsäure.

Thermisch reversible Geliermittel, wie Esterterminierte Polyamide, tertiäre Amid-terminierte Polyamide, Polyalkylenoxy-terminierte Polyamide und Polyetheramide sowie Kombinationen davon sind für die Verwendung als Thixotrope denkbar. Beispiele heirfür sind Crystasense LP1, Crystasense LP2, Crystasense LP3, Crystasense MP, Crystasense HP4, Crystasense HP5,

Rheoptima X17, Rheoptima X24, Rheoptima X38, Rheoptima X58, Rheoptima X73 und Rheoptima X84 (erhältlich über Croda). Crystasense HP-5 ist ein bevorzugtes Beispiel für ein Thixotrop.

Weitere Beispiele sind Metalloxide, insbesondere Metalloxide, die oberflächenbehandelt wurden, um bestimmte Dispergierbarkeitseigenschaften zu verleihen, die mit dem Ausgangsmaterial kompatibel sind.

Ein Thixotrop kann in dem Ausgangsmaterial in einer Menge von beispielsweise etwa 0,05 Gew.-% bis etwa 15 Gew.-%, insbesondere von etwa 0,5 Gew.-% bis etwa 15 Gew.-%, weiter insbesondere von etwa 0,5 Gew.-% bis etwa 10 Gew.-%, weiter insbesondere von etwa 1 bis etwa 10 Gew.-%, enthalten sein. Grundsätzlich ist ein Thixotrop vorzugsweise in einer Menge enthalten, die wirksam ist, um die Bewegung des dreidimensionalen Objekts oder eines oder mehrerer Bereiche davon in dem Ausgangsmaterial während der Herstellung des Objekts einzuschränken. Vorzugsweise ist das Thixotrop in dem Ausgangsmaterial enthalten, die wirksam ist, um die Bewegung des Objekts einzuschränken, das (ohne Kontakt mit einer Behälteroberfläche) während der Bildung im Arbeitsvolumen schwebt. Dabei bleibt die Ausrichtung und/oder Position des Objekts im Arbeitsvolumen während der Herstellung (im Wesentlichen) unverändert.

Ein Beispiel für einen weiter oben erwähnten Defoamer, welcher eingesetzt bzw. verwendet werden kann, um die Beseitigung von Blasen zu unterstützen, die während der Verarbeitung und Handhabung entstehen, ist BYK 1798 (ein Entschäumer auf Silikonbasis) (erhältlich über BYK-Chemie GmbH).

Allgemein gilt ferner, dass das Ausgangsmaterial Wasser enthalten kann. Bei dem Ausgangsmaterial kann es sich demnach um eine wässrige Lösung handeln. Der Anteil an Wasser kann zwischen 5 und 99,9 Gew.-%, insbesondere zwischen 30 und 99,9 Gew.-%, weiter insbesondere zwischen 40 und 99,9 Gew.-%, weiter insbesondere zwischen 50 und 99,9 Gew.-%, weiter insbesondere zwischen 60 und 99,9 Gew.-%, weiter insbesondere zwischen 70 und 99,9 Gew.-%, weiter insbesondere zwischen 80 und 99,9 Gew.-%, weiter insbesondere zwischen 90 und 99,9 Gew.-%, sein. **In** solchen Ausführungsformen können entsprechende Additive, wie z. B. Rheologiemodifier, z. B. in Form von Polyacrylsäure, Gelatine, etc., löslich in Wasser bzw. dem Wasser-Monomer- bzw. Wasser-Oligomer-Gemisch oder mischbar mit Wasser bzw. dem Wasser-Monomer- bzw. Wasser-Oligomer-Gemisch sein. Eine entsprechende Löslichkeit bzw. Mischbarkeit der Additive in bzw. mit Wasser sollte insbesondere in einem Temperaturbereich zwischen 20 und 40°C, insbesondere zwischen 25 und 37°C, alternativ zwischen 20 und 30°C, weiter alternativ zwischen 35 und 40°C, gewährleistet sein.

Entsprechende wässrige Ausgangsmaterialien, insbesondere solche, welche ein oder mehrere in Wasser lösliche und/oder mit Wasser mischbare Additive enthalten, sind in ihrer Zusammensetzung insbesondere so gewählt, dass diese transparent sind. Hierunter ist insbesondere zu verstehen, dass das Ausgangsmaterial auch mit Additiven, insbesondere in einem Wellenlängenbereich zwischen 370 und 800 nm, insbesondere zwischen 400 und 800 nm, weiter insbesondere zwischen 450 und 800 nm eine Transmission von wenigstens 30 %, insbesondere wenigstens 50 %, weiter insbesondere wenigstens 80%, weiter insbesondere wenigstens 90 % im Bereich des eingestrahlten Lichts erster Wellenlänge und/oder im Bereich des eingestrahlten Lichts zweiter Wellenlänge aufweist. Die Transmission bezieht sich dabei auf eine optische Pfadlänge entsprechend dem Lambert-Beer'schen Gesetz von 10 mm. Eine entsprechende Transmission sollte insbesondere in einem Temperaturbereich zwischen 20 und 40°C, insbesondere zwischen 25 und 37°C, alternativ zwischen 20 und 30°C, weiter alternativ zwischen 35 und 40°C, gewährleistet sein.

Entsprechende wässrige Ausgangsmaterialien, insbesondere solche, welche ein oder mehrere in Wasser lösliche und/oder mit Wasser mischbare Additive enthalten, sind in ihrer Zusammensetzung insbesondere so gewählt, dass sie einen pH-Wert im Bereich zwischen 5 und 10, insbesondere zwischen 6 und 9, weiter insbesondere zwischen 7 und 8, weiter insbesondere von 7,4, aufweisen. Derart kann ein unerwünschtes Ausfallen von Additiven und/oder eine unerwünschte Emulsionsbildung verhindert bzw. zumindest reduziert werden. Der pH-Wert kann durch Zugabe eines Puffers, wie z. B. über eine Phosphat-gepufferte Salzlösung, kurz PBS, eingestellt bzw. stabilisiert werden. Ein entsprechender pH-Wert sollte insbesondere in einem Temperaturbereich zwischen 20 und 40°C, insbesondere zwischen 25 und 37°C, alternativ zwischen 20 und 30°C, weiter alternativ zwischen 35 und 40°C, gewährleistet sein.

Allgemein kann es für den Druckprozess vorteilhaft sein, wenn der pH-Wert des Ausgangsmaterials oberhalb 8, insbesondere oberhalb 8,5, weiter insbesondere oberhalb 9, liegt. Durch einen entsprechenden pH-Wert ist ein größeres Druck- bzw. Prozessfenster gegeben. Zudem wirkt sich ein entsprechender pH-Wert typischerweise positiv auf die rheologischen Eigenschaften des Ausgangsmaterials sowie auf die optischen Eigenschaften, insbesondere die Transparenz, des Ausgangsmaterials aus.

Als weiteres denkbares Additiv kann das Ausgangsmaterial einen oder mehrere der folgenden Gelbildner, welcher ebenso als Rheologiemodifier dienen kann, enthalten. Ein Gelbildner kann z. B. ein Polymer, insbesondere ein Polymer mit Carbonsäuren, wie z. B. Polyacrylsäure, oder quervernetzter Polyacrylsäure; oder ein Polyvinylalkohol oder ein Derivat davon; oder ein Polysaccharid oder ein Derivat davon; oder ein Peptid bzw. Protein oder ein Derivat davon, insbesondere gamma-Carrageen; oder Gelatine oder ein Derivat davon, sein. Die Zugabe eines Gelbildners bzw. im Allgemeinen eines Rheologiemodifiers ist bevorzugt, wenn das Ausgangsmaterial ein niederviskoses Monomer bzw. Oligomer enthält. Die Zugabe eines Rheologiemodifiers hat sich als besonders vorteilhat erwiesen, wenn das Ausgangsmaterial ein Polyethylenglykoldiacrylat-Derivat (PEGDA), insbesondere mit einem Anteil von wenigstens 10 Gew.-%, insbesondere wenigstens 20 Gew.-%, weiter insbesondere wenigstens 30 Gew.-%, weiter insbesondere wenigstens 40 Gew.-%, weiter insbesondere wenigstens 50 Gew.-%, weiter insbesondere wenigstens 60 Gew.-%, weiter insbesondere wenigstens 70 Gew.-%, weiter insbesondere wenigstens 80 Gew.-%, weiter insbesondere wenigstens 90 Gew.-%, enthält.

**In** einem Ausführungsbeispiel kann das Licht erster Wellenlänge zunächst in dem ersten Schichtteilvolumen und dann in dem zweiten Schichtteilvolumen mit einer in Bezug auf mindestens einen der folgenden Lichtparameter im Wesentlichen homogenen Verteilung eingestrahlt werden: Lichtintensität und Lichtfarbe. Auf diese Weise kann eine im Wesentlichen homogene Ausleuchtung des jeweiligen Schichtteilvolumens erreicht werden. Alternativ kann vorgesehen sein, dass das Licht erster Wellenlänge zunächst in dem ersten Schichtteilvolumen und dann in dem zweiten Schichtteilvolumen mit einer in Bezug auf mindestens einen der Lichtparameter nicht homogenen Verteilung eingestrahlt wird, wobei sich die inhomogene Verteilung im ersten Schichtteilvolumen von der inhomogenen Verteilung im zweiten Schichtteilvolumen unterschieden kann. Zum Beispiel kann für das Licht erster Wellenlänge ein Gradient für die Lichtintensität über die Breite und / oder die Höhe des Schichtteilvolumens ausgebildet sein.

Das Licht zweiter Wellenlänge kann zunächst auf das erste Schichtteilvolumen und dann auf das zweite Schichtteilvolumen jeweils mit einer in Bezug auf mindestens einen der folgenden Lichtparameter nicht-homogenen Verteilung projiziert werden: Lichtintensität und Lichtfarbe. Während das Licht erster Wellenlänge das jeweilige Schichtteilvolumen möglichst räumlich homogen oder gleichmäßig ausleuchten kann, erfasst das Licht zweiter Wellenlänge das Ausgangsmaterial in dem Schichtteilvolumen nicht homogen, sondern entsprechend der nicht homogenen Lichtverteilung der hierauf gerichteten Lichtprojektion (des Lichts zweiter Wellenlänge), um so die optische Bearbeitung der nicht-homogenen Lichtverteilung (Lichtparameter) entsprechend zu bewirken. Dies ermöglicht die Ausbildung oder die Herstellung einer räumlichen äußeren Kontur. Wahlweise können pro Schichtteilvolumen verschiedene nicht-homogene Lichtverteilungen (unterschiedliche Projektionen) eingestrahlt werden.

Beim Bestrahlen des ersten Schichtteilvolumens und / oder beim Bestrahlen des zweiten Schichtteilvolumens mit dem Licht erster Wellenlänge kann ein Schichtteilvolumen mit einer Schichtdicke von höchstens etwa 1 mm bestrahlt oder erfasst werden. Alternativ kann ein Schichtteilvolumen mit einer Schichtdicke von höchstens etwa 500 µm bestrahlt werden. In einer weiteren alternativen Ausgestaltung kann ein Schichtteilvolumen mit einer Schichtdicke von höchstens etwa 250 µm bestrahlt werden. Eine Mindestschichtdicke für bestrahlte Schichtteilvolumen kann etwa 10 µm betragen.

Aus dem Ausgangsmaterial können (mittels des optischen Bearbeitens) auch eine Mehrzahl optischer Elemente (zumindest teilweise) gebildet werden.

Das Bilden des wenigstens einen optischen Elements kann ein Bilden mindestens eines von einer optischen Linse, einer Linse mit Abbildungsqualität, einer Intraokularlinse, einem Linsenarray, einem Diffusor, einem Prisma, einem optischen Gitter, einem diffraktiven optischen Element und einem Lichtwellenleiter umfassen. Die Intraokularlinse kann insbesondere eine akkommodierende Intraokularlinse sein. Es kann insbesondere ein Bilden einer (funktionalen) Kontaktlinse vorgesehen sein. Mit anderen Worten lassen sich verfahrensgemäß insbesondere eine optische Linse, eine Linse mit Abbildungsqualität, eine Intraokularlinse, insbesondere eine akkommodierende Intraokularlinse, ein Linsenarray, ein Diffusor, ein Prisma, ein optisches Gitter, ein diffraktives optisches Element oder ein Lichtwellenleiter herstellen.

In einer Ausführung kann das optische Element mit einer Transmission von mindestens 10%, insbesondere wenigstens 20%, weiter insbesondere wenigstens 30 %, weiter insbesondere wenigstens 40%, weiter insbesondere wenigstens 50%, weiter insbesondere wenigstens 60%, weiter insbesondere 70%, weiter insbesondere wenigstens 80%, weiter insbesondere wenigstens 90%, in einem Bereich von 300 nm bis 2500 nm gebildet sein, bevorzugt von 380 nm bis 2000 nm, mehr bevorzugt von 400 nm bis 1800 nm, am meisten bevorzugt von 450 nm bis 1600 nm. **In** einer weiteren Ausführung kann das optische Element mit einer Oberflächenrauigkeit (rms) von höchstens 100 nm, bevorzugt höchstens 50 nm, mehr bevorzugt höchstens 30 nm, am meisten bevorzugt höchstens 10 nm gebildet sein. Die Transmission bezieht sich insbesondere auf eine Dicke bzw. Wandstärke des optischen Elements oder eine optische Pfadlänge entsprechend dem Lambert-Beer'schen Gesetz des optischen Elements von 1 mm oder 10 mm. Die kleinsten Einzelstrukturen des optischen Elements können eine Größe von 0,1 µm bis 10 µm aufweisen.

An dieser Stelle ist allgemein anzumerken, dass ein optisches Element im Sinne der Anmeldung jedwedes Element ist, das in einem Wellenlängenbereich von 300 nm bis 2500 nm, bevorzugt von 380 nm bis 2000 nm, mehr bevorzugt von 400 nm bis 1800 nm, am meisten bevorzugt von 450 nm bis 1600 nm, eine Transmission von mindestens 10%, insbesondere wenigstens 20%, weiter insbesondere wenigstens 30 %, weiter insbesondere wenigstens 40%, weiter insbesondere wenigstens 50%, weiter insbesondere wenigstens 60%, weiter insbesondere 70%, weiter insbesondere wenigstens 80%, weiter insbesondere wenigstens 90%, aufweist. Die Transmission bezieht sich typischerweise auf eine Dicke bzw. Wandstärke des optischen Elements oder eine optische Pfadlänge entsprechend

dem Lambert-Beer'schen Gesetz des optischen Elements von 1 mm.

Das optische Element kann gebildet sein, Licht zu formen. Insbesondere kann das optische Element gebildet sein, Licht zu brechen, beugen, reflektieren, streuen, interferieren und/oder polarisieren. Das optische Element kann als mindestens eines von einer sphärischen Linse, einer asphärischen Linse, einer Freiformlinse, einer Fresnel-Linse, einem Linsenarray, einem Diffusor, einem Prisma, einem optischen Gitter, einem diffraktiven optischen Element und einem Lichtwellenleiter gebildet sein.

Das Weiterverarbeiten des Grünlings kann frei von photochemischem Nachhärten und/oder Tempern und/oder weiteren Prozessschritten wie beispielsweise Schleifen, Polieren und/oder Beschichten sein, insbesondere zur Bildung des optischen Elements mit geringer Oberflächenrauigkeit.

Beim Ausgangsmaterial kann mindestens ein Funktionselement bereitgestellt sein, insbesondere vor und / oder während des optischen Bearbeitens. Des Weiteren kann das optische Element zumindest teilweise an das mindestens eine Funktionselement anliegend gebildet sein. Insbesondere kann das optische Element um das mindestens eine Funktionselement herum gebildet sein, vorzugsweise derart, dass das gebildete optische Element das mindestens eine Funktionselement zumindest teilweise (insbesondere vollständig) umschließt.

Das mindestens eine Funktionselement kann zumindest teilweise, insbesondere vollständig, im Ausgangsmaterial und / oder zumindest teilweise an das Ausgangsmaterial anliegend angeordnet sein. Es kann vorgesehen sein, das mindestens eine Funktionselement mittels einer Anordnungsvorrichtung im Ausgangsmaterial anzuordnen.

Das mindestens eine Funktionselement kann mindestens eines von folgenden Elementen aufweisen: ein Aktorelement, ein Sensorelement, ein Energiequellenelement (zur Bereitstellung elektrischer Energie, beispielsweise einer Solarzelle), ein Display, eine Linsenhaltung (Linsenfassung) und ein vorgefertigtes weiteres optisches Element. Ergänzend oder alternativ kann das mindestens eine Funktionselement mindestens ein optisches Bauteil aufweisen, insbesondere mindestens eines von einer oder mehreren Aperturen und optischer Filter.

Das mindestens eine vorgefertigte weitere optische Element kann eine Linse, ein Linsenarray, ein optisches Gitter, ein diffraktives optisches Element oder ein Lichtwellenleiter sein. Das optische Element kann insbesondere an eine Glasfaser und/oder eine Lichtquelle gebunden gebildet sein.

Das mindestens eine Funktionselement kann ein optoelektronisches Bauteil aufweisen, insbesondere mindestens eines von einer Lichtquelle (zum Beispiel ein LED-Chip oder eine Laserdiode) und einem optischen Sensor (zum Beispiel CMOS- oder CCD-Chip).

Das mindestens eine Funktionselement kann mindestens ein elektronisches Bauteil aufweisen, insbesondere mindestens eines von einem elektronischen Schaltkreis, einem resistiven Sensor, einem elektronischen Chip, einer Batterie, einer elektrischen Leitung und einem elektrischen Anschluss.

Das mindestens eine Funktionselement kann mindestens ein Bauteil aufweisen, welches mit Anschlüssen an der Oberfläche versehen ist, sodass bevorzugt ein weiteres elektronisches Funktionselement im Inneren des Bauteils gesteuert werden kann. Das mindestens eine Funktionselement kann mindestens eine Mikropumpe oder einen mechanischen Aktuator aufweisen.

Das mindestens eine Funktionselement kann einen Brechungsindex gleich oder ähnlich dem Ausgangsmaterial aufweisen, insbesondere derart, dass an der Grenzfläche von Funktionselement und Ausgangsmaterial keine Brechung des Lichts erster und/oder zweiter Wellenlänge erfolgt. Das mindestens eine Funktionselement kann einen (Funktionselement-)Brechungsindex aufweisen (und/oder mit einem Funktionselement-)Brechungsindex gebildet sein), der von einem Ausgangsmaterial-Brechungsindex um höchstens 3 %, bevorzugt höchstens 1 %, besonders bevorzugt höchstens 0,3 %, insbesondere bevorzugt höchstens 0,1 % (relativ) abweicht.

Das mindestens eine Funktionselement kann nichtreflektierend sein.

Das Verfahren kann des Weiteren ein Finalisieren des (zumindest teilweise) gebildeten optischen Elements aufweisen. Das Verfahren kann eine Laserbearbeitung und / oder eine mechanische Bearbeitung des optischen Elements aufweisen. Die Laserbearbeitung und / oder die mechanische Bearbeitung des optischen Elements sind denkbare Beispiele für ein Finalisieren des (zumindest teilweise) gebildeten optischen Elements.

Beim optischen Bearbeiten kann das Ausgangsmaterial um das mindestens eine Funktionselement mit Licht erster Wellenlänge und Licht zweiter Wellenlänge von mindestens zwei Seiten, insbesondere zwei verschiedenen Seiten, weiter insbesondere von vier verschiedenen Seiten, bestrahlt werden. Die Bestrahlung von mindestens zwei Seiten, insbesondere zwei Seiten, weiter insbesondere vier Seiten kann simultan oder sukzessive erfolgen. Beispielsweise kann das optische Bearbeiten vom Funktionselement in eine erste Richtung und (simultan oder sukzessive) in eine zweite, von der ersten Richtung verschiedene Richtung erfolgen. Insbesondere kann das Funktionselement zwischen optischem Bearbeiten in die erste Richtung und optischem Bearbeiten in die zweite Richtung relativ zur Lichtquelle / zu Lichtquellen gedreht werden.

Das Bestrahlen kann mittels einander gegenüberliegend angeordneter Lichtquellen (erster Wellenlänge und / oder zweiter Wellenlänge) erfolgen, insbesondere derart, dass das Ausgangsmaterial zwischen

den gegenüberliegend angeordneten Lichtquellen angeordnet ist.

Das Bestrahlen mit Licht erster Wellenlänge und / oder Licht zweiter Wellenlänge kann mittels mehrerer Lichtquellen erfolgen, sodass vorzugsweise das Licht in Schichtteilvolumina eingestrahlt wird, welche zumindest teilweise überlagert sind. Das mindestens eine Funktionselement kann im Ausgangsvolumen derart angeordnet sein, dass es die Strahlwege des Lichtes erster und zweiter Wellenlänge nicht oder geringstmöglich behindert. Insbesondere können mehrere Lichtquellen zur Bereitstellung des Lichts erster und / oder zweiter Wellenlänge verwendet werden, um alle Teilvolumina um das Funktionselement herum zu erreichen.

Alternativ kann das Licht einer Lichtquelle über eine Anordnung von Lichtreflexionselementen, insbesondere Spiegeln, derart in das Ausgangsvolumen eingestrahlt werden, dass alle Teilvolumina um das Funktionselement herum bestrahlt werden können. Wahlweise können nicht-benachbarte Schichteilvolumina nacheinander bestrahlt werden, wobei insbesondere zunächst ein Teil des Ausgangsvolumen in einer Richtung bearbeitet wird und anschließend ein weiterer Teil des Ausgangsvolumens in einer davon verschiedenen Richtung, vorzugsweise der entgegengesetzten Richtung bearbeitet wird. In Fällen, in denen nicht alle Teilvolumina um das Funktionselement bestrahlt werden können, können die beschriebenen Möglichkeiten verwendet werden, um das nicht erreichbare Teilvolumen zu minimieren.

Insbesondere kann das Licht erster Wellenlänge mittels eines Spiegelrings in das Ausgangsmaterial gestrahlt werden, wobei das Ausgangsmaterial innerhalb des Spiegelrings und/oder entlang einer Rotationsachse des Spiegelrings angeordnet ist. Auf diese Weise kann ein kreisförmiger Lichtschnitt für das Licht erster Wellenlänge gebildet werden. Das Licht zweiter Wellenlänge kann orthogonal zum Lichtschnitt in das Ausgangsmaterial gestrahlt werden.

Sowohl ein Lichtschnitt der ersten Wellenlänge als auch das Projektorbild der zweiten Wellenlänge können in einer Ausgestaltung mittels eines (einzigen oder integrierten) Projektionsgeräts erzeugt und dann auf / in das Aufnahmegefäß eingestrahlt werden. Eine Anordnung von Lichtreflexionselementen, insbesondere Spiegeln, kann hierbei vorgesehen sein, um eine Abspaltung des Lichtschnitts aus einer Strahlachse des Projektionsgerätes und die Einstrahlung des Lichtschnitts quer zum Projektionsbild in das Aufnahmegefäß zu bewirken.

In einer Ausführungsform kann das Aufnahmegefäß bewegt werden, um den Lichtschnitt durch das Arbeitsvolumen zu bewegen. Das Projektorbild kann mittels einer variablen Fokusoptik innerhalb des Lichtschnitts scharf abgebildet werden. In einer Ausgestaltung kann die Bewegungsrichtung während des Verfahrens geändert werden, sodass Teile des Arbeitsvolumens in unterschiedlichen Richtungen zur Aushärtung gebracht werden. In einer weiteren Ausgestaltung bleibt das Aufnahmegefäß unbewegt, und der Lichtschnitt wird bewegt, zum Beispiel indem ein Displayelement des Projektionsgerätes, zum Beispiel eine LC- oder ein DM-Display, aufgeteilt wird in einen zentralen Bereich, der das Projektorbild erzeugt, und in zwei seitlich davon gelagerte Bereiche, die den Lichtschnitt erzeugen. Hierzu können Pixel des Displayelements mittels Ansteuerung der optischen Transmission und / oder Reflexion des Displayelements so angesteuert werden, eine seitliche Verschiebung des Lichtschnitts zu realisieren. Hierbei können ein zentraler Bereich des Displayelements mit der ersten Wellenlänge und äußeren Bereiche des Displayelements mit der zweiten Wellenlänge bestrahlt werden.

Es kann vorgesehen sein, Licht (mindestens) einer dritten Wellenlänge auf das zu bearbeitende Material einzustrahlen, wobei die dritte Wellenlänge von der ersten und der zweiten Wellenlänge verschieden ist. Hierbei kann das Licht dritter Wellenlänge zum Beispiel zeitgleich oder zeitlich versetzt zum Einstrahlen des Lichts zweiter / erster Wellenlänge auf ein aktuell bearbeitetes Schichtteilvolumen eingestrahlt werden. Hierzu kann die Projektionseinrichtung oder eine weitere Projektionseinrichtung genutzt werden, um die Lichteinstrahlung wahlweise auf das aktuelle Schichtteilvolumen zu begrenzen. Hierdurch können in dem Arbeitsvolumen des zu bearbeitenden Materials initiierte oder ablaufende chemische / physikalisch Prozesse zur Materialbehandlung (ergänzend) beeinflusst werden, zum Beispiel bei der Nutzung der polychromen Mehrphotonen-Polymerisation.

Nachfolgend werden weitere beispielhafte Ausführungsformen des Verfahrens erläutert:

**In** einer Ausführungsform kann das Ausgangsmaterial, insbesondere nach dem Einfüllen in einen das Arbeitsvolumen definierenden Behälter, für eine gewisse Zeit, insbesondere von wenigstens einer Stunde, insbesondere wenigstens sechs Stunden, weiter insbesondere wenigstens zwölf Stunden, weiter insbesondere wenigstens achtzehn Stunden, weiter insbesondere wenigstens zwanzig Stunden, Ruhen gelassen werden. Ein entsprechendes Ruhen des Ausgangsmaterials kann, wie weiter oben erwähnt, dazu führen, dass sich gewünschte rheologische Eigenschaften des Ausgangsmaterials, d. h. insbesondere eine gewünschte Fließgrenze, einstellt.

**In** einer Ausführungsform kann das Ausgangsmaterial vor dem Bestrahlen, insbesondere vor dem Einfüllen in einen das Arbeitsvolumen definierenden Behälter, wenigstens einem Vorgang zum Entfernen von Verunreinigungen, insbesondere partikulären Verunreinigungen, unterzogen werden, wobei der Vorgang insbesondere ein Filtrieren des Ausgangsmaterials vermittels einer Filtereinrichtung umfasst. Mithin können etwaige, sich negativ auf die optischen Eigenschaften des herzustellenden optischen Elements auswirkende Verunreinigungen entfernt werden, was sich entsprechend positiv auf die Qualität des herzustellenden optischen Elements auswirkt.

**In** einer weiteren Ausführungsform kann das Weiterverarbeiten des Grünlings, sodass aus dem Grünling ein optisches Element zumindest teilweise, insbesondere vollständig, gebildet ist bzw. wird, insbesondere das Nachhärten des Grünlings, unter einer Schutzgasatmosphäre, insbesondere einer Argon-, Kohlenstoffdioxid- oder Stickstoffatmosphäre, durchgeführt wird. Überraschenderweise zeigte sich, dass ein Weiterverarbeiten des Grünlings, insbesondere das Nachhärten des Grünlings, weiter insbesondere das photochemische und/oder thermische Nachhärten des Grünlings, unter einer entsprechenden Schutzgasatmosphäre zu besseren Bauteiloberflächen führt. Konkret können derart z. B. unerwünschte klebrige Bauteiloberflächen vermieden bzw. zumindest reduziert werden.

**In** einer weiteren Ausführungsform kann das Weiterverarbeiten des Grünlings ein photochemisches Nachhärten des Grünlings vermittels wenigstens eines zusätzlichen Photoinitiators umfassen, wobei der zusätzliche Photoinitiator konfiguriert ist, eine ein photochemisches Nachhärten des Grünlings bedingende photochemische Reaktion bei einer von der ersten und der zweiten Wellenlänge verschiedenen Wellenlänge auszuführen. Mithin kann ein photochemisches Nachhärten des Grünlings vorteilhaft mit einem zusätzlichen Photoinitiator durchgeführt werden, welcher bei der ersten und zweiten Wellenlänge keine bzw. eine möglichst geringe Absorption aufweist, sodass sichergestellt ist, dass der zusätzliche Photoinitiator bei der Bestrahlung des Ausgangsmaterials mit dem Licht der ersten und zweiten Wellenlänge nicht bzw. kaum reagiert.

Ein Beispiel für einen entsprechenden zusätzlichen Photoinitiator ist ein alpha-Diketon, insbesondere Campherchinon, bzw. kann ein entsprechender zusätzlicher Photoinitiator wenigstens ein alpha-Diketon, insbesondere Campherchinon, enthalten. Entsprechende zusätzliche Photoinitiatoren haben sich insbesondere dann zweckmäßig erwiesen, wenn die erste Wellenlänge unter 400 nm, insbesondere bei 375 nm, und die zweite Wellenlänge bei 500 nm oder über 500 nm ist.

Allgemein kann ein zusätzlicher Photoinitiator eingesetzt bzw. verwendet werden, der ein Absorptionsmaximum zwischen der ersten und der zweiten Wellenlänge aufweist. Ein Beispiel für einen entsprechenden zusätzlichen Photoinitiator ist ein alpha-Diketon, insbesondere Campherchinon, dessen Absorptionsmaximum bei ca. 470 nm liegt. In einem Ausführungsbeispiel des Verfahrens, bei dem die erste Wellenlänge unterhalb 420 nm und die zweite Wellenlänge oberhalb 500 nm liegt, liegt das Absorptionsmaximum von Campherchinon sonach dazwischen.

Allgemein kann ein zusätzlicher Photoinitiator eingesetzt bzw. verwendet werden, der eine Absorption im Wellenlängenbereich zwischen 400 und 600 nm aufweist. Wie erwähnt, kann das Absorptionsmaximum des zusätzlichen Photoinitiators zwischen der ersten und der zweiten Wellenlänge liegen.

Allgemein kann ein zusätzlicher Photoinitiator eingesetzt bzw. verwendet werden, der bei Bestrahlung mit Licht einer Wellenlänge, die zwischen der ersten und zweiten Wellenlänge liegt, seine optischen Eigenschaften ändert, d. h. insbesondere ausbleicht.

Allgemein kann ein zusätzlicher Photoinitiator eingesetzt bzw. verwendet werden, der bei der ersten und/oder zweiten Wellenlänge einen Extinktinskoeffizienten kleiner 10000 L/mol/cm, insbesondere kleiner 5000 L/mol/cm, weiter insbesondere 1000 L/mol/cm, weiter insbesondere kleiner 500 L/mol/cm, weiter insbesondere kleiner 300 L/mol/cm, weiter insbesondere kleiner 100 L/mol/cm, weiter insbesondere kleiner 50 L/mol/cm, weiter insbesondere kleiner 10 L/mol/cm, weiter insbesondere kleiner 1 L/mol/cm, aufweist.

Ein zusätzlicher Photoinitiator kann sein: ein alpha-Diketon, wie z. B. Diacetyl, 3, 4-Hexandion.

Alternativ oder ergänzend kann ein zusätzlicher Photoinitiator kann sein: ein aromatisches alpha-Diketon, wie z. B. Benzil oder ein Benzilderivat, oder Acenaphthenchinon.

Alternativ oder ergänzend kann ein zusätzlicher Photoinitiator kann sein: ein zyklisches alpha-Diketon, wie z. B. Campherchinon oder 1, 2-Cyclohexandion.

Alternativ oder ergänzend kann ein zusätzlicher Photoinitiator kann sein: ein aliphatisches alpha-Diketon, wie z. B. Campherchinon, Diacetyl oder 3, 4-Hexandion.

Allgemein kann ein zusätzlicher Photoinitiator z. B. in einer bestimmten Konzentration von 0,0001 bis 10 Gew.-%, insbesondere zwischen 0,01 und 2 Gew.-%, weiter insbesondere zwischen 0,1 und 2 Gew.-%, weiter insbesondere zwischen 0,1 und 1 Gew.-%, enthalten sein.

Vorteilhaft ist die Verwendung eines zusätzlichen Photoinitiators, welcher mit sichtbarem Licht, insbesondere Licht in einem Wellenlängenbereich zwischen 400 und 600 nm, vorzugsweise zwischen 420 und 500 nm, bestrahlt werden kann. Da der zusätzliche Photoinitiator, wie erwähnt, insbesondere zwischen der ersten und der zweiten Wellenlänge angeregt werden kann und bei der ersten und der zweiten Wellenlänge kaum Absorption zeigt, beeinträchtigt er die Absorption des Ausgangsmaterials bei der ersten und zweiten Wellenlänge nicht bzw. kaum und es ergibt sich eine hohe Eindringtiefe für die erste und zweite Wellenlänge während der Bildung des Objekts bzw. Grünlings, sodass sich ein möglichst großes Bauvolumen ergibt und unerwünschte Nebenreaktionen mit der ersten bzw. zweiten Wellenlänge verhindert oder zumindest reduziert werden. Zudem kann eine homogene Nachhärtung des Objekts auch im Arbeitsvolumen erreicht werden. Derart können z. B. Risse in der Oberfläche des Objekts verhindert oder zumindest reduziert werden; dies ist nicht der Fall, wenn der zusätzliche Photoinitiator mit Licht einer Wellenlänge unterhalb der ersten Wellenlänge bestrahlt wird.

In einer Ausführungsform kann das Nachbearbeiten, insbesondere Nachhärten, des Objekts, insbesondere bei Einsatz bzw. Verwendung eines entsprechenden zusätzlichen Photoinitiators, ein Bestrahlen des Objekts mit Licht einer Wellenlänge, die zwischen der ersten und zweiten Wellenlänge liegt, umfassen. Derart können, wie erwähnt, z. B. Risse in der Oberfläche des Objekts verhindert oder zumindest reduziert werden; dies ist nicht der Fall, wenn der zusätzliche Photoinitiator mit Licht einer Wellenlänge unterhalb der ersten Wellenlänge bestrahlt wird. Dies kann gegebenenfalls einen eigenständigen Erfindungsaspekt darstellen.

In einer Ausführungsform kann der Grünling mit Licht einer Wellenlänge bestrahlt werden, die zwischen der ersten und zweiten Wellenlänge liegt, wobei die Absorption bei mindestens einer Wellenlänge welche zwischen der ersten und zweiten Wellenlänge liegt, abnimmt. Derart kann die Eindringtiefe für das zur Nachbearbeitung genutzte Licht während der Bestrahlung erhöht werden, wodurch insbesondere der innere Teil des Grünlings effizient nachbearbeitet werden kann, sodass ein homogen gehärtetes optisches Element entsteht. Dies kann gegebenenfalls einen eigenständigen Erfindungsaspekt darstellen.

In einer Ausführungsform kann der Grünling mit Licht einer Wellenlänge bestrahlt werden, die zwischen der ersten und zweiten Wellenlänge liegt, wobei die Absorption im Wellenlängenbereich zwischen der ersten und zweiten Wellenlänge abnimmt. Derart kann die Eindringtiefe für das zur Nachbearbeitung genutzte Licht während der Bestrahlung erhöht werden, wodurch insbesondere der innere Teil des Grünlings effizient nachbearbeitet werden kann, sodass ein homogen gehärtetes optisches Element entsteht. Dies kann gegebenenfalls einen eigenständigen Erfindungsaspekt darstellen.

In einer Ausführungsform kann der Grünling mit Licht einer Wellenlänge bestrahlt werden, die zwischen der ersten und zweiten Wellenlänge liegt, wobei die Absorption bei der Bestrahlwellenlänge, welche zwischen der ersten und zweiten Wellenlänge liegt, abnimmt. Derart kann die Eindringtiefe für das zur Nachbearbeitung genutzte Licht während der Bestrahlung erhöht werden, wodurch insbesondere der innere Teil des Grünlings effizient nachbearbeitet werden kann, sodass ein homogen gehärtetes optisches Element entsteht. Dies kann gegebenenfalls einen eigenständigen Erfindungsaspekt darstellen.

In einer weiteren Ausführungsform kann das Weiterverarbeiten des Grünlings ein Behandeln des Grünlings mit einem Lösungsmittel und/oder einem Monomer, insbesondere zum Waschen des Grünlings, beinhalten, wobei ein Lösungsmittel und/oder ein Monomer mit einer Molmasse größer oder gleich 200 g/mol verwendet wird. Durch die Verwendung eines Lösungsmittels bzw. Monomers mit einer entsprechend hohen Molmasse kann verhindert werden, dass das Lösungsmittel bzw. Monomer in den Grünling eindringt, wodurch dessen Eigenschaften beeinträchtigt werden können.

Ein konkretes Beispiel für ein entsprechendes Lösungsmittel bzw. Monomer ist Tripropylenglykolmonomethylether mit einer entsprechenden Molmasse.

In einer weiteren Ausführungsform kann das Weiterverarbeiten des Grünlings ein Behandeln des Grünlings mit einem Lösungsmittel und/oder einem Monomer, insbesondere zum Waschen des Grünlings, beinhalten, wobei ein leicht flüchtiges Lösungsmittel und/oder ein leicht flüchtiges Monomer verwendet wird. Durch die Verwendung eines leicht flüchtigen Lösungsmittels bzw. Monomers können Trocknungsvorgänge des Grünlings beschleunigt und das Verfahren damit noch effizienter gemacht werden.

Ein konkretes Beispiel für ein entsprechendes Lösungsmittel bzw. Monomer niedermolekularer ist ein Alkohol, wie z. B. Ethanol oder Iso-Propanol.

In einer weiteren Ausführungsform kann ein Ausgangsmaterial verwendet werden, welches frei von anorganischen und/oder organischen Partikeln ist. Insbesondere kann ein Ausgangsmaterial verwendet werden, welches frei von anorganischen und/oder organischen Partikeln mit einem Durchmesser größer 50 $\mu$m ist, verwendet werden. Dies kann sich ebenso positiv auf die Qualität des verfahrensgemäß herzustellenden optischen Elements auswirken, insbesondere deshalb, weil keine Beeinträchtigungen durch anorganischen und/oder organischen Partikel bzw. Nanopartikel möglich sind. Das Ausgangsmaterial kann gleichwohl anorganische und/oder organische Nanopartikel, d. h. insbesondere Partikel mit einem Durchmesser kleiner 50 nm, enthalten, etwa um einen gewünschten Brechungsindex einzustellen. Entsprechende Nanopartikel können z. B. in einer Konzentration zwischen 0,1 und 5 Gew.-%, insbesondere zwischen 0,3 und 2 Gew.-%, weiter insbesondere zwischen 0,5 und 1,5 Gew.-%, vorliegen. Entsprechende Nanopartikel können z. B. $SiO_2$- , $ZrO_2$- und $TiO_2$-Nanopartikel sein.

In einer weiteren Ausführungsform kann ein Ausgangsmaterial verwendet werden, welches ausschließlich organische Bestandteile enthält. Dies kann sich ebenso positiv auf die Qualität des verfahrensgemäß herzustellenden optischen Elements auswirken, insbesondere deshalb, weil keine Beeinträchtigungen durch anorganische Bestandteile möglich sind.

In einer weiteren Ausführungsform kann ein Ausgangsmaterial verwendet werden, welches frei von organischen Polymeren ist. Dies kann sich ebenso positiv auf die Qualität des verfahrensgemäß herzustellenden optischen Elements auswirken, insbesondere deshalb, weil keine Beeinträchtigungen durch organische Polymere möglich sind, welche gegebenenfalls zu unerwünschten polymerisationsbedingten Phasenseparationen führen können.

In einer weiteren Ausführungsform kann das herzustellende optische Element eine eine Haupterstreckungsebene aufweisende flächige geometrische Gestalt aufweisen. Dies gilt z. B. für optische Linsen. In derartigen Ausführungsformen wird die Aufbau- bzw. Druckrichtung des optischen Elements zweckmäßig winklig, insbesondere rechtwinklig, zu der Haupterstreckungsebene gewählt. Derart kann ein sich gegebenenfalls negativ auf die Qualität des herzustellenden optischen Elements auswirkendes Absinken des Grünlings in dem Ausgangsmaterial verhindert bzw. zumindest verlangsamt werden.

Grundsätzlich denkbar ist es für alle Ausführungsformen, dass die Aufbau- bzw. Druckrichtung von oben nach unten, oder umgekehrt, gewählt ist. Die Aufbau- bzw. Druckrichtung kann sonach entlang einer vertikalen Achse ausgerichtet sein.

In einer weiteren Ausführungsform kann die erste Wellenlänge kleiner gleich 400 nm, insbesondere kleiner gleich 375 nm, sein. Alternativ oder ergänzend kann die zweite Wellenlänge 405 nm sein.

**In** einer weiteren Ausführungsform kann das Ausgangsmaterial und/oder der Photoinitiator und/oder ein Co-Initiator frei von Aminverbindungen sein oder weniger als 10 Gew.-%, insbesondere weniger als 5 Gew.-%, weiter insbesondere weniger als 4 Gew.-%, weiter insbesondere weniger als 3 Gew.-%, weiter insbesondere weniger als 2 Gew.-%, weiter insbesondere weniger als 1 Gew.-%, weiter insbesondere weniger als 0,5 Gew.-%, weiter insbesondere weniger als 0,25 Gew.-%, weiter insbesondere weniger als 0,1 Gew.-%, einer oder mehrerer Aminverbindungen aufweisen. Dies kann sich ebenso positiv auf die Qualität des verfahrensgemäß herzustellenden optischen Elements auswirken, insbesondere deshalb, weil unerwünschte Wechselwirkungen entsprechender Aminverbindungen mit dem Ausgangsmaterial vermieden werden können, welche sich gegebenenfalls negativ auf die Bauteilqualität des herzustellenden optischen Elements auswirken. Insbesondere lässt sich derart eine unerwünschte Färbung bzw. Verfärbung, insbesondere eine unerwünschte Vergilbung, des herzustellenden optischen Elements verhindern bzw. zumindest reduzieren.

**In** einer weiteren Ausführungsform kann mindestens eine erste Bestrahlungseinrichtung verwendet werden, die so konfiguriert ist, dass sie Licht der ersten Wellenlänge in das Arbeitsvolumen einstrahlt, um mindestens eine erste Lichtprojektion in dem Arbeitsvolumen zu erzeugen, wobei die mindestens eine erste Lichtprojektion mehrere Lichtstrahlen umfasst, die das Arbeitsvolumen in mindestens einer Lichtebene durchlaufen. Ferner kann mindestens eine Lichtmodulationsvorrichtung verwendet werden, die der mindestens einen ersten Bestrahlungseinrichtung zugeordnet ist, wobei die mindestens eine Lichtmodulationsvorrichtung so konfiguriert ist, dass sie die räumliche Ausdehnungsrichtung von zwei oder mehr Lichtstrahlen der mehreren Strahlen in der mindestens einen Lichtebene so moduliert, dass sich die zwei oder mehr Lichtstrahlen in einer nicht parallelen Anordnung relativ zueinander erstrecken.

Die mindestens eine Lichtmodulationsvorrichtung ist so konfiguriert, dass sie die räumliche Ausdehnungsrichtung von zwei oder mehr Lichtstrahlen der mehreren Strahlen der mindestens einen Lichtebene so moduliert, dass die zwei oder mehr Lichtstrahlen in einer nicht parallelen Anordnung zueinander verlaufen. Die mindestens eine Lichtmodulationsvorrichtung kann so konfiguriert sein, dass sie aktiv und/oder passiv die räumliche Ausdehnungsrichtung und/oder Ausrichtung von zwei oder mehr Lichtstrahlen der mehreren Lichtstrahlen in der mindestens einen Lichtebene so verändert, dass mindestens zwei der mehreren Lichtstrahlen eine nicht-parallele Anordnung zueinander aufweisen. Die nicht-parallele Anordnung der mindestens zwei Lichtstrahlen in der mindestens einen Lichtebene führt typischerweise dazu, dass sich die mindestens zwei Lichtstrahlen an mindestens einem Schnittpunkt innerhalb der mindestens einen Lichtebene kreuzen. Insbesondere werden mehrere Schnittpunkte, an denen sich mindestens zwei Lichtstrahlen kreuzen, an unterschiedlichen Positionen in der mindestens einen Lichtebene erzeugt. Im Gegensatz zu den Lichtebenen herkömmlicher volumetrischer 3D-Druckvorrichtungen, die eine (im Wesentlichen) parallele Anordnung von (kollimierten) Lichtstrahlen ohne sich kreuzende Lichtstrahlen umfassen, ermöglicht die mindestens eine Lichtmodulationsvorrichtung der hier beschriebenen Vorrichtung eine gezielte Änderung der räumlichen Ausdehnungsrichtung und/oder Ausrichtung von mindestens zwei Lichtstrahlen innerhalb der mindestens einen Lichtebene, so dass die mindestens zwei Lichtstrahlen in einer nicht-parallelen Anordnung verlaufen, ermöglicht die mindestens eine Lichtmodulationseinrichtung der hier beschriebenen Vorrichtung eine gezielte Änderung der räumlichen Ausdehnungsrichtung und/oder Orientierung von mindestens zwei Lichtstrahlen innerhalb der mindestens einen Lichtebene, so dass die mindestens zwei Lichtstrahlen in einer nicht parallelen Anordnung zueinander innerhalb der mindestens einen Lichtebene verlaufen, was dazu führt, dass innerhalb der mindestens einen Lichtebene ein oder mehrere Schnittpunkte erzeugt werden, an denen sich zwei oder mehrere Lichtstrahlen kreuzen.

Insbesondere kann die mindestens eine Lichtmodulationseinrichtung dazu ausgebildet sein, die optische Kohärenz von Lichtstrahlen innerhalb der mindestens einen Lichtebene zu beeinflussen, insbesondere zumindest teilweise zu reduzieren, indem die räumliche Erstreckungsrichtung und/oder Orientierung von mindestens zwei Lichtstrahlen gezielt so verändert wird, dass mindestens zwei Lichtstrahlen in einer nicht parallelen Anordnung zueinander verlaufen, was dazu führt, dass sich zwei oder mehr Lichtstrahlen an einem oder mehreren Schnittpunkten innerhalb der mindestens einen Lichtebene kreuzen. Eine Änderung der räumlichen Erstreckungsrichtung und/oder Ausrichtung von mindestens zwei Lichtstrahlen, so dass mindestens zwei Lichtstrahlen in der mindestens einen Lichtebene nicht parallel zueinander verlaufen, führt auch dazu, dass die mindestens eine Lichtebene Lichtstrahlen mit abgewinkelten räumlichen Erstreckungsrichtungen umfasst, während sie das Arbeitsvolumen durchqueren, durchlaufen oder sich ausbreiten. Insbesondere können mindestens zwei Lichtstrahlen das Arbeitsvolumen in einem von 0° verschiedenen Winkel zueinander durchqueren, durchlaufen oder sich ausbreiten. Ein Schnittpunkt von mindestens zwei Lichtstrahlen an einem oder mehreren Schnittpunkten innerhalb der mindestens einen Lichtebene kann auch darin bestehen, dass sich mindestens zwei Lichtstrahlen an dem einen oder mehreren Schnittpunkten überlagern können.

Die mindestens eine Lichtmodulationseinrichtung kann somit dazu ausgebildet sein, zwei oder mehr Lichtstrahlen innerhalb der mindestens einen Lichtebene zu lenken, z.B. durch Beugung und/oder Brechung und/oder Streuung, so dass die mindestens eine Lichtebene nicht parallele und/oder nicht kohärente Lichtstrahlen umfasst. Das Lenken von Lichtstrahlen kann das Verändern der räumlichen Erstreckungsrichtung eines oder mehrerer Lichtstrahlen, insbesondere in Bezug auf eine ursprüngliche räumliche Erstreckungsrichtung, umfassen, so dass die mindestens eine Lichtebene nicht-parallele und/oder nicht-kohärente Lichtstrahlen umfasst. Dies ist genau das gegenteilige Arbeitsprinzip herkömmlicher Lichtblattgeneratoren, die zur Erzeugung von Lichtblättern aus sich nicht überschneidenden kollimierten Lichtstrahlen, d.h. Lichtstrahlen mit paralleler räumlicher Erstreckungsrichtung ohne Überschneidungen, ausgebildet sind. Dies hat zur Folge, dass im Gegensatz zu herkömmlichen Lichtblättern bzw. Lichtschnitte, die im Wesentlichen eine rechteckige Grundform aufweisen, die vertikal durch eine parallele Anordnung von obersten und untersten Lichtstrahlen definiert ist, der mindestens eine Lichtschnitt, der durch die mindestens eine Lichtmodulationseinrichtung modifiziert wird, innerhalb des Arbeitsvolumens eine nicht-rechteckige Grundform, wie z.B. eine Trapezform, aufweisen kann, die vertikal durch nicht-parallele Lichtstrahlen definiert ist.

Insbesondere kann die mindestens eine Lichtmodulationsvorrichtung so konfiguriert werden, dass sie modifizierte Lichtstrahlen mit anderen Eigenschaften als einem Gaußschen Strahl erzeugt. So kann die mindestens eine Lichtmodulationsvorrichtung so konfiguriert sein, dass sie modifizierte Lichtstrahlen erzeugt, die beispielsweise ein nicht-Gaußsches Strahlprofil aufweisen. Beispielsweise kann die mindestens eine Lichtmodulationsvorrichtung so konfiguriert werden, dass sie modifizierte Lichtstrahlen erzeugt, nämlich beispielsweise Airy-Strahlen oder Bessel-Strahlen oder Lichtstrahlen mit einer Charakteristik, die beispielsweise Airy-Strahlen oder Bessel-Strahlen ähnelt.

Experimente haben überraschenderweise gezeigt, dass durch die gezielte Erzeugung von jeweiligen Schnittpunkten, an denen sich zwei oder mehr Lichtstrahlen in der mindestens einen Lichtebene kreuzen, jeweilige unerwünschte Artefakte und damit unerwünschte Eigenschaften, wie (quasi) regelmäßige oder unregelmäßige Streifen- oder Schlierenartefakte, deutlich reduziert werden können, was zu einem optischen Erscheinungsbild des hergestellten Grünlings führt, als wäre es schichtweise aufgebaut, wie es beispielsweise bei der konventionellen additiven Fertigung nach Stereolithographieprinzipien und/oder digitalen Lichtverarbeitungsprinzipien und/oder volumetrischen Druckverfahren wie z. B. Computed axial lithography (CAL) der Fall ist. Die mindestens eine Lichtmodulationseinrichtung wirkt sich somit positiv auf die Eigenschaften der mit der Vorrichtung hergestellten dreidimensionalen Objekte aus.

Die mindestens eine Lichtmodulationsvorrichtung kann ein oder mehrere optische Elemente umfassen, wobei jedes optische Element so konfiguriert ist, dass es die ursprüngliche räumliche Ausdehnungsrichtung eines einfallenden Lichtstrahls ändert, um einen Lichtstrahl zu erzeugen, der eine andere räumliche Ausdehnungsrichtung relativ zur ursprünglichen räumlichen Ausdehnungsrichtung aufweist. Die optischen Elemente können z. B. als optische Linsen, insbesondere Mikrolinsen, und/oder optische Diffusorelemente, insbesondere elliptische Diffusorelemente, ausgebildet sein oder diese umfassen.

Die Lichtmodulationsvorrichtung kann in wenigstens einem translatorischen und/oder rotatorischen Bewegungsfreiheitsgrad, insbesondere relativ zu dem Arbeitsvolumen, bewegbar gelagert sein. Insbesondere kann die Lichtmodulationsvorrichtung in einer gleichförmigen bzw. oszillierenden Bewegung in wenigstens einer Raumrichtung bewegbar gelagert sein. Hierfür kann ein entsprechender, mit der Lichtmodulationsvorrichtung gekoppelter Antrieb, insbesondere nebst zugehöriger Steuerung vorhanden sein.

Grundsätzlich kommen reflektive und/oder diffraktive optische Elemente in Betracht. Es ist denkbar, dass mindestens ein optisches Element der mindestens einen Lichtmodulationsvorrichtung z.B. eine Kombination aus mindestens zwei von: einer oder mehreren jeweiligen optisch durchlässigen Flächen, einer oder mehreren jeweiligen optisch reflektierenden Flächen und/oder einer oder mehreren jeweiligen optisch beugenden Flächen, eine Kombination aus mindestens zwei von optisch durchlässigen Flächen, optisch reflektierenden Flächen und/oder optisch beugenden Flächen umfasst. Entsprechende optisch durchlässige Flächen und/oder optisch reflektierende Flächen und/oder optisch beugende Flächen können beispielsweise durch eine oder mehrere optisch durchlässige Beschichtungen und/oder reflektierende Beschichtungen und/oder optisch beugende Beschichtungen gebildet werden oder diese umfassen.

In einer weiteren Ausführungsform kann mindestens eine Maßnahme zur Veränderung der optischen Eigenschaften des Grünlings durchgeführt werden. Derart kann sichergestellt werden, dass der Grünling die gewünschten optischen Eigenschaften, d. h. insbesondere eine gewünschte Transmission, aufweist.

Die mindestens eine Maßnahme kann vorzugsweise die bzw. eine Veränderung der optischen Eigenschaften des Grünlings umfassen, die zu einer Verringerung der Absorptionseigenschaften des Grünlings bzw. des optischen Elements für mindestens eine Wellenlän-

ge in einem Wellenlängenbereich zwischen 300 nm und 2000 nm, insbesondere zwischen 350 nm und 900 nm, und/oder zu einer Erhöhung der Lichtdurchlässigkeitseigenschaften des Grünlings bzw. des optischen Elements für mindestens eine Wellenlänge in dem Wellenlängenbereich zwischen 300 nm und 2000 nm, insbesondere in dem Wellenlängenbereich zwischen 350 nm und 900 nm, insbesondere in dem Wellenlängenbereich zwischen 400 nm und 800 nm führt.

Die mindestens eine Maßnahme zur Durchführung mindestens einer Maßnahme zur Modifizierung der optischen Eigenschaften des Grünlings kann die Modifizierung der optischen Eigenschaften des Grünlings umfassen, die dazu führt, dass eine mittlere Transmission oder ein Integral der Transmission zwischen 300 nm und 2000 nm, insbesondere zwischen 350 nm und 900 nm, insbesondere zwischen 400 nm und 800 nm, um mindestens 1 %, insbesondere mindestens 2 %, insbesondere mindestens 3 %, insbesondere mindestens 4 %, insbesondere mindestens 5 %, insbesondere mindestens 7,5 %, insbesondere mindestens 10 %, insbesondere mindestens 15 %, insbesondere mindestens 20 %, insbesondere mindestens 25 %, insbesondere mindestens 30 %, insbesondere mindestens 35 %, insbesondere mindestens 40 %, insbesondere mindestens 45 %, insbesondere mindestens 50 %, insbesondere im Vergleich zu einem Zustand des Grünlings, bevor es der mindestens einen Maßnahme unterzogen wurde. Alternativ oder ergänzend kann die mindestens eine Maßnahme der Durchführung mindestens einer Maßnahme zur Veränderung der optischen Eigenschaften des Grünlings die Veränderung der optischen Eigenschaften des Grünlings umfassen, die dazu führt, dass eine mittlere Absorption oder ein Integral der Absorption zwischen 300 nm und 2000 nm, insbesondere zwischen 350 nm und 900 nm, insbesondere zwischen 400 nm und 800 nm, um mindestens 1 %, insbesondere mindestens 2 %, insbesondere mindestens 3 %, insbesondere mindestens 4 %, insbesondere mindestens 5 %, insbesondere mindestens 7,5 %, insbesondere mindestens 10 %, insbesondere mindestens 15 %, insbesondere mindestens 20 %, insbesondere mindestens 25 %, insbesondere mindestens 30 %, insbesondere mindestens 35 %, insbesondere mindestens 40 %, insbesondere mindestens 45 %, insbesondere mindestens 50 %verringert ist, insbesondere gegenüber einem Zustand des Grünlings, bevor es der mindestens einen Maßnahme unterzogen wurde.

Unter einem optischen Element kann daher im Allgemeinen jedwedes Element verstanden werden, welches eine durchschnittliche oder integrierte Absorption pro mm Dicke des Elements für jede Wellenlänge im Wellenlängenbereich zwischen 300 nm und 2000 nm, insbesondere zwischen 400 nm und 900 nm, weiter insbesondere zwischen 500 nm und 850 nm, weiter insbesondere zwischen 600 nm und 800 nm, weiter insbesondere zwischen 650 nm und 750 nm, von weniger als 0,5, insbesondere von weniger als 0,3, insbesondere von weniger als 0,2, insbesondere von weniger als 0,1, aufweist.

Die mindestens eine Maßnahme kann die Veränderung der optischen Eigenschaften des Grünlings umfassen, die zu einer durchschnittlichen oder integrierten Absorption pro mm Dicke des Grünlings von weniger als 0,5, insbesondere weniger als 0,3, noch spezieller weniger als 0,2, noch spezieller weniger als 0,1, in einem Wellenlängenbereich zwischen 300 nm und 2000 nm, insbesondere 350 nm und 900 nm, noch spezieller zwischen 400 nm und 800 nm führt. Insbesondere kann die durchschnittliche oder integrierte Absorption pro mm Dicke des Grünlings für jede Wellenlänge im Wellenlängenbereich zwischen 300 nm und 2000 nm, insbesondere zwischen 350 nm und 900 nm, insbesondere zwischen 400 nm und 800 nm, weniger als 0,5, insbesondere weniger als 0,3, insbesondere weniger als 0,2, insbesondere weniger als 0,1 betragen.

Insbesondere kann die durchschnittliche oder integrierte Absorption pro mm Dicke des optischen Elements für jede Wellenlänge im Wellenlängenbereich zwischen 300 nm und 2000 nm, insbesondere zwischen 350 nm und 900 nm, insbesondere zwischen 400 nm und 800 nm, weniger als 0,5, insbesondere weniger als 0,3, insbesondere weniger als 0,2, insbesondere weniger als 0,1 betragen.

Die mindestens eine Maßnahme kann z. B. eine thermische Behandlung des Grünlings und/oder eine optische Behandlung des Grünlings, insbesondere durch Bestrahlen des Grünlings mit elektromagnetischer Strahlung, und/oder eine chemische Behandlung des Grünlings umfassen.

Die thermische Behandlung kann ein Auslagern des Grünlings bei einer Temperatur zwischen 50 und 150°C, insbesondere zwischen 75 und 125°C, insbesondere für eine Dauer zwischen 1 und 24h min, weiter insbesondere zwischen 1 und 20h, weiter insbesondere zwischen 1 und 16h, weiter insbesondere zwischen 1 und 12h, weiter insbesondere zwischen 1 und 8h, weiter insbesondere zwischen 1 und 4h, weiter insbesondere zwischen 1 und 30min, beinhalten.

Die optische Behandlung kann ein Bestrahlen des Grünlings mit elektromagnetischer Strahlung einer Wellenlänge zwischen 350 nm und 1000 nm, insbesondere zwischen 400 nm und 800 nm, weiter insbesondere zwischen 350 nm und 500 nm oder zwischen 420 nm und 800 nm, insbesondere für eine Dauer zwischen 0,5 und 180 min, zwischen 5 und 60 min, beinhalten.

Die optische Behandlung des Grünlings kann in dem Arbeitsvolumen oder nach Entnahme des Grünlings aus dem Arbeitsvolumen erfolgen.

Das dreidimensionale Objekt kann nachfolgend einer optischen Behandlung einer Temperung unterzogen werden, wobei die Temperierung insbesondere das Erhitzen des Grünlings auf eine Temperatur im Bereich zwischen 50°C und 150°C für eine Zeit im Bereich zwischen 1 min und 60 min, insbesondere 5 min und 30 min, umfassen kann.

Die chemische Behandlung kann z. B. die chemische Veränderung, insbesondere durch Oxidation und/oder Reduktion der Chromophormoleküle, insbesondere der restlichen Photoinitiatormoleküle, des Grünlings umfassen, wobei die Moleküle eine (sichtbare) Farbe im sichtbaren Wellenlängenspektrum zwischen 380 nm und 750 Nanometern aufweisen, mit mindestens einem chemischen Modifizierungsmittel, z. B. einem Oxidations- oder Reduktionsmittel.

Konkret kann das mindestens eine chemische Modifizierungsmittel eine Substanz auf Chlorbasis, insbesondere Chlor, Hypochlorit, Chlordioxid, oder eine Substanz auf Sauerstoffbasis, insbesondere Ozon, Sauerstoff, Peroxid, Perborat, Percarbonat, Peressigsäure, oder Chlor oder eine Chlorverbindung sein oder umfassen.

Das mindestens eine chemische Modifizierungsmittel kann dem photopolymerisierten Material nach der Bildung des Grünlings zugesetzt werden, indem das dreidimensionale Objekt für eine bestimmte Zeit in eine Lösung, insbesondere eine organische Lösung, verbracht wird, die das mindestens eine chemische Modifizierungsmittel enthält, wobei das mindestens eine chemische Modifizierungsmittel aus der Lösung in das dreidimensionale Objekt migriert und gegebenenfalls restlicher Co-Initiator und/oder Photoinitiator aus dem dreidimensionalen Objekt in die Lösung migriert.

Das mindestens eine chemische Modifizierungsmittel kann so konfiguriert sein, dass es die Chromophoreigenschaften der ursprünglichen Chromophormoleküle, insbesondere der restlichen Photoinitiatormoleküle, des photopolymerisierbaren Materials (Ausgangsmaterial) und/oder der aus dem Photopolymerisationsprozess resultierenden Chromophore des Grünlings verändert, oder das mindestens eine chemische Modifizierungsmittel so konfiguriert ist, dass es ein reaktives Mittel erzeugt, das so konfiguriert ist, dass es die Chromophoreigenschaften der Chromophormoleküle, insbesondere der restlichen Photoinitiatormoleküle, des Grünlings unter dem Einfluss von elektromagnetischer Energie, insbesondere Wärmeenergie und/oder Strahlungsenergie, verändert.

Für alle Ausführungsformen gilt, dass das optische Bearbeiten des Ausgangsmaterials auch durch wenigstens einen kombinierten Lichtschnitt erfolgen kann. Ein entsprechender kombinierter Lichtschnitt kann z. B. wie folgt erzeugt werden: es wird ein erster Lichtschnitt erzeugt, welcher sich entlang einer Erstreckungsachse durch das Ausgangsmaterial erstreckt, und ein zweiter Lichtschnitt erzeugt, in dem der aus dem Ausgangsmaterial austretende erste Lichtschnitt durch wenigstens ein Reflexionselement reflektiert wird und der so erzeugte reflektierte Lichtschnitt sich (im Wesentlichen) entlang der Erstreckungsachse des ersten Lichtschnitts wiederum durch das Ausgangsmaterial erstreckt. Grundsätzlich kann jeder hierin beschriebene Lichtschnitt ein entsprechender kombinierter Lichtschnitt sein. Ebenso ist es denkbar, dass mehrere kombinierte Lichtschnitte verwendet werden, welche sich von wenigstens zwei, insbesondere wenigstens drei, weiter insbesondere wenigstens vier, unterschiedlichen Seiten durch das Arbeitsvolumen erstrecken. Die Erstreckungsachsen jeweiliger kombinierter Lichtschnitte können in einem beliebigen Winkel, d. h. z. B. in einem Winkel von ca. 90°, zueinander ausgerichtet sein.

Ein entsprechendes Reflexionselement kann z. B. sein oder umfassen: wenigstens einen planen Spiegel, wenigstens einen ein- oder mehrfach gekrümmten Spiegel, wie z. B. einen doppelt konkaven Spiegel, wenigstens eine plankonvexe Zylinderlinse, wenigstens eine plankonkave Zylinderlinse, etc. Kombinationen wenigstens zweier gleicher oder verschiedener der vorgenannten Reflexionselemente sind denkbar.

## Beschreibung von Ausführungsbeispielen

**Im** Folgenden werden weitere Ausführungsbeispiele unter Bezugnahme auf Figuren einer Zeichnung näher erläutert. Hierbei zeigen:

Fig. 1 eine schematische Darstellung einer Vorrichtung zum Bearbeiten eines optisch reaktiven Materials von oben;

Fig. 2 eine schematische Darstellung der Vorrichtung aus Fig. 1 von der Seite;

Fig. 3a bis 3c eine schematische Darstellungen einer Anordnung zum optischen Bearbeiten eines Ausgangsmaterials in einem Aufnahmegefäß;

Fig. 4 eine schematische Darstellung einer weiteren Anordnung zum optischen Bearbeiten eines Ausgangsmaterials in einem Aufnahmegefäß;

Fig. 5 eine schematische Darstellung einer anderen Anordnung zum optischen Bearbeiten eines Ausgangsmaterials in einem Aufnahmegefäß mittels eines Projektionsgeräts;

Fig. 6 eine schematische Darstellung einer weiteren Anordnung zum optischen Bearbeiten eines Ausgangsmaterials in einem Aufnahmegefäß;

Fig. 7 eine schematische Teildarstellung der Anordnung aus Fig. 6;

Fig. 8a eine schematische Darstellung einer weiteren Anordnung zum optischen Bearbeiten eines Ausgangsmaterials mittels eines Spiegelrings in einer Draufsicht und

Fig. 8b eine schematische Darstellung der weiteren Anordnung in einer Seitenansicht.

Fig. 1 und 2 zeigen eine schematische Darstellung einer Anordnung für eine Vorrichtung zum optischen Bearbeiten eines optisch reaktiven Materials von oben und von der Seite. **In** einem Aufnahmegefäß 1 ist ein Arbeitsvolumen 2 bereitgestellt, welches wenigstens teilweise von einem Ausgangsmaterial 3 ausgefüllt ist. Das Ausgangsmaterial 3 kann ein oder mehrere Stoffe umfassen, die fest, flüssig oder pastös sein können. Zum Bearbeiten wird das Ausgangsmaterial 3 mit Licht einer ersten Wellenlänge und Licht einer zweiten Wellenlänge

bestrahlt, die in dem Arbeitsvolumen 2 zum Auslösen einer optisch aktivierten Reaktion in einem Schichtteilvolumen 4 überlappend eingestrahlt werden.

Das Licht erster Wellenlänge wird mit Hilfe einer ersten Lichtquelle 5 bereitgestellt, die bei der gezeigten Ausführungsform beispielhaft als ein Lichtschnittgenerator ausgeführt ist. Beim Bearbeiten des Ausgangsmaterials 3 wird ein Einstrahlbereich 6 für das Licht erster Wellenlänge (Lichtschnitt), welcher bei der gezeigten Ausführungsform tailliert ist, Stück für Stück über das Arbeitsvolumen 2 bewegt, so dass eine schichtweise Bearbeitung des Ausgangsmaterials 3 stattfindet. Es werden also Schichtteilvolumen des zuvor mit dem Ausgangsmaterial 3 befüllten Arbeitsvolumens 2 (schichtförmige Teilvolumen des Arbeitsvolumens 2) nacheinander bestrahlt, insbesondere einander nicht überlappende Schichtteilvolumen.

In Abhängigkeit von der aktuellen Position des Einstrahlbereichs 6 (Lichtschnitt) wird das Licht zweiter Wellenlänge mit Hilfe eines Projektors 7 in das aktuell mit dem Licht erster Wellenlänge bestrahlte Schichtteilvolumen projiziert (Projektor- oder Projektionsbild). Dieses bedeutet, dass die Projektionsebene oder das Projektionsvolumen des Projektors 7 in dem Schichtteilvolumen liegen, welches gerade mit dem Licht erster Wellenlänge bestrahlt wird. Das Licht erster Wellenlänge (Lichtschnitt) und das Licht zweiter Wellenlänge (Lichtprojektion) überlappen so räumlich oder in einer Projektionsebene des Projektors 7 flächig in einem makroskopischen Schichtteilvolumen des Ausgangsmaterials 3, welches als Teilvolumen des Arbeitsvolumens 2 gerade mittels des Lichtschnitts bestrahlt wird.

Auf diese Weise wird in dem aktuell bestrahlten schichtförmigen Teilvolumen wenigstens eine Materialeigenschaft des Ausgangsmaterials 3 verändert, beispielsweise dahingehend, dass das ursprüngliche Ausgangsmaterial aushärtet. Hierbei kann aufgrund des Zusammentreffens des Lichts der beiden Wellenlängen eine Polymerisation im Ausgangsmaterial 3 ausgelöst werden. Auf diese Weise ist es beispielsweise ermöglicht, einen dreidimensional geformten Körper Schicht für Schicht in dem Arbeitsvolumen 2 herzustellen. Die dreidimensionale Formung des Körpers wird hierbei mit Hilfe der in das jeweilige Schichtvolumen abgebildeten Projektion des Projektors 7 beeinflusst und bestimmt.

Das Verfahren erlaubt eine Anpassung an unterschiedliche Volumina des Ausgangsmaterials 3. Ferner erlaubt es eine Optimierung zwischen Auflösung und Geschwindigkeit der Prozessierung.

Ein nicht limitierendes Beispiel für die Herstellung eines optischen Elements ist im Folgenden gegeben: Urethandimethacrylat (Genomer 4247, 350 g), Ditrimethylolpropanetetraacrylat (Miramer M410, 49 g), Hexandioldiacrylat (Miramer M200, 4 g), N-Methyldiethanolamin (4 g) und Dual-Color-Fotoinitiator 1 (50 mg) werden homogen gemischt. Die optische Transmission des so entstandenen Harzes wurde mittels eines Cary 50 UVVis Spektrophotometers (Varian Inc.) bei einer optischen Pfadlänge von 10 mm zu 69 % bei $\lambda 1$ = 375 nm sowie zu >99 % bei $\lambda 2$ = 450-800 nm bestimmt. Das so entstandene Harz wird in eine Küvette überführt, welche nach den beschriebenen Verfahren optisch bearbeitet wird. Das ausgehärtete Objekt wird aus dem überschüssigen Ausgangsmaterial entnommen und mehrfach mit Isopropanol oder anderen Alkoholen gewaschen. Das Objekt kann nachgehärtet werden, indem es in einer Lösung aus Isopropylthioxanthon (ITX) in Ethanol platziert wird. Das Objekt wird der Lösung entnommen, an Luft getrocknet und mittels UV-Bestrahlung (365 nm) gehärtet. Das optische Element zeigt bei einer Dicke von 1 mm eine optische Transmission >90% bei 450 - 1600 nm und weist eine Oberflächenrauigkeit <0,04 $\mu$m ($R_a$ gemessen gemäß ISO 4288:199) auf.

Der Dual-Color-Fotoinitiator 1 hat folgende Struktur:

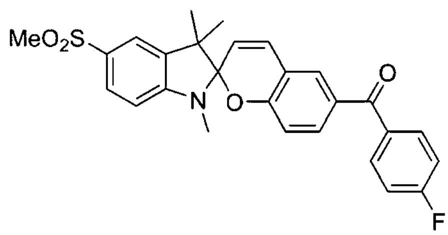

Ein weiteres nicht limitierendes Beispiel für die Herstellung eines optischen Elements ist im Folgenden gegeben: Urethandimethacrylat (Genomer 4247, 120 g), Tricyclo[5.2.1.02,6]decandimethanoldiacrylat (Sartomer SR833S, 22,5 g), N-Methyldiethanolamin (7,5 g), RHEOBYK-7420CA (BYK-Chemie GmbH, 5,2 g), 2,6-Di-tert-butyl-4-Methylphenol (BHT, 0,15 g), Campherchinon (0,15 g) und Dual-Color-Fotoinitiator 2 (60 mg), werden homogen gemischt. Die optische Transmission des so entstandenen Harzes wurde mittels eines Cary 50 UVVis Spektrophotometers (Varian Inc.) bei einer optischen Pfadlänge von 10 mm zu 69 % bei $\lambda 1$ = 375 nm sowie zu >99 % bei $\lambda 2$ = 450-800 nm bestimmt. Das so entstandene Harz weist nicht-Newtonsche Fließeigenschaften auf. Die Fließgrenze des so entstandenen Harzes wurde nach 24 h Ruhezeit mittels Rotationsrheometrie (Netzsch Kinexus Prime lab+ Rotationsrheometer, 20 mm Platte-Platte Geometrie, Schubspannungsrampe: $d\sigma/dt$ = 0.05 Pa/min, 25°C) zu $\sigma$ = 0,8 Pa bestimmt. Das so entstandene Harz wird in einen Behälter in Form einer Küvette überführt, welche nach den beschriebenen Verfahren optisch bearbeitet wird. Das ausgehärtete Objekt wird aus dem überschüssigen Ausgangsmaterial entnommen und mehrfach mit Tripropylenglykolmonomethylether und anschließend Isopropanol gewaschen. Das Objekt wird im Anschluss der jeweiligen Waschlösung entnommen, an Luft getrocknet und mittels Bestrahlung mit blauem Licht (450 nm) nachbearbeitet, insbesondere um es zu härten. Das optische Element zeigt bei einer Dicke von 1 mm eine optische Transmission >90% bei 400 - 1600 nm und weist eine Ober-

flächenrauigkeit <0,04 µm ($R_a$ gemessen gemäß ISO 4288:199) auf.

Der Dual-Color-Fotoinitiator 2 hat folgende Struktur:

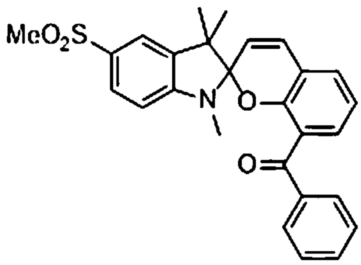

Bei der Verwendung von idealen Dual-Color-Fotoinitiatoren im Ausgangsmaterial 3 erfolgt die Anregung des aktiven Zustands C nur bei Absorption beider Wellenlängen $\lambda_1$ und $\lambda_2$ (erste und zweite Wellenlänge). Für nicht ideale Fotoinitiatoren kann ein Übergang vom Zwischenzustand B in den aktiven Zustand C auch durch Absorption der Wellenlänge $\lambda_1$ erfolgen. In **Konsequenz** werden Fotoinitiatoren nicht nur am Kreuzungspunkt beider Wellenlängen, sondern auch entlang des gesamten Lichtstrahls der Wellenlänge $\lambda_1$ in den Zustand C überführt. Da es vom aktiven Zustand C des Fotoinitiators keinen Rückweg in den Grundzustand A gibt, akkumuliert sich bei der Prozessierung mehrerer gewünschter Zielpunkte, eine erhebliche Menge Initiatoren im aktiven Zustand C in ungewünschten Gebieten. Die Vorrichtung erlaubt es, im Überlappungsbereich der Lichtstrahlen eine ausreichende Initiatorkonzentration im aktiven Zustand C für die Polymerisation des Ausgangsmaterials zu erzeugen, bei gleichzeitiger Minimierung der generierten Konzentration an Initiator-Molekülen im aktiven Zustand C entlang des Lichtstrahls erster Wellenlänge $\lambda_1$. Ferner ermöglicht es die Vorrichtung, die Akkumulierung von Fotoinitiatoren im aktiven Zustand C in ungewünschten Bereichen des Volumens verursacht durch die Lichtüberlagerung für viele aufeinanderfolgende Zielpunkte zu minimieren.

Zeigt der Grundzustand A eine Absorptionsbande bei der zweiten Wellenlänge $\lambda_2$, kann der Fotoinitiator durch Licht der Wellenlänge $\lambda_2$ in den Zwischenzustand B und folgend in den aktiven Zustand C überführt werden. In Konsequenz werden Fotoinitiatoren nicht nur am Überlappungsbereich beider Wellenlängen, sondern auch entlang des gesamten Lichtstrahls der Wellenlänge $\lambda_2$ in den Zustand C überführt. Da es vom aktiven Zustand C des Fotoinitiators keinen Rückweg in den Grundzustand A gibt, akkumuliert sich bei der Prozessierung mehrerer gewünschter Zielpunkte, eine erhebliche Menge Initiatoren im aktiven Zustand C in ungewünschten Gebieten. Die Vorrichtung ermöglicht es, im Überlappungsbereich der Lichtstrahlen eine ausreichende Initiatorkonzentration im aktiven Zustand C für die gewünschte Modifikation des Ausgangsmaterials 3 zu erzeugen, bei gleichzeitiger Minimierung der generierten Konzentration von Initiator-Molekülen im aktiven Zustand C entlang des Lichtstrahls der Wellenlänge $\lambda_2$. Ferner soll die Vorrichtung ermöglichen, die Akkumulierung von Fotoinitiatoren im aktiven Zustand C in ungewünschten Bereichen des Volumens, verursacht durch die Lichtüberlagerung für viele aufeinanderfolgende Zielpunkte, zu minimieren.

Die Vorrichtung und das Verfahren können mit anderen Techniken kombiniert werden, welche die unerwünschte Aushärtung durch Akkumulation von Fotoinitiatoren im aktiven Zustand C begrenzen. In einem Beispiel kann die Sauerstoffkonzentration im Ausgangsmaterial eingestellt werden, um den Schwellwert, ab welchem es zum Aushärten des Materials kommt, zu variieren. In einem weiteren Beispiel kann ein Inhibitor zum Ausgangsmaterial zugefügt werden, um den Schwellwert, ab welchem es zum Aushärten des Materials kommt, zu variieren.

Nachfolgend werden weitere Aspekte der Vorrichtung zum optischen Bearbeiten des Ausgangsmaterials 3 erläutert.

Das Ausgangsmaterial 3 kann in einem transparenten Gefäß (Aufnahmegefäß 1) mit mindestens zwei optisch planen Eintrittsfenstern aufgenommen sein, welches das Ausgangsmaterial 3 mit den zugesetzten Dual-Color-Fotoinitiator-Molekülen oder anderen optisch aktiven Molekülen und gegebenenfalls weitere Additive wie Co-Initiatoren aufnimmt. Die als Lichtgenerator mit Abbildungsoptik ausgeführte Lichtquelle 5 erzeugt einen Lichtschnitt der Wellenlänge $\lambda_1$, welches durch ein Fenster des Aufnahmegefäßes 1 in das Arbeitsvolumen 2 eingestrahlt wird. Der Projektor 7 mit einer Leuchtquelle der Wellenlänge $\lambda_2$ erzeugt ein Bild, welches über ein Objektiv innerhalb des Lichtschnitts in dem Aufnahmegefäß 1 scharf abgebildet wird.

Durch die Brechung des eingestrahlten Lichts zweiter Wellenlänge an den Übergängen zwischen Luft und dem Aufnahmegefäß 1 und zwischen dem Aufnahmegefäß 1 und dem Ausgangsmaterial 3 kann sich eine Verschiebung der Fokusebene des projizierten Bildes (Licht zweiter Wellenlänge) im Vergleich zur optischen Abbildung ohne Aufnahmegefäß 1 ergeben. Bei großen Arbeitsvolumina des Aufnahmegefäßes 1 kann die Schärfetiefe des fokussierten Projektorbildes nicht ausreichend sein. In diesem Zusammenhang kann dann während der Bewegung des Lichtschnitts durch das Arbeitsvolumen 2 kontinuierlich eine Fokuskorrektur erfolgen.

Für Anwendungen im Bereich des 3D-Drucks kann der Brechungsindex des Ausgangsmaterials 3 ähnlich dem Material des Aufnahmegefäßes 1 sein. In diesem Fall führt nur der Übergang Luft mit Brechungsindex $n_1$ und Aufnahmegefäß 1 mit Brechungsindex $n_2$ zu einer Verschiebung der Fokusebene um den Betrag $\Delta s$ gegeben durch:

$$\Delta s = d \cdot \left(\frac{n_2}{n_1} - 1\right)$$

Mit zunehmendem Abstand d der Position des Lichtschnitts (Licht erster Wellenlänge) von einem Eintrittsfenster des Aufnahmegefäßes 1, wo das Projektorbild eintritt, nimmt die Fokusverschiebung gemäß der obigen Gleichung zu. Die Gleichung betrifft einen paraxialen, optischen Strahlengang beziehungsweise größere Abstände zwischen Projektor 7 und Aufnahmegefäß 1. Je nach Ausgestaltung, kann eine Kompensation der Verschiebung mittels einer motorisierten Fokusverstellung des fest montierten Projektors 7 oder mittels einer motorisierten Positionierung des gesamten Projektors 7 relativ zur Lichtschnittposition erfolgen. Im letztgenannten Beispiel ergibt sich eine gleichförmige, lineare Relativbewegung des Projektors 7 zum festen Lichtschnitt während der gleichförmigen Bewegung des Aufnahmegefäßes 1 durch den Lichtschnitt (Schichtteilvolumen) zur Prozessierung des gesamten Arbeitsvolumens 2.

Alternativ zu dem in Fig. 1 veranschaulichten Aufbau, kann das Projektorbild auch durch den Boden oder den Deckel des Aufnahmegefäßes 1 in das Arbeitsvolumen 2 eintreten, und der Lichtschnitt kann senkrecht hierzu durch eine oder mehrere der Seitenfenster eingekoppelt werden.

Alternativ kann der Lichtschnittgenerator 5 die Wellenlänge $\lambda_2$ erzeugen, und der Projektor 7 erzeugt die Wellenlänge $\lambda_1$.

Sofern der Übergang vom Zwischenzustand B in den Ausgangszustand A mit Licht der Wellenlänge $\lambda_3$ erfolgen soll, erzeugt der Projektor 7 die Wellenlängen $\lambda_1$ und $\lambda_3$ oder die Wellenlängen $\lambda_2$ und $\lambda_3$, jeweils komplementär zur Wellenlänge des Lichtschnittgenerators.

Ein oder mehrere Lichtdetektoren 8a, 8b (Kamera oder einfacher Fotodetektor; vgl. Fig. 1 und 2) können benutzt werden, um die Vorgänge bei der Prozessierung zu untersuchen, indem das transmittierte Licht der Anregung des Lichtschnitts und gegebenenfalls des Projektors 7 gemessen wird. Hierbei können der Lichtschnittgenerator 5 und gegebenenfalls auch der Projektor 7 weitere Lichtwellenlängen emittieren, die von den Anregungswellenlängen verschieden sind und nur der Beobachtung der Änderung der Materialeigenschaft des Ausgangsmaterials 3 dienen, zum Beispiel der Polymerisation.

Weiterhin kann eine Messung der emittierten Fluoreszenz von im Ausgangsmaterial 3 befindlichen, angeregten Fotoinitiatoren vorgesehen sein. Es können zum Beispiel die Intensität des gesamten transmittierten oder emittierten Lichts über einen Einzelphotodetektor gemessen und / oder die ortsaufgelöste Intensität über eine Kamera aufgezeichnet werden. Die Detektoren können über vorgesetzte Filter oder Spektrographen selektiv nur bestimmte Lichtwellenlängen des Projektors 7, des Lichtschnittgenerators 5 oder der Licht emittierenden, angeregten Fotoinitiatoren messen.

Die Auswertung der gesamten oder ortsaufgelösten Intensitäten kann eine Regelschleife steuern, welche die Intensität des Lichtschnittgenerators, die Intensität und Bildausgabe des Projektors, die Zeitsteuerung der Belichtungssequenz sowie die Verschiebung des Lichtschnitts innerhalb des Aufnahmegefäßes 1 beeinflusst. Hierfür ist eine Steuereinrichtung 9 vorgesehen, die gemäß Fig. 1 an die Lichtquelle 5 und den Projektor 7 koppelt.

Als Lichtquelle 5 kann eine Laserlichtquelle genutzt werden, zum Beispiel ein pulsbarer Single-Mode-Diodenlaser (Fabrikat: IBEAM SMART, Toptica Photonics AG, DE) mit einer Wellenlänge von 375nm und einer Ausgangsleistung im Dauerstrichbetrieb von max. 70mW, der Laserstrahldurchmesser beträgt 1.3mm (@ $1/e^2$). Eine asphärische POWELL Linse (Auffächerungswinkel $30^0$, N-BK7, Edmund Optics GmbH, DE) dient zur Umformung des Laserstrahls in eine divergierende Laserlinie. Eine direkt dahinter angeordnete plankonvexe Zylinderlinse mit langer Brennweite (f = 300.00 mm, N-BK7, Thorlabs GmbH, DE) und senkrechter Orientierung zur Auffächerungsebene generiert in einem Ausführungsbeispiel eine Strahltaille mit einem Durchmesser von etwa d=100$\mu$m an der Position des Gefäßes mit dem Ausgangsmaterial im Abstand von 30cm von dieser Linse. Eine plankonvexe Zylinderlinse (f = 150.00 mm, N-BK7, Thorlabs GmbH, DE) im Abstand der einfachen Brennweite zur POWELL Linse kollimiert die divergierende Laserlinie und sorgt für einen annährend parallelen Strahlenverlauf entlang der optischen Achse, die Höhe des Lichtschnitts nach der Kollimierung beträgt ca. 8.5cm. Vor dem Gefäß ist eine weitere Zylinderlinse der Brennweite (f = 100.00 mm, N-BK7) flexibel positioniert, welche den Strahlenverlauf in einen zulaufenden Lichtschnitt überführt, welche den Intensitätsabfall durch das Lambert-Beer'sche Absorptionsgesetz innerhalb des Gefäßes vermindert. Die nutzbare Höhe des Lichtschnitts im Bereich des Gefäßes durch die Fokussierung liegt bei etwa 2cm.

Für eine Umformung eines Laserstrahls in eine divergierende Laserlinie kann alternativ zur POWELL Linse auch ein geeignet angeordneter rotierender Polygonspiegel oder ein Galvoscanner verwendet werden. Prinzipiell ist es auch möglich, anstelle des Lasers eine Lichtquelle zu verwenden, die auf einer LED (Lichtemittierende Diode) oder einer thermischen Lichtquelle basiert.

Als Bildprojektor oder Projektor 7 kann ein DMD (Digital Micromirror Device der Firma Texas Instruments) basierender Projektor (Fabrikat: optoma UHD35) mit einer Auflösung von 3840 x 2160 Pixeln und 3600 Ansi Lumen verwendet werden. Die Projektionsoptik wurde ersetzt durch ein Projektionsobjektiv mit 90mm Brennweite (Braun Ultralit 2,4 / 90, Braun Photo Technik GmbH, Deutschland), welches ein scharfes Abbild innerhalb des Gefäßes generiert. Zur Wellenlängenselektion dient ein vorgesetztes Filterglas (GG475, Schott AG, Deutschland). Die Ansteuerung des Projektors 7 erfolgt über ein HDMI-Interface.

Als Aufnahmegefäß 1 kann zum Beispiel eine Großküvette aus optischem Glas (Innenmaße: 30mm x 30mm x 30mm, Hellma GmbH & Co. KG, DE) mit transparenten, planen Eintrittsfenstern verwendet werden.

In den Fig. 3a bis 3c zeigen schematische Darstellungen für eine Anordnung mit Aufnahmegefäß 1, in welchem das Arbeitsvolumen 2 mit dem hierin aufgenommenen Ausgangsmaterial 3 zum optischen Bearbeiten angeordnet ist. Es ist eine Anordnung von Lichtquellen 30 vorgesehen. Die Lichtquellen 30 (Lichtgeneratoren für Erzeugung des Lichtschnitts 31), die dem Einstrahlen des Lichts erster Wellenlänge (Lichtschnitt) dienen, sind benachbart zum Aufnahmegefäß 1 angeordnet, insbesondere auf gegenüberliegenden Seiten. Bei der Ausgestaltung nach Fig. 3c ist die Anordnung von Lichtquellen 30 um das Aufnahmegefäß 1 mit dem Arbeitsvolumen 2 drehbar angeordnet, was mittels Pfeilen 32 schematisch gezeigt ist.

Zwei oder mehrere der Lichtquellen 30 können benutzt werden, die von unterschiedlichen, insbesondere gegenüber liegenden oder nicht gegenüber liegenden, Seiten des Aufnahmegefäßes 1 in das Arbeitsvolumen 2 einstrahlen und mittels Überlagerung von Teilstrahlen den Lichtschnitt 31 generieren, also das jeweilige Schichtteilvolumen bestrahlen, in welche dann die Projektion 33 hinein erfolgt.

Der Lichtschnitt 31 für das jeweils gerade bestrahlte Schichtteilvolumen ergibt sich durch die Aufsummierung der Einzeleinstrahlungen von den Lichtquellen 30 unter verschiedenen Einstrahlwinkeln. Um eine homogene Intensitätsverteilung des Lichtschnitts 31 mittels Überlagerung des Lichts von zwei oder mehrere Lichtquellen zu erzielen, können die Einzeleinstrahlungen anstelle einer homogenen Intensitätsverteilung eine gaußförmige oder eine angepasste inhomogene Intensitätsverteilung aufweisen.

Bei einer weiteren Ausgestaltung nach Fig. 4 werden zwei oder mehrere Lichtschnitte 40 (Schichtteilvolumen) generiert, die unter einem Winkel in das Aufnahmegefäß 1 einfallen. Ein oder mehrere Projektionen 41 von Projektoren (zur Vereinfachung nicht gezeigt in Fig. 4) erzeugen in einer schrägen Fokusebene scharfe Abbildungen innerhalb der einzelnen Lichtschnitte 40. Hierdurch kann eine Prozessierung mehrerer Schichtteilvolumen gleichzeitig erfolgen.

Bei den Ausgestaltungen nach den Fig. 3a bis 3c, 4 kann das Aufnahmegefäß 1 durch den Lichtschnitt 31, 40 bewegt werden, oder der Lichtschnitt 31, 40 bei fester Position des Aufnahmegefäßes 1 verschoben werden, um das Arbeitsvolumen 2 kontinuierlich und schließlich vollständig zu prozessieren, indem dessen Schichtteilvolumen nacheinander optisch bearbeitet werden.

Fig.5 zeigt schematische Darstellungen für eine weitere Anordnung mit Aufnahmegefäß 1. Sowohl ein Lichtschnitt 50 der ersten Wellenlänge als auch ein Projektorbild 51 der zweiten Wellenlänge werden mittels eines Projektionsgeräts 52 erzeugt und dann auf das Aufnahmegefäß 1 eingestrahlt. Eine Anordnung von Lichtreflexionselementen 53, insbesondere Spiegeln, sorgt für die Abspaltung des Lichtschnitts 50 aus einer Strahlachse des Projektionsgerätes 52 und die Einstrahlung des Lichtschnitts 50 quer zum Projektionsbild 51 in das Aufnahmegefäß 1.

In einer Ausführungsform kann das Aufnahmegefäß 1 bewegt werden, um den Lichtstrahl durch das Arbeitsvolumen 2 zu bewegen. Das Projektorbild 51 wird mittels einer variablen Fokusoptik innerhalb des Lichtschnitts 50 scharf abgebildet. In einer weiteren Ausgestaltung bleibt das Aufnahmegefäß 1 unbewegt, und der Lichtschnitt 50 wird bewegt, indem ein Displayelement des Projektionsgerätes 52, zum Beispiel eine LCD- oder ein DMD-Display, aufgeteilt wird in einen zentralen Bereich 54, der das Projektorbild 51 erzeugt, und in zwei seitlich davon gelagerte Bereiche 55, die den Lichtschnitt 50 erzeugen. Hierzu werden Pixel des Displayelements mittels Steuerung der optischen Transmission oder Reflexion des Displayelements so angesteuert, um eine seitliche Verschiebung des Lichtschnitts 50 zu realisieren. Hierbei werden ein zentraler Bereich des Displayelements mit der ersten Wellenlänge und äußere Bereiche des Displayelements mit der zweiten Wellenlänge bestrahlt.

Fig. 6 zeigt eine schematische Darstellung einer weiteren Anordnung zum optischen Bearbeiten des Ausgangsmaterials 3 im Aufnahmegefäß 1. Fig. 7 zeigt eine schematische Teildarstellung der Anordnung aus Fig. 6.

Ein Lichtschnitt 60 wird in einer horizontalen Ebene 61 mittels eines Laserstrahls 62 generiert, der von oben in ein für den Laserstrahl 62 optisch transparentes Tauchrohr 63 eintritt und mittels eines motorgetriebenen, rotierenden Spiegels 64 in das Aufnahmegefäß 1 mit dem Ausgangsmaterial 3 umgelenkt wird. Mittels Rotation entsteht der Lichtschnitt 60 der ersten Wellenlänge. Durch einen Boden 65 des Aufnahmegefäßes 1 wird Projektorlicht 66 zweiter Wellenlänge eingestrahlt, um ein Projektorbild 67 in die horizontalen Ebene 61 des Lichtschnitts 60 scharf abzubilden.

Das Tauchrohr 63 ist nach unten geschlossen. Der motorgetriebene, rotierende Spiegel 64 sowie der Laserstrahlweg 62 sind vom Ausgangsmaterial 3 im Aufnahmegefäß 1 getrennt. Für die Prozessierung des Ausgangsmaterials 3 wird das Tauchrohr 63 hoch oder runter bewegt, wodurch die horizontale Ebene des Lichtschnitts 60 nach oben oder nach unten verschoben wird.

Fig. 8 zeigt eine schematische Darstellung einer weiteren Anordnung zum optischen Bearbeiten des Ausgangsmaterials 3 im Aufnahmegefäß 1 in einer Draufsicht (Fig. 8a) und einer Seitenansicht (Fig. 8b). Der Laserstrahl ausgehend vom Laser 80 wird durch einen Galvanometerscanner 81 durch eine Linse 82 auf einen Spiegelring 83 gelenkt, wodurch ein kreisförmiger Lichtschnitt der ersten Wellenlänge entsteht. Das Licht zweiter Wellenlänge wird durch eine Projektoreinheit 84 bereitgestellt und mit Hilfe eines Spiegels 85 orthogonal zum Lichtschnitt in das Aufnahmegefäß 1

gelenkt.

Nachfolgend werden weitere Aspekte des Verfahrens zum optischen Bearbeiten des Ausgangsmaterials 3 erläutert.

Die lokale Polymerisation des Ausgangsmaterials 3, vermittelt über die Lichtanregung der Fotoinitiatoren, erfolgt durch ein sequentielles Verfahren, bei dem eine Prozessierung Schicht für Schicht im freien Volumen innerhalb des Aufnahmegefäßes 1 erfolgt. Zunächst ist hierfür eine Zerlegung des gewünschten, dreidimensionalen Objektes in einzelne Schichtbilder mit definiertem Rasterabstand vorgesehen (Slicing). Mittels Überlagerung des Lichtschnitts von der Lichtquelle 5 und des jeweiligen Schnittbildes des Projektors 7 erfolgt die Anregung der Dual-Color-Fotoinitiatoren vom Grundzustand A in die aktive Form C, welche die lokale Polymerisation des Ausgangsmaterials 3 initiiert. Nach Ablauf der Belichtungssequenz für die aktuelle Schicht (Schichtteilvolumen) wird durch Bewegung des Aufnahmegefäßes 1 und / oder des Lichtschnitts und des Projektors 7 gemeinsam die Lichtanregung definiert verschoben und die Belichtung einer benachbarten oder beliebigen anderen Schicht (anderes Schichtteilvolumen) vorgenommen. Die Translation der Projektionsanordnung oder des Aufnahmegefäßes 1, die zum Beispiel mittels geeigneter Schrittmotoren realisiert werden kann, kann gegebenenfalls unterhalb des Taillen-Durchmessers des Lichtschnitts liegen, um eine Erhöhung der Auflösung in Bewegungsrichtung zu erzeugen.

Für den zeitlichen Ablauf einer Belichtungssequenz für jedes Schichtteilvolumen gibt es verschiedene Optionen, die je nach Ausgangsmaterial und den Eigenschaften der verwendeten Dual-Color-Fotoinitiatoren zur Anwendung kommen:

Variante (1): Gleichzeitiges Einschalten beider Lichtquellen ($\lambda_1$, $\lambda_2$ und gegebenenfalls $\lambda_3$) mit definierten, gegebenenfalls unterschiedlichen Intensitäten für eine vorgegebene Belichtungszeitspanne. Nach dem gleichzeitigen Abschalten beginnt die Translation des Systems zur nächsten Schicht.

Variante (2): Die erste Lichtquelle 5 (Lichtschnittgenerator) und der Projektor 7 werden zeitlich gepulst betrieben. Die Anzahl, Dauer und Intensität der Impulse sowie der Zeitversatz zwischen den Startflanken beider Impulse können im Rahmen einer definierten Belichtungszeit pro Schichtteilvolumen frei eingestellt werden. Bei der Verwendung mehrerer Impulse innerhalb der Prozessierung eines Schichtteilvolumens können jedem Impuls ein unterschiedliches Bild des Projektors 7 zugeordnet werden. Nach der Belichtungszeit erfolgt die Translation zum nächsten Schichtteilvolumen.

Variante (3): Die erste Lichtquelle 5 (Lichtschnittgenerator) bleibt immer eingeschaltet, während das Projektorbild nach einer definierten Belichtungszeit mit der Translation der Anordnung zur nächsten Schicht, umgeschaltet wird.

Variante (4): Physikalisch mögliche Kombinationen der Varianten (1), (2) und (3).

Das hier vorgestellte volumetrische Verfahren generiert das gewünschte räumliche Objekt durch Polymerisation des Ausgangsmaterials 3 innerhalb des Arbeitsvolumens 2 schichtweise, jedoch lässt es den grundlegenden Aufbau des Ausgangsmaterials 3 unverändert. Dies ist ein Vorteil gegenüber Verfahren, die das Ausgangsmaterial nur in voneinander getrennten Schichten prozessieren können. Durch die schichtweise Belichtung ist das Verfahren prinzipiell schneller als die Polymerisation des Ausgangsmaterials Punkt für Punkt.

Aufgrund der Aufweitung des Lichtschnittes lässt sich ein größerer Bereich des Arbeitsvolumens 2 gleichzeitig und damit schneller prozessieren, was jedoch einen Verlust an Auflösung bedingt.

Die Erzeugung des Lichtschnittes mittels der Lichtquelle 5 bedingt eine Kopplung zwischen dem minimalen Taillendurchmesser und der Divergenz des Strahlbündels, die zu einer Aufweitung des Lichtstrahls zum Rand des Volumens führt. Dadurch lässt sich entweder eine homogene, mittlere Auflösung entlang des Lichtschnittes erzeugen oder eine höhere Auflösung im Bereich der Taille mit stärkerem Abfall zu den Rändern generieren.

Da im zeitlichen Ablauf eine frühere Prozessierung von Schichten ermöglicht ist, die zum Projektor 7 weiter entfernt liegen, wird eine mögliche Beeinflussung der Lichtpropagation des Projektorbildes (Licht zweiter Wellenlänge) durch schon ausgehärtete Schichten vermieden.

Aufgrund der Verschiebung des Lichtschnitts wird jedes Schichtteilvolumen nur einmal prozessiert und erhält damit eine definierte Energiedosis. Dadurch wird die Polymerisierung von ungewünschten Gebieten, bei der Verwendung von nicht-idealen Dual Color Fotoinitiaoren, effektiv vermindert.

Ist die Kinetik der durch die Lichteinstrahlung ausgelösten Reaktionen der Fotoinitiator-Moleküle und des Ausgangsmaterials 3 hinreichend bekannt, erlaubt die gezielte Zeitsteuerung der Lichtimpulse zueinander und geeignete Wahl der Intensitäten beider Wellenlängen eine höhere Diskriminierung zwischen gewünschter und ungewünschter Polymerisation im Arbeitsvolumen 2. Hierdurch lassen sich Artefakte und eine Degradation der Auflösung für nichtideale Dual-Color-Fotoinitiatoren vermindern.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

Einzelne Merkmale der Erfindung sind in den nachfolgenden Aspekten nochmals beispielhaft dargestellt:

1. Verfahren zum Herstellen eines optischen Elements mittels Bearbeitens eines optisch reaktiven Materials, aufweisend:

- Bereitstellen eines Ausgangsmaterial (3), welches optisch reaktiv ist und ein Arbeitsvolumen (2) ausfüllt;
- optisches Bearbeiten des Ausgangsmaterials (3) in dem Arbeitsvolumen (2) mittels Einstrahlen von Licht einer ersten Wellenlänge und Licht einer zweiten Wellenlänge, die von der ersten Wellenlänge verschieden ist, wobei mittels des optischen Bearbeitens wenigstens eine Materialeigenschaft des Ausgangsmaterials verändert wird und wobei das optische Bearbeiten Folgendes umfasst:
- Bestrahlen eines ersten Schichtteilvolumens des mit dem Ausgangsmaterial (3) ausgefüllten Arbeitsvolumens (2) mit dem Licht erster Wellenlänge;
- Bestrahlen des ersten Schichtteilvolumens des Arbeitsvolumens (2) mit dem Licht zweiter Wellenlänge, wobei das Licht zweiter Wellenlänge hierbei in das Arbeitsvolumen (2) projiziert wird;
- Bestrahlen eines zweiten Schichtteilvolumens des mit dem Ausgangsmaterial (3) ausgefüllten Arbeitsvolumens (2), welches von dem ersten Schichtteilvolumen verschieden ist, mit dem Licht erster Wellenlänge;
- Bestrahlen des zweiten Schichtteilvolumens des Arbeitsvolumens (2) mit dem Licht zweiter Wellenlänge, wobei das Licht zweiter Wellenlänge hierbei in das Arbeitsvolumen (2) projiziert wird; und
- Wiederholen der vorangehenden Schritte zur schichtweisen optischen Bearbeitung des Ausgangsmaterials (3) in dem Arbeitsvolumen (2) bis ein zu bearbeitendes Volumen des Ausgangs-materials (3), welches das Arbeitsvolumen (2) ganz oder teilweise erfasst, optisch bearbeitet ist, und hierbei aus dem Ausgangsmaterial (3) ein Grünling gebildet ist; und
- Weiterverarbeiten des Grünlings, sodass aus dem Grünling ein optisches Element zumindest teilweise, insbesondere vollständig, gebildet ist.

2. Verfahren nach Aspekt 1, wobei das Weiterverarbeiten des Grünlings mindestens einen der folgenden Schritte aufweist:

- Entnehmen des Grünlings aus dem Ausgangsmaterial;
- Behandeln des Grünlings mit einem Lösungsmittel und/oder einem Monomer;
- Trocknen des gewaschenen Grünlings; und
- photochemisches und/oder thermisches Nachhärten des Grünlings.

3. Verfahren nach Aspekt 2, wobei das Lösungsmittel und/oder das Monomer einen thermischen Initiator und/oder einen weiteren Fotoinitiator aufweist, der bevorzugt nur auf eine Wellenlänge reagiert.

4. Verfahren nach mindestens einem der vorangehenden Aspekte, wobei das Weiterverarbeiten des Grünlings mindestens einen der folgenden Schritte aufweist: Tempern des Grünlings, Schleifen des Grünlings, Polieren des Grünlings und Beschichten des Grünlings.

5. Verfahren nach mindestens einem der vorangehenden Aspekte, wobei das Licht erster Wellen-länge und das Licht zweiter Wellenlänge zumindest für einen zeitlichen Überlappungszeitraum gleichzeitig gemeinsam in das erste oder das zweite Schichtteilvolumen eingestrahlt werden, wo-bei bevorzugt auf das Ausgangsmaterial (3) im Arbeitsvolumen (2) das Licht erster Wellenlänge entlang einer ersten Einstrahlrichtung und das Licht zweiter Wellenlänge entlang einer zweiten Einstrahlrichtung eingestrahlt werden, die quer zur ersten Einstrahlrichtung verläuft.

6. Verfahren nach mindestens einem der vorangehenden Aspekte, wobei das mittels des optischen Bearbeitens in dem Ausgangsmaterial (3) eine polychrome Mehrphotonen-Polymerisation ausgelöst wird, welche die Veränderung der wenigstens einen Materialeigenschaft des Ausgangsmaterials (3) bewirkt.

7. Verfahren nach mindestens einem der vorangehenden Aspekte, wobei das Ausgangsmaterial ein transparentes organisches Polymer und/oder ein anorganisch/organisches Polymerkomposit aufweist, welches bevorzugt mittels des optischen Bearbeitens aushärtet.

8. Verfahren nach mindestens einem der vorangehenden Aspekte, wobei das Ausgangsmaterial eine Viskosität von $10^2$ mPa·s bis 107 mPa·s und/oder eine Fließgrenze von wenigstens 0,1 Pa aufweist.

9. Verfahren nach mindestens einem der vorangehenden Aspekte, wobei das Bilden des optischen Elements ein Bilden mindestens eines von einer optischen Linse, einer Linse mit Abbildungsqualität, einer Intraokularlinse, einem Linsenarray, einem Diffusor, einem Prisma, einem optischen Gitter, einem diffraktiven optischen Element und einem Lichtwellenleiter umfasst.

10. Verfahren nach mindestens einem der vorangehenden Aspekte, wobei beim Ausgangsmate-rial (3) mindestens ein Funktionselement bereitgestellt ist und das optische Element zumindest teilweise an das mindestens eine Funktionselement anliegend gebildet ist.

11. Verfahren nach Aspekt 10, wobei das mindestens eine Funktionselement mindestens eines von folgenden Elementen aufweist: ein Aktorelement, ein Sensorelement, ein Energiequellenelement, ein Display, eine Linsenhaltung und mindestens ein vorgefertigtes weiteres optisches Element.

12. Verfahren nach Aspekt 10 oder **11,** wobei das mindestens eine Funktionselement einen Brechungsindex aufweist, der von einem Ausgangsmaterial-Brechungsindex um höchstens 3 % abweicht.

13. Verfahren nach mindestens einem der Aspekte 10 bis 12, wobei beim optischen Bearbeiten das Ausgangsmaterial um das mindestens eine Funktionselement mit Licht erster Wellenlänge und Licht zweiter Wellenlänge von mindestens zwei Seiten bestrahlt wird.

14. Verfahren nach mindestens einem der vorangehenden Aspekte, wobei das Bestrahlen mit Licht erster Wellenlänge und / oder Licht zweiter Wellenlänge mittels mehrerer Lichtquellen (5) erfolgt, sodass das Licht in Schichtteilvolumina eingestrahlt wird, welche zumindest teilweise überlagert sind.

15. Verfahren nach mindestens einem der vorangehenden Aspekte, wobei bestimmt wird, ob das erste oder das zweite Schichtteilvolumen mit der ersten Wellenlänge bestrahlt wird, und eine Projektionseinrichtung (7) zum Projizieren des Lichts zweiter Wellenlänge in das Arbeitsvolumen in Abhängigkeit hiervon angesteuert wird, das Licht zweiter Wellenlänge in das erste oder in das zweite Schichtteilvolumen, insbesondere in einer bestimmten Intensitätsverteilung, zu projizieren.

16. Verfahren nach mindestens einem der vorangehenden Aspekte, wobei das Licht erster Wellenlänge und das Licht zweiter Wellenlänge zumindest für einen zeitlichen Überlappungszeitraum gleichzeitig gemeinsam in das erste oder das zweite Schichtteilvolumen eingestrahlt werden.

17. Verfahren nach mindestens einem der vorangehenden Aspekte, wobei das erste und das zweite Schichtteilvolumen in dem Arbeitsvolumen (2) benachbarte Schichtteilvolumen des Ausgangsmaterials (3) bilden, wobei optional das erste und das zweite Schichtteilvolumen einer der folgenden Konfigurationen von Teilvolumen entsprechend gebildet werden: randseitig überlappend, randseitig aneinanderstoßend und randseitig beabstandet zueinander.

18. Verfahren nach mindestens einem der vorangehenden Aspekte, wobei das Licht erster Wellenlänge mittels mehrerer Lichtgeneratoren für die Erzeugung eines Lichtschnitts eingestrahlt wird, die von unterschiedlichen Seiten eines das Arbeitsvolumen aufweisenden Arbeitsgefäßes in das Arbeitsvolumen einstrahlen und mittels Überlagerung von Teilstrahlen den Lichtschnitt generieren, in welchen die Projektion erfolgt.

19. Verfahren nach mindestens einem der vorhergehenden Aspekte, wobei das Licht erster Wellenlänge mittels vier Lichtgeneratoren für die Erzeugung eines Lichtschnitts eingestrahlt wird, die, insbesondere paarweise gegenüber liegend, von unterschiedlichen Seiten eines das Arbeitsvolumen aufweisenden Arbeitsgefäßes in das Arbeitsvolumen einstrahlen und mittels Überlagerung von Teilstrahlen den Lichtschnitt generieren, in welchen die Projektion erfolgt.

20. Verfahren nach mindestens einem der vorhergehenden Aspekte, wobei wenigstens zwei unterschiedlich ausgerichtete Lichtschnitte erzeugt werden, insbesondere wenigstens zwei unter-schiedlich ausgerichtete Lichtschnitte, welche in dem Arbeitsvolumen überlappen.

21. Verfahren nach mindestens einem der vorhergehenden Aspekte, wobei zur Erzeugung eines Lichtschnitts in dem Arbeitsvolumen das Licht der ersten Wellenlänge mit einer Drehbewegung in das Arbeitsvolumen eingestrahlt wird.

22. Verfahren nach mindestens einem der vorangehenden Aspekte, wobei das optische Bearbeiten des Ausgangsmaterials (3) mit Hilfe eines Lichtdetektors (8a; 8b), insbesondere einer Kamera oder einem Fotodetektor, beobachtet wird.

23. Verfahren nach mindestens einem der vorangehenden Aspekte, wobei mittels des optischen Bearbeitens in dem Ausgangsmaterial (3) eine polychrome Mehrphotonen-Polymerisation ausgelöst wird, welche die Veränderung der wenigstens einen Materialeigenschaft des Ausgangsmaterials (3) bewirkt.

24. Verfahren nach mindestens einem der vorangehenden Aspekte, wobei das Licht erster Wellenlänge zunächst in dem ersten Schichteilvolumen und dann in dem zweiten Schichtteilvolumen mit einer in Bezug auf mindestens einen der folgenden Lichtparameter im Wesentlichen homoge-nen oder nicht-homogenen Verteilung eingestrahlt wird: Lichtintensität und Lichtfarbe.

25. Verfahren nach mindestens einem der vorangehenden Aspekte, wobei ein Lichtschnitt in dem Arbeitsvolumen (2) erzeugt wird, insbesondere ein Lichtschnitt des Lichts der ersten Wellenlänge, und während der Bewegung des Lichtschnitts durch das Arbeitsvolumen (2) kontinuierlich eine Fokuskorrektur, insbesondere eine Fokuskorrektur des Lichts der zweiten Wellenlänge, erfolgt.

26. Verfahren nach mindestens einem der vorangehenden Aspekte, wobei das Ausgangsmaterial vor dem Bestrahlen wenigstens einem Vorgang zum Entfernen von Verunreinigungen, insbesondere partikulären Verunreinigungen, unterzogen wird, wobei der Vorgang insbesondere ein Filtrieren des Ausgangsmaterials vermittels einer Filtereinrichtung umfasst.

27. Verfahren nach mindestens einem der vorangehenden Aspekte, wobei das Weiterverarbeiten des Grünlings, sodass aus dem Grünling ein optisches Element zumindest teilweise, insbesondere vollständig, gebildet ist, insbesondere das Nachhärten des Grünlings, unter einer Schutzgas-atmosphäre, insbesondere einer Argon-, Kohlenstoffdioxid- oder Stickstoffatmosphäre, durchgeführt wird.

28. Verfahren nach mindestens einem der vorangehenden Aspekte, wobei das Weiterverarbeiten des Grünlings ein photochemisches Nachhärten des Grünlings vermittels wenigstens eines zusätzlichen Photoinitiators umfasst, wobei der zusätzliche Photoinitiator konfiguriert ist, eine ein photochemisches Nachhärten des Grünlings bedingende photochemische Reaktion bei einer von der ersten und der zweiten Wellenlänge verschiedenen Wellenlänge auszuführen.

29. Verfahren nach Aspekt 28, wobei der zusätzliche Photoinitiator ein alpha-Diketon, insbesondere Campherchinon, ist oder wenigstens ein alpha-Diketon, insbesondere Campherchinon, enthält.

30. Verfahren nach Aspekt 28 oder 29, wobei der zusätzliche Photoinitiator mit einer Wellen-länge bestrahlt wird, die zwischen der ersten und der zweiten Wellenlänge liegt.

31. Verfahren nach mindestens einem der vorangehenden Aspekte, wobei das Weiterverarbeiten des Grünlings ein Behandeln des Grünlings mit einem Lösungsmittel und/oder einem Monomer, insbesondere zum Waschen des Grünlings, beinhaltet, wobei ein Lösungsmittel und/oder ein Monomer mit einer Molmasse größer oder gleich 200 g/mol verwendet wird.

32. Verfahren nach mindestens einem der vorangehenden Aspekte, wobei das Weiterverarbeiten des Grünlings ein Behandeln des Grünlings mit einem Lösungsmittel und/oder einem Monomer, insbesondere zum Waschen des Grünlings, beinhaltet, wobei ein leicht flüchtiges Lösungsmittel und/oder ein leicht flüchtiges Monomer verwendet wird.

33. Verfahren nach mindestens einem der vorangehenden Aspekte, wobei ein Ausgangsmaterial verwendet wird, welches frei von anorganischen und/oder organischen Partikeln, insbesondere frei von anorganischen und/oder organischen Partikeln mit einem Durchmesser größer 50 $\mu$m, ist.

34. Verfahren nach mindestens einem der vorangehenden Aspekte, wobei ein Ausgangsmaterial verwendet wird, welches ausschließlich organische Bestandteile enthält.

35. Verfahren nach mindestens einem der vorangehenden Aspekte, wobei ein Ausgangsmaterial verwendet wird, welches frei von organischen Polymeren ist.

36. Verfahren nach mindestens einem der vorangehenden Aspekte, wobei das herzustellende optische Element eine eine Haupterstreckungsebene aufweisende flächige geometrische Gestalt aufweist, wobei die Aufbaurichtung des optischen Elements winklig, insbesondere rechtwinklig, zu der Haupterstreckungsebene gewählt wird.

37. Verfahren nach mindestens einem der vorangehenden Aspekte, wobei die erste Wellenlänge kleiner gleich 400 nm, insbesondere kleiner gleich 375 nm, und/oder, wobei die zweite Wellenlän-ge größer 400 nm, vorzugsweise größer 500 nm, ist.

38. Verfahren nach mindestens einem der vorangehenden Aspekte, wobei das Ausgangsmaterial und/oder der Photoinitiator und/oder ein Co-Initiator frei von Aminverbindungen ist oder nicht mehr als 10 Gew.-% einer oder mehrerer Aminverbindungen aufweist.

39. Verfahren nach mindestens einem der vorangehenden Aspekte, wobei mindestens eine erste Bestrahlungseinrichtung verwendet wird, die so konfiguriert ist, dass sie Licht der ersten Wellen-länge in das Arbeitsvolumen (2) einstrahlt, um mindestens eine erste Lichtprojektion in dem Ar-beitsvolumen zu erzeugen, wobei die mindestens eine erste Lichtprojektion mehrere Lichtstrahlen umfasst, die das Arbeitsvolumen (2) in mindestens einer Lichtebene durchlaufen; und
mindestens eine Lichtmodulationsvorrichtung verwendet wird, die der mindestens einen ersten Bestrahlungseinrichtung zugeordnet ist, wobei die mindestens eine Lichtmodulationsvorrichtung so konfiguriert ist, dass sie die räumliche Ausdehnungsrichtung von zwei oder mehr Lichtstrahlen der mehreren Strahlen in der mindestens einen Lichtebene so moduliert, dass sich die zwei oder mehr Lichtstrahlen in einer nicht parallelen Anordnung relativ zueinander erstrecken.

40. Verfahren nach Aspekt 39, wobei die mindestens eine Lichtmodulationsvorrichtung ein oder mehrere optische Elemente umfasst, wobei jedes optische Element so konfiguriert ist, dass es die ursprüngliche räumliche Ausdehnungsrichtung eines einfallenden Lichtstrahls ändert, um einen Lichtstrahl zu erzeugen, der eine andere räumliche Ausdehnungsrichtung relativ zur ursprünglichen räumlichen Ausdehnungsrichtung aufweist.

41. Verfahren nach Aspekt 40, wobei die optischen Elemente als optische Linsen, insbesondere Mikrolinsen, und/oder optische Diffusorelemente, insbesondere elliptische Diffusoreleente, ausgebildet sind oder diese umfassen.

42. Verfahren nach mindestens einem der vorangehenden Aspekte, wobei mindestens eine Maßnahme zur Veränderung der optischen Eigenschaften des Grünlings durchgeführt wird, wobei die mindestens eine Maßnahme vorzugsweise die Veränderung der optischen Eigenschaften des Grünlings umfasst, die zu einer Verringerung der Absorptionseigenschaften des Grünlings für mindestens eine Wellenlänge in einem Wellenlängenbereich zwischen 300 nm und 2000 nm, ins-besondere zwischen 350 nm und 900 nm, und/oder zu einer Erhöhung der Durchlässigkeitsei-genschaften des Grünlings für mindestens eine Wellenlänge in dem Wellenlängenbereich zwi-schen 300 nm und 2000 nm, insbesondere in dem Wellenlängenbereich zwischen 350 nm und 900 nm, insbesondere in dem Wellenlängenbereich zwischen 400 nm und 800 nm führt.

43. Verfahren nach Aspekt 42, wobei die mindestens eine Maßnahme eine thermische Beandlung des Grünlings und/oder eine optische Behandlung des Grünlings, insbesondere durch Be-strahlen des Grünlings mit elektromagnetischer Strahlung, und/oder eine chemische Behandlung des Grünlings umfasst.

44. Vorrichtung zum Bearbeiten eines optisch reaktiven Materials zum Herstellen eines opti-schen Elements, mit:

- einem Arbeitsvolumen (2), welches eingerichtet ist, ein Ausgangsmaterial (3) aufzunehmen, welches optisch reaktiv ist und das Arbeitsvolumen (2) teilweise oder ganz ausfüllt;
- einer Beleuchtungseinrichtung, die eingerichtet ist, Licht einer ersten Wellenlänge und Licht einer zweiten Wellenlänge zum Einstrahlen auf das Arbeitsvolumen (2) mit dem Ausgangsmaterial (3) bereitzustellen; und

wobei die Beleuchtungseinrichtung eingerichtet ist, das Ausgangsmaterial (3) in dem Arbeitsvolumen (2) wie folgt optisch zu bearbeiten:

- Bestrahlen eines ersten Schichtteilvolumens des mit dem Ausgangsmaterial (3) teilweise oder ganz ausgefüllten Arbeitsvolumens (2) mit dem Licht erster Wellenlänge;
- Bestrahlen des ersten Schichtteilvolumens des Arbeitsvolumens (2) mit dem Licht zweiter Wellenlänge,
- Bestrahlen eines zweiten Schichtteilvolumens des Arbeitsvolumens (2), welches von dem ersten Schichtteilvolumen verschieden ist, mit dem Licht erster Wellenlänge;
- Bestrahlen des zweiten Schichtteilvolumens des Arbeitsvolumens (2) mit dem Licht zweiter Wellenlänge; und
- Wiederholen der vorangehenden Schritte zur schichtweisen optischen Bearbeitung des Ausgangsmaterials (3) in dem Arbeitsvolumen (2) bis ein zu bearbeitendes Volumen des Ausgangs-materials (3), welches das Arbeitsvolumen (2) ganz oder teilweise erfasst, optisch bearbeitet ist.

45. Vorrichtung nach Aspekt 44, wobei die Beleuchtungseinrichtung wenigstens eines der folgen-den Elemente umfasst: eine Powell-Linse oder einen Polygonspiegel oder einen Galvoscanner, und/oder wobei die Beleuchtungseinrichtung umfasst: einen Laser oder eine LED oder eine thermische Lichtquelle.

46. Vorrichtung nach Aspekt 44 oder 45, wobei die Beleuchtungseinrichtung eingerichtet ist, im zeitlichen Ablauf eine frühere Prozessierung von Schichten zu ermöglichen, die zu einer Quelle des Lichts der zweiten Wellenlänge weiter entfernt liegen.

47. Optisches Element, hergestellt mittels eines Verfahrens nach mindestens einem der vorangehenden Aspekte.

## Patentansprüche

**1.** Verfahren zum Herstellen eines optischen Elements, wobei ein optisch reaktives Material in einem Arbeitsvolumen mehrdimensional oder räumlich optisch mit Licht einer ersten und einer zweiten Wellenlänge bearbeiten wird, derart, dass mittels des Einstrahlens des Lichts erster und zweiter Wellenlänge, wahlweise von Licht einer oder mehrerer weiterer Wellenlängen, wenigstens eine Materialeigenschaft des optisch reaktiven Materials verändert wird und mittels Nachbearbeitens ein optisches Element erhalten wird.

**2.** Verfahren nach Anspruch 1, wobei das Verfahren ein volumetrisches Druckverfahren ist, welches eine kontinuierliche Herstellung isotroper Objekte ermöglicht.

**3.** Verfahren nach Anspruch 1 oder 2, wobei das optische Element zumindest teilweise an mindestens ein Funktionselement anliegend gebildet wird.

**4.** Verfahren nach einem der vorhergehenden Ansprüche, wobei das optische Element um mindestens ein Funktionselement herum gebildet wird, vorzugsweise derart, dass das gebildete optische Element das mindestens eine Funktionselement zumindest teilweise, insbesondere vollständig, umschließt.

**5.** Verfahren nach Anspruch 3 oder 4, wobei das mindestens eine Funktionselement mindestens eines von folgenden Elementen aufweist: ein Aktorelement, ein Sensorelement, ein Energiequellenelement (zur Bereitstellung elektrischer Energie, beispielsweise einer Solarzelle), ein Display, eine Linsenhaltung (Linsenfassung) und ein vorgefertigtes weiteres optisches Element. Ergänzend oder alternativ kann das mindestens eine Funktionselement mindestens ein optisches Bauteil aufweisen, insbesondere mindestens eines von einer oder mehreren Aperturen und optischer Filter.

**6.** Verfahren nach einem der vorhergehenden Ansprüche, wobei das mindestens eine Funktionselement eine Linse, ein Linsenarray, ein optisches Gitter, ein diffraktives optisches Element oder ein Lichtwellenleiter ist, wobei, optional das optische Element an eine Glasfaser und/oder eine Lichtquelle gebunden gebildet wird.

**7.** Vorrichtung zum Bearbeiten eines optisch reaktiven Materials zum Herstellen eines optischen Elements, umfassend:

- ein Arbeitsvolumen, welches eingerichtet ist, ein optisch reaktives Material aufzunehmen, welches optisch reaktiv ist und das Arbeitsvolumen teilweise oder ganz ausfüllt;
- eine Beleuchtungseinrichtung, die eingerichtet ist, Licht einer ersten Wellenlänge und Licht einer zweiten Wellenlänge zum Einstrahlen auf das Arbeitsvolumen mit dem optisch reaktiven Material bereitzustellen,
wobei die Beleuchtungseinrichtung eingerichtet ist, das optisch reaktive Material in dem Arbeitsvolumen wie folgt optisch zu bearbeiten:

Bestrahlen eines ersten Schichtteilvolumens des mit dem optisch reaktiven Material teilweise oder ganz ausgefüllten Arbeitsvolumens mit dem Licht erster Wellenlänge;
Bestrahlen des ersten Schichtteilvolumens des Arbeitsvolumens mit dem Licht zweiter Wellenlänge,
Bestrahlen eines zweiten Schichtteilvolumens des Arbeitsvolumens, welches von dem ersten Schichtteilvolumen verschieden ist, mit dem Licht erster Wellenlänge;
Bestrahlen des zweiten Schichtteilvolumens des Arbeitsvolumens mit dem Licht zweiter Wellenlänge; und
Wiederholen der vorangehenden Schritte zur schichtweisen optischen Bearbeitung des optisch reaktiven Materials in dem Arbeitsvolumen bis ein zu bearbeitendes Volumen des optisch reaktiven Materials, welches das Arbeitsvolumen ganz oder teilweise erfasst, insbesondere unter Ausbildung eines entsprechenden Grünlings optisch bearbeitet ist;

- eine Steuereinrichtung, welche eingerichtet ist, die Beleuchtungseinrichtung zu steuern, sodass die Schichtteilvolumen des optisch reaktiven Materials Schicht für Schicht nacheinander bearbeitet werden, wobei

die Steuereinrichtung eingerichtet ist, die äußere Form von Projektionen des Lichts der zweiten Wellenlänge für unterschiedliche Schichtteilvolumen abhängig von einem herzustellenden optischen Element zu ändern.

**8.** Optisches Element, welches durch ein Verfahren hergestellt ist, welches Folgendes umfasst:

i) Bearbeiten eines optisch reaktiven Materials in einem Arbeitsvolumen mehrdimensional oder räumlich optisch mit Licht einer ersten und einer zweiten Wellenlänge derart, dass mittels des Einstrahlens des Lichts erster und zweiter Wellenlänge, wahlweise von Licht einer oder mehrerer weiterer Wellenlängen, wenigstens eine Materialeigenschaft des optisch reaktiven Materials verändert wird
ii) Nachbearbeiten des in i) erzeugten Objekts zur Ausbildung des optischen Elements.

**9.** Optisches Element nach Anspruch 8, wobei es mittels Laserbearbeitung und / oder mechanischer Bearbeitung bearbeitet ist.

**10.** Optisches Element nach Anspruch 8 oder 9, wobei es zumindest teilweise an wenigstens einem Funktionselement anliegend ausgebildet ist.

**11.** Optisches Element nach einem der Ansprüche 8 bis 10, wobei es wenigstens ein Funktionselement zumindest teilweise umschließend ausgebildet ist.

**12.** Optisch reaktives Material zum Herstellen eines optischen Elements in einem Verfahren, wobei ein optisch reaktives Material in einem Arbeitsvolumen mehrdimensional oder räumlich optisch mit Licht einer ersten und einer zweiten Wellenlänge bearbeiten wird, derart, dass mittels des Einstrahlens des Lichts erster und zweiter Wellenlänge, wahlweise von Licht einer oder mehrerer weiterer Wellenlängen, wenigstens eine Materialeigenschaft des optisch reaktiven Materials verändert wird und mittels Nachbearbeitens ein optisches Element erhalten wird.

**13.** Optisch reaktives Material nach Anspruch 12, wobei es eine oder mehrere der folgenden Komponenten umfassen: Oligomer (beispielsweise Acrylat, Methacrylat, Epoxy, Vinyl, Allyl, Organopolysiloxane, endständig funktionalisierte Polysiloxane), funktionalisierte und nicht-funktionalisierte Nanopartikel, Monomer (beispielsweise Acrylat, Methacrylat, Epoxy, Vinyl, Allyl), Vernetzer (beispielsweise multifunktionale Monomere, multifunktionale Thiole), Dual-Color- Fotoinitiator, Co-Initiator, Inhibitor, Sensitizer, Entschäumer (Defoamer), Additiv für die Nachbearbeitung (beispielsweise zusätzlicher Fotoinitiator und/oder thermischer Initiator), Lösungsmittel, Additiv, insbesondere Additiv für die Rheologiekontrolle (Rheologiemodifier), insbesondere des optisch reaktiven Materials, Additiv zur Herabsetzung der Oberflächenspannung, insbesondere des optisch reaktiven Materials , Additiv zur Beeinflussung der optischen Eigenschaften, beispielsweise zur Anpassung bzw. Erhöhung der Transparenz bzw. Anpassung des Brechungsindex, insbesondere des optisch reaktiven Materials bzw. des optischen Elements.

**14.** Optisch reaktives Material nach Anspruch 12 oder 13, wobei es eine Fließgrenze größer oder gleich 0,1 Pa, insbesondere 0,2 Pa, weiter insbesondere 0,3 Pa, weiter insbesondere 0,4 Pa, weiter insbesondere 0,5 Pa, weiter insbesondere 0,6 Pa, weiter insbesondere 0,75 Pa, weiter insbesondere 1 Pa, aufweist.

**15.** Verwendung eines optisch reaktiven Materials zum Herstellen eines optischen Elements in einem Verfahren, wobei das optische reaktive Material in einem Arbeitsvolumen mehrdimensional oder räumlich optisch mit Licht einer ersten und einer zweiten Wellenlänge bearbeiten wird, derart, dass mittels des Einstrahlens des Lichts erster und zweiter Wellenlänge, wahlweise von Licht einer oder mehrerer weiterer Wellenlängen, wenigstens eine Materialeigenschaft des optisch reaktiven Materials verändert wird und mittels Nachbearbeitens ein optisches Element erhalten wird.

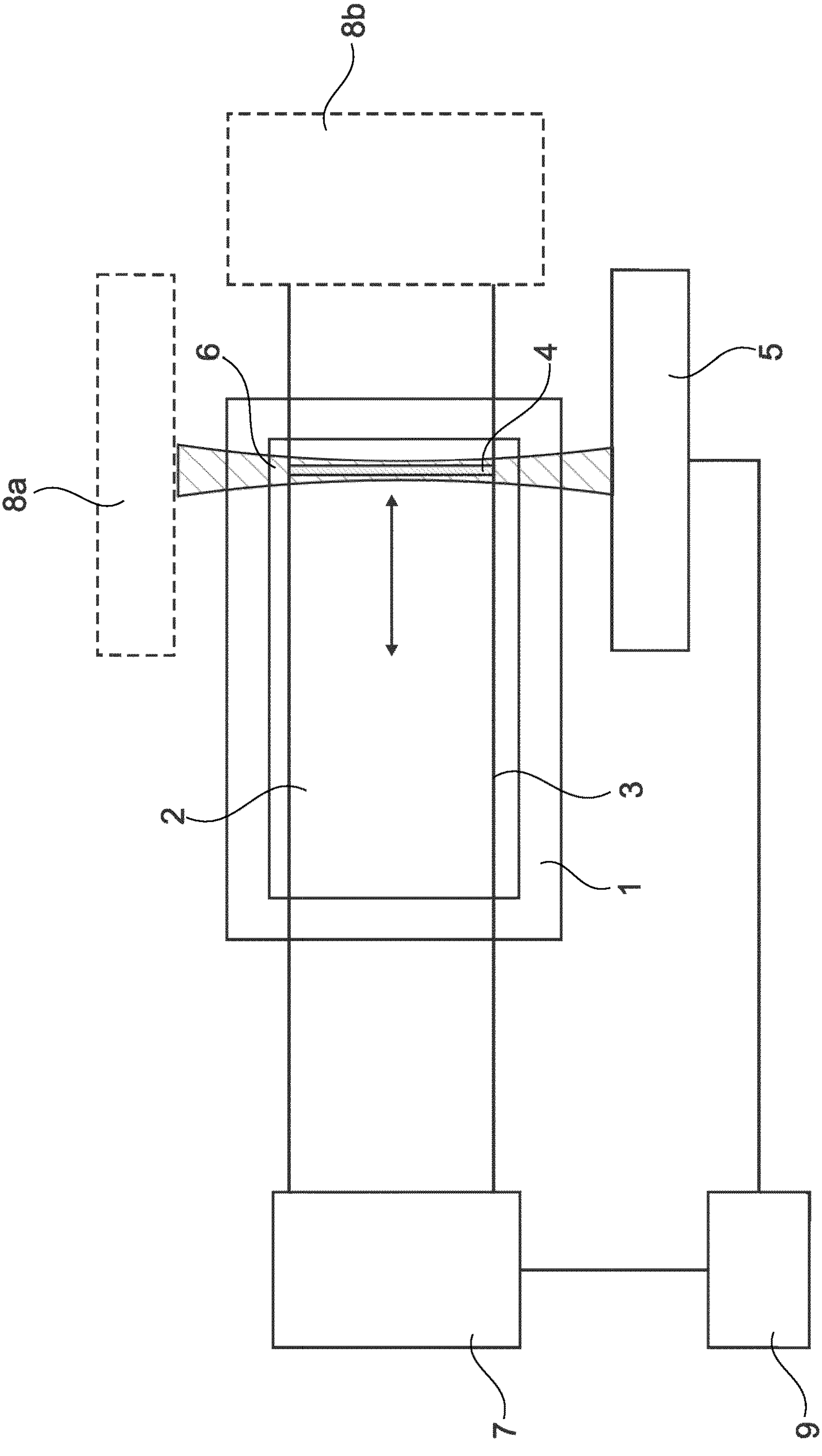


Fig. 1

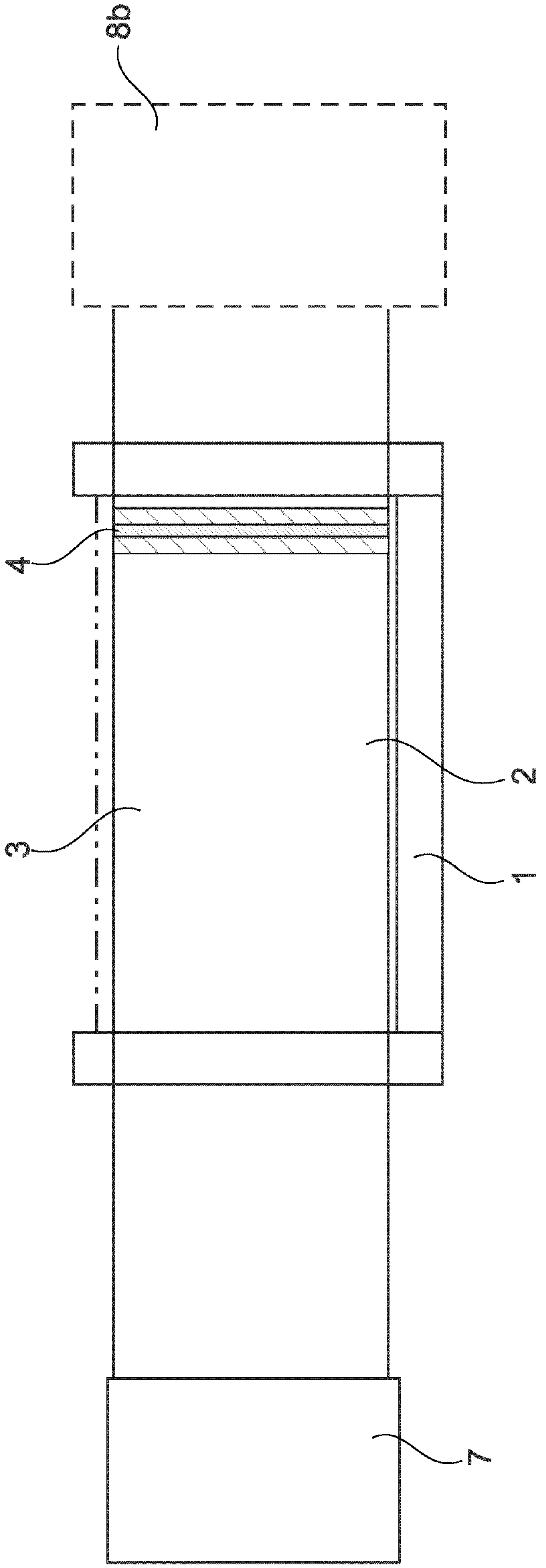


Fig. 2

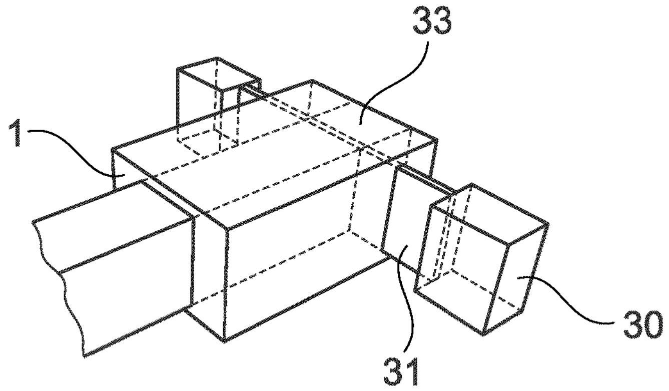


Fig. 3a

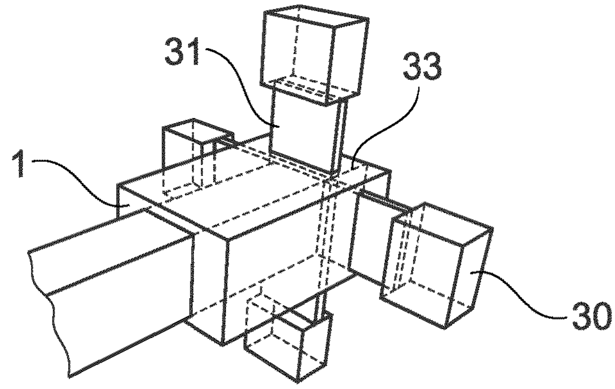


Fig. 3b

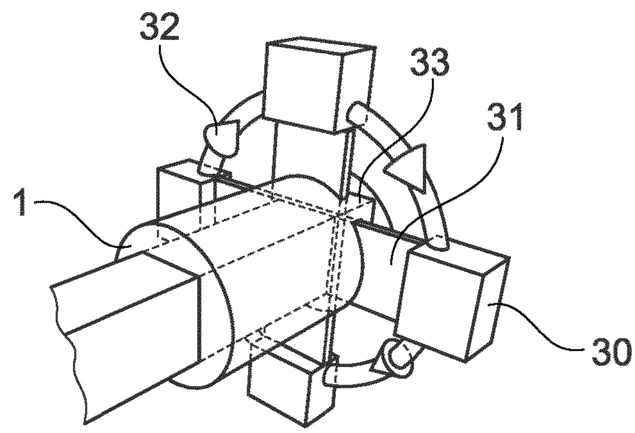


Fig. 3c

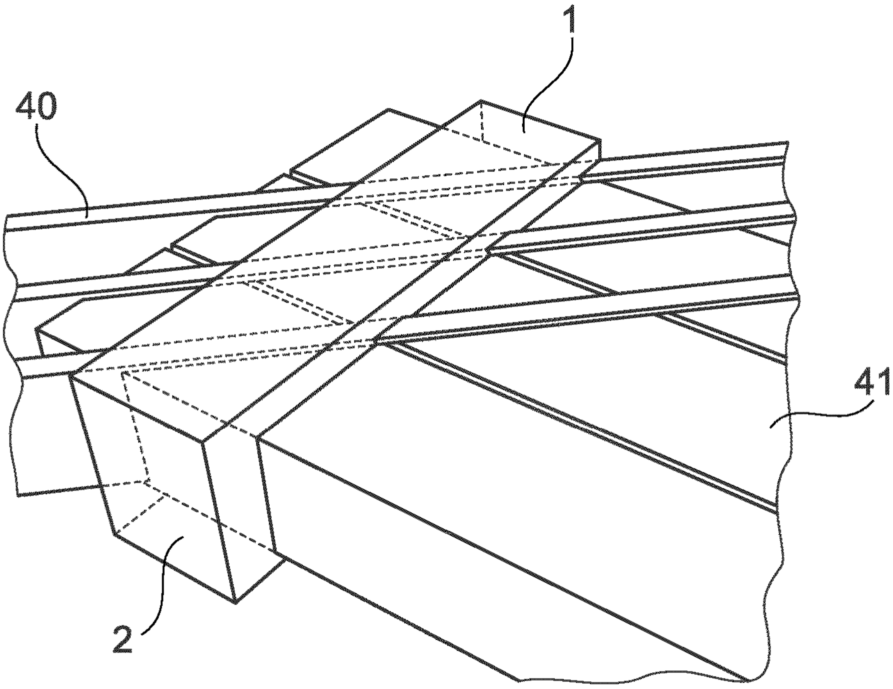


Fig. 4

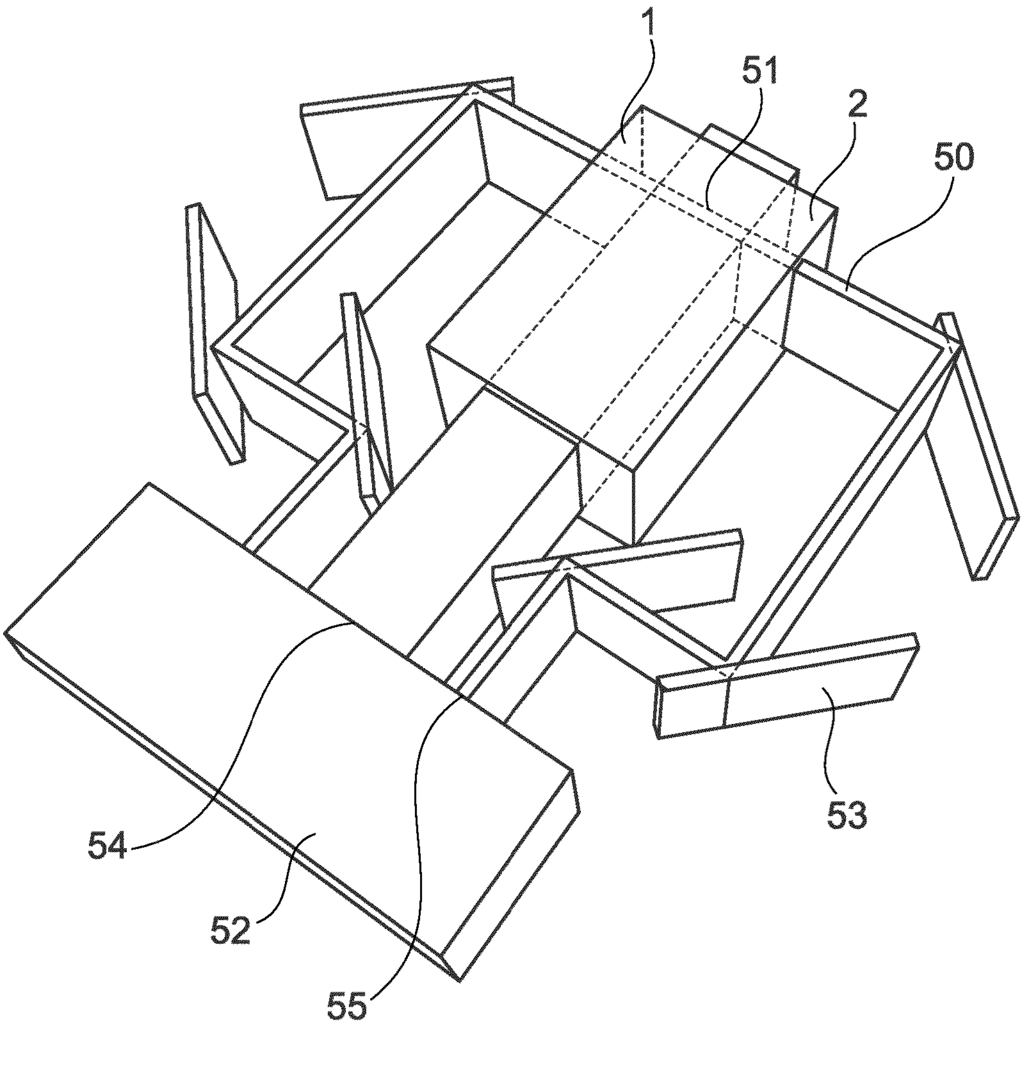


Fig. 5

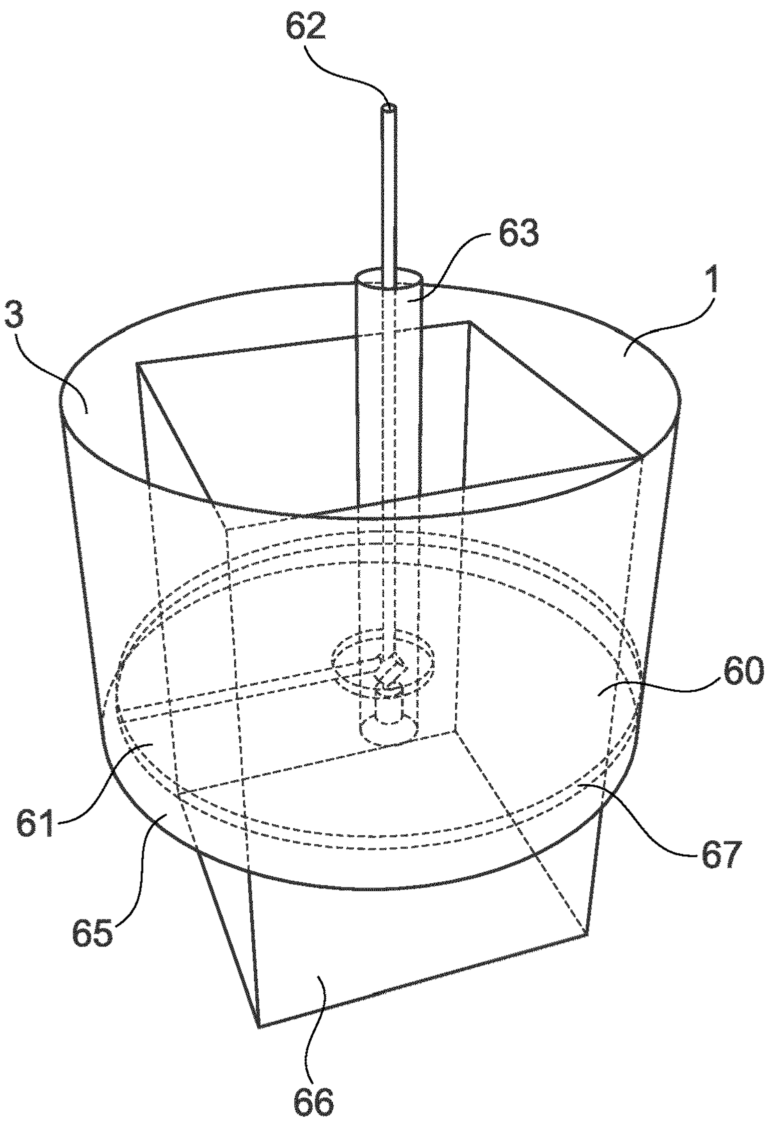


Fig. 6

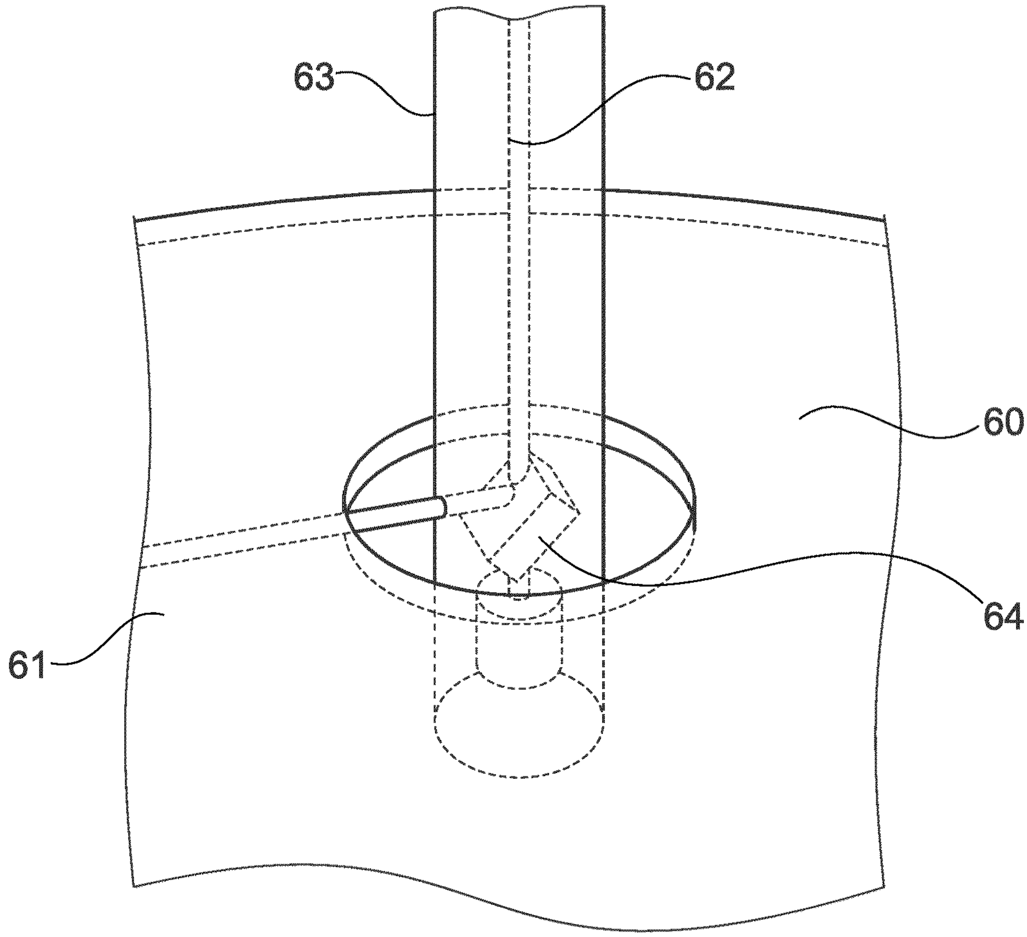


Fig. 7

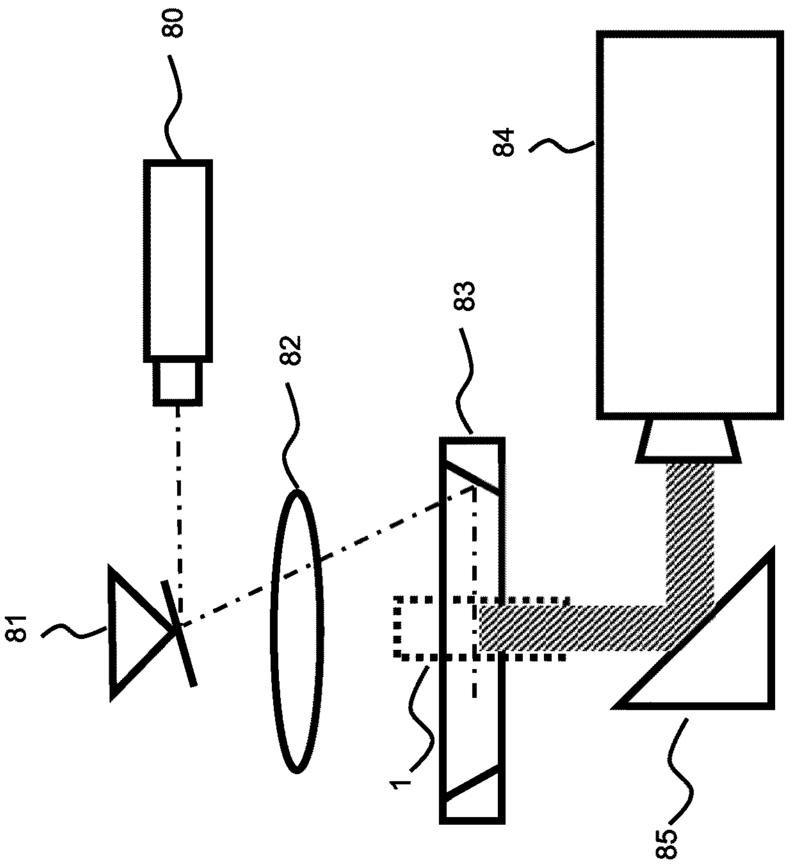


Fig. 8b

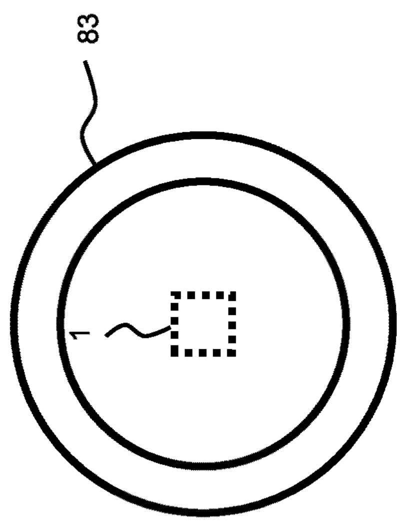


Fig. 8a

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2014108364 A1
- DE 102020108375 B3
- US 4041476 A
- WO 2020245456 A1
- WO 2021089090 A1


### In der Beschreibung aufgeführte Nicht-Patentliteratur


- *CLIP, Nature Materials*, 2006, vol. 5, 365-369
- **FOUASSIER** ; **LALEVÉE**. Photoinitiators. Wiley-VCH, 2021